# EUROPEAN PATENT APPLICATION

(11) **EP 4 391 194 A1**
(43) Date of publication of application: **26.06.2024**
(21) Application number: 22893312.3
(22) Date of filing: 14.11.2022
(51) Int. Cl.: H01M 50/449, H01M 50/446, H01M 10/42, H01M 10/04, H01M 50/533, H01M 50/538, H01M 10/0587, H01M 50/107

(54) **SEPARATOR, ELECTRODE ASSEMBLY, CYLINDRICAL BATTERY CELL, AND BATTERY PACK AND VEHICLE INCLUDING SAME**

(30) Priority: 12.11.2021 KR 20210156090
(71) Applicant: LG Energy Solution, Ltd., Seoul 07335 (KR)
(72) Inventor: WOO, Jae-Young, Daejeon 34122 (KR); KIM, Sue-Jin, Daejeon 34122 (KR); RYU, Duk-Hyun, Daejeon 34122 (KR); LEE, Myung-An, Daejeon 34122 (KR)
(74) Representative: Goddar, Heinz J.
(86) International application number: PCT/KR2022/017917
(87) International publication number: WO 2023/085893

(57) **Abstract**

Disclosed is a separator, comprising a porous polymer substrate; and a porous coating layer on at least one surface of the porous polymer substrate, the porous coating layer comprising a binder polymer and inorganic particles, wherein the separator comprises an insulation coating layer at each of two ends in a Transverse Direction (TD) on an outermost side, and wherein the insulation coating layer comprises fillers for the insulation coating layer and a binder for the insulation coating layer to have a porous structure.

## Description

### TECHNICAL FIELD

The present disclosure relates to a separator, an electrode assembly, a cylindrical battery cell, and a battery pack and a vehicle comprising the same.

The present application claims priority to Korean Patent Application No. 10-2021-0156090 filed on November 12, 2021 in the Republic of Korea, the disclosure of which is incorporated herein by reference.

### BACKGROUND ART

Secondary batteries can be readily applied to a variety of products and have electrical properties such as high energy density, and they are commonly used in not only portable devices but also electric vehicles (EVs) or hybrid electric vehicles (HEVs) that are powered by electricity.

Secondary batteries are gaining attention for their advantages, including remarkably reducing the use of fossil fuels and generating little or no by-products from the use of energy, making it a new eco-friendly and energy efficient source of energy.

The types of secondary batteries being now widely used include lithium ion batteries, lithium polymer batteries, nickel cadmium batteries, nickel hydrogen batteries, nickel zinc batteries or the like. This unit secondary battery cell, i.e., a unit battery cell has an operating voltage of about 2.5V to 4.5V. Accordingly, when a higher output voltage is required, a plurality of battery cells may be connected in series to form a battery pack. Additionally, the battery pack may be fabricated by connecting the plurality of battery cells in parallel according to the charge/discharge capacity required for the battery pack. Accordingly, the number of battery cells included in the battery pack and the electrical connection type may be variously set depending on the required output voltage or charge/discharge capacity.

Meanwhile, cylindrical, prismatic and pouch-type battery cells are known types of unit secondary battery cells. In the case of the cylindrical battery cell, a battery is manufactured by winding a positive electrode and a negative electrode with an insulator or a separator interposed between the positive electrode and the negative electrode to form a jelly-roll type electrode assembly and inserting the electrode assembly into a battery can. Additionally, a strip-type electrode tab may be connected to an uncoated region of each of the positive electrode and the negative electrode, and the electrode tab electrically connects the electrode assembly to an exposed electrode terminal. For reference, a positive electrode terminal is a cap plate of a sealing body that seals up the open portion of the battery can, and a negative electrode terminal is the battery can. However, according to the conventional cylindrical battery cell having the above-described structure, electric current concentration occurs at the strip-type electrode tab coupled to the positive electrode uncoated region and/or the negative electrode uncoated region, causing high resistance and heat generation, resulting in low current collection efficiency.

The resistance and heat issues do not arise in small-size cylindrical secondary batteries having 18650 or 21700 form factor. However, in case that the form factor increases to apply the cylindrical battery cells to electric vehicles, a large amount of heat is generated near the electrode tab during fast charging, causing fires in the cylindrical battery cells.

To solve this problem, suggestion is made to design cylindrical battery cells (so-called tab-less cylindrical battery cells) with improved current collection efficiency, in which the positive electrode uncoated region and the negative electrode uncoated region are disposed on top and bottom of the jelly-roll type electrode assembly, respectively, and a current collector plate is welded to the uncoated region.

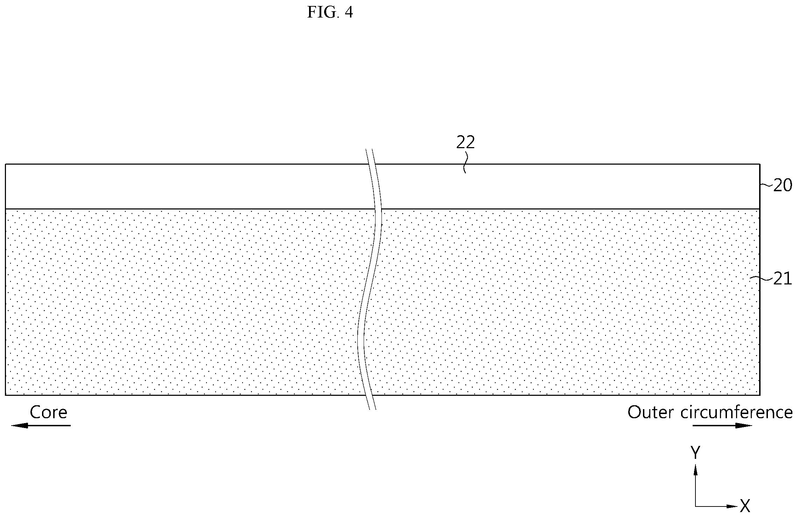

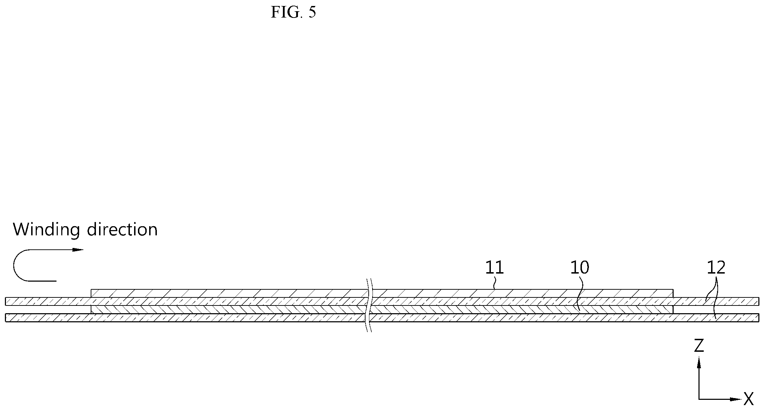

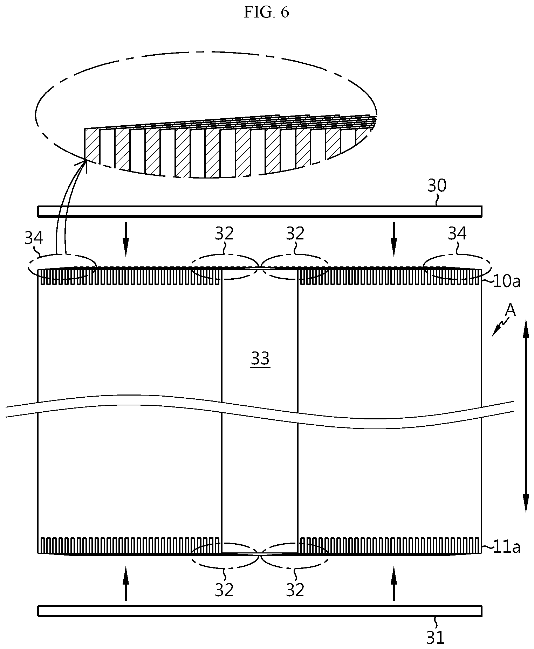

FIGS. 4 to 6 are diagrams showing a process of manufacturing the tab-less cylindrical battery cell. FIG. 4 shows the structure of an electrode plate, FIG. 5 shows a process of winding the electrode plate, and FIG. 6 shows a process of welding the current collector plate to a bend surface of the uncoated region.

Referring to FIGS. 4 to 6, a positive electrode plate 10 and a negative electrode plate 11 has a structure in which a sheet-shaped current collector 20 is coated with an active material 21, and includes the uncoated region 22 on one long side along the winding direction X.

As shown in FIG. 5, the electrode assembly A is manufactured by stacking the positive electrode plate 10 and the negative electrode plate 11 in a sequential order together with two separators 12 and winding in a direction X. In this instance, the uncoated region of the positive electrode plate 10 and the uncoated region of the negative electrode plate 11 are disposed in the opposite directions.

After the winding process, the uncoated region 10a of the positive electrode plate 10 and the uncoated region 11a of the negative electrode plate 11 are bent toward a core. Subsequently, the current collector plates 30, 31 are coupled to the uncoated regions 10a,1 1a by welding, respectively.

The positive electrode uncoated region 10a and the negative electrode uncoated region 11a are not coupled to any electrode tab, the current collector plates 30, 31 are connected to an external electrode terminal, and a current path is formed with a large cross area along the winding axis direction (see the arrow) of the electrode assembly A, thereby reducing the resistance of the battery cell. It is because the resistance is inversely proportional to the cross area of a passage of a flow of current.

In the tab-less cylindrical battery cell, it is necessary to bend the uncoated regions 10a, 11a with the maximum flatness by applying strong pressure to the welding point of the uncoated regions 10a,11a to improve the welding characteristics of the uncoated regions 10a,11a and the current collector plates 30,31.

However, when bending the uncoated regions 10a,11a at the welding point, the uncoated regions 10a,11a may be irregularly distorted and deformed. In this case, the deformed region comes into contact with the electrode plate of the opposite polarity, causing internal short circuits or microcracks to the uncoated regions 10a,11a. Additionally, the uncoated region 32 adjacent to the core of the electrode assembly A bends and blocks all or a considerable part of a cavity 33 in the core of the electrode assembly A. In this case, problems occur in an electrolyte solution injection process. That is, the cavity 33 in the core of the electrode assembly A becomes a passage of injection of the electrolyte solution. However, when the corresponding passage is blocked, it is difficult to inject an electrolyte solution. Additionally, the uncoated region 32 may be torn due to interferences with the uncoated region 32 near the core in the process of inserting an electrolyte solution injector into the cavity 33.

Additionally, when the bent part of the uncoated regions 10a, 11a to which the current collector plates 30, 31 are welded overlaps in multilayer without an empty space (an empty gap), it is possible to obtain a sufficient weld strength and prevent ablation of the separator or active material by laser penetration into the electrode assembly A during laser welding.

Meanwhile, the conventional tab-less cylindrical battery cell has the positive electrode uncoated region 10a over the entire upper part of the electrode assembly A. Accordingly, when inwardly beading the outer circumferential surface on top of the battery can to form a beading portion, a top edge area 34 of the electrode assembly A is pressed by the battery can. This pressing may cause partial deformation of the electrode assembly A, and at this time, the separator 12 may be torn, causing internal short circuits. When short circuits occur in the battery, the battery may generate heat or explode.

The conventional separator includes a coating layer including inorganic particles to reduce thermal shrinkage of a porous polymer substrate, but in this instance, the conventional separator is a one side inorganic coating separator having the coating layer on only one side of the porous polymer substrate. The inorganic coating separator comes into contact with the electrode in the jelly roll (J/R), with the substrate on one side and the inorganic (ceramic) coating layer on the other side, resulting in asymmetrical infiltration characteristics of the electrolyte solution. Due to the asymmetrical infiltration of the electrolyte solution, since it is necessary to design the positive and negative electrodes based on the separator, there is a management problem, and it is necessary to adjust the pressure/vacuum condition upwards in the infiltration of the electrolyte solution into the jelly roll, resulting in higher costs, and in case that an appropriate infiltration process is not applied, the performance degrades.

Additionally, the conventional one side inorganic coating separator has the limited heat resistance characteristics due to the exposed substrate on one side of the separator, and significantly shrinks at high temperature of 130°C or more. As a result, the shrinkage of the separator induced by thermal shock (130°C or more) causes short circuits of the electrode, and abnormal reaction (overcharge, external short circuits) causes the temperature rise in the cell, which increases fire risks.

Additionally, despite the introduction of the inorganic coating layer to the porous polymer substrate of the separator, the thermal shrinkage of the separator still occurs in high temperature condition, causing short circuits between the positive electrode and the negative electrode. Additionally, in the case of the non-notched jelly roll, after assembly, the foil as the current collector is folded to form an internal and external closed structure, which interferences with the movement of the fed electrolyte solution to the electrode in the jelly roll, showing non-uniform infiltration characteristics of the electrolyte solution. This is thought to result from a non-uniform infiltration path of the electrolyte solution. Accordingly, as the infiltration uniformity decreases, a deviation between batteries increases, resulting in an unstable solid electrolyte phase (SEI) layer formation and an increase in resistance non-uniformity.

### DISCLOSURE

### Technical Problem

The present disclosure is designed under the above-described background, and therefore the present disclosure is directed to providing a separator with reduced thermal shrinkage.

The present disclosure is designed under the above-described background, and therefore the present disclosure is directed to providing an electrode assembly with improved electrolyte solution infiltration characteristics.

The present disclosure is further directed to providing an electrode assembly having an improved uncoated region structure to reduce stress applied to the uncoated regions when bending the exposed uncoated regions at two ends of the electrode assembly.

The present disclosure is further directed to providing an electrode assembly in which an electrolyte solution injection passage is not blocked when the uncoated region is bent.

The present disclosure is further directed to providing an electrode assembly including a structure for preventing the contact between the top edge of the electrode assembly and the inner surface of a battery can when beading the top of the battery can.

The present disclosure is further directed to providing an electrode assembly with improved energy density and reduced resistance.

The present disclosure is further directed to providing a cylindrical battery cell comprising the electrode assembly with improved structure, a battery pack comprising the same, and a vehicle comprising the battery pack.

The technical problem of the present disclosure is not limited to the above-described problem, and these and other problems will be clearly understood by those skilled in the art from the following description.

### Technical Solution

To solve the above-described technical problem, there is provided a separator of the following embodiment.

According to a first embodiment of the present disclosure, there is provided the separator, comprising a porous polymer substrate; and a porous coating layer on at least one surface of the porous polymer substrate, the porous coating layer comprising a binder polymer and inorganic particles, wherein the separator comprises an insulation coating layer at each of two ends in a Transverse Direction (TD) on an outermost side, and wherein the insulation coating layer comprises fillers for the insulation coating layer and a binder for the insulation coating layer to have a porous structure.

According to a second embodiment of the present disclosure, in the first embodiment, a width of one insulation coating layer may be 0.1 to 10% of a total length of the separator in a widthwise direction.

According to a third embodiment of the present disclosure, in the first or second embodiment, an average particle size of the fillers for the insulation coating layer may be 10 to 90% of an average particle size of the inorganic fillers.

According to a fourth embodiment of the present disclosure, in any one of the first to third embodiments, a vertical cross-sectional shape of the insulation coating layer may have a rectangular, trapezoidal, triangular, parallelogram, semi-circular or semi-oval structure.

According to a fifth embodiment of the present disclosure, there is provided a jelly-roll type electrode assembly having a structure in which a first electrode plate and a second electrode plate, each having a sheet shape, are wound in a direction with a separator interposed between the first electrode plate and the second electrode plate, wherein the separator is defined in any one of the first to fourth embodiments.

According to a sixth embodiment of the present disclosure, there is provided a cylindrical battery cell, comprising a jelly-roll type electrode assembly having a structure in which a positive electrode plate and a negative electrode plate are wound in a direction with a separator interposed between the positive electrode plate and the negative electrode plate; a battery can in which the electrode assembly is received; and a sealing body configured to seal up an open end of the battery can, wherein the separator is defined in any one of the first to fourth embodiments.

According to a seventh embodiment of the present disclosure, in the sixth embodiment, the cylindrical battery cell may have a form factor ratio of 0.4 or more.

According to an eighth embodiment of the present disclosure, in the sixth or seventh embodiment, the cylindrical battery cell may be a 46110 cell, a 48750 cell, a 48110 cell, a 48800 cell or a 46800 cell.

According to a ninth embodiment of the present disclosure, in any one of the sixth to eighth embodiments, the cylindrical battery cell may be a battery of tab-less structure without an electrode tab.

According to a tenth embodiment of the present disclosure, in any one of the sixth to ninth embodiments, each of the positive electrode plate and the negative electrode plate may include an uncoated region without an active material layer, a positive electrode plate uncoated region and a negative electrode plate uncoated region may be disposed at upper and lower ends of the electrode assembly, respectively, a current collector plate may be coupled to the positive electrode plate uncoated region and the negative electrode plate uncoated region, and the current collector plate may be connected to an electrode terminal.

According to an eleventh embodiment of the present disclosure, there is provided a jelly-roll type electrode assembly having a structure in which a first electrode plate and a second electrode plate, each having a sheet shape, are wound in a direction with a separator interposed between the first electrode plate and the second electrode plate, wherein at least one of the first electrode plate or the second electrode plate includes an uncoated region in which an active material layer is not coated at a long side end, wherein at least part of the uncoated region itself is used as an electrode tab, wherein the uncoated region includes a core-side uncoated region adjacent to a core of the electrode assembly, an outer circumferential uncoated region adjacent to an outer circumference surface of the electrode assembly, and an intermediate uncoated region between the core-side uncoated region and the outer circumferential uncoated region, wherein at least one of the core-side uncoated region or the outer circumferential uncoated region has a smaller height in a winding axis direction than the intermediate uncoated region, wherein at least part of the intermediate uncoated region is split into a plurality of segments, and wherein the separator is defined in any one of the first to fourth embodiments.

The electrode assembly according to an embodiment of the present disclosure is a jelly-roll type electrode assembly having a structure in which a first electrode plate and a second electrode plate, each having a sheet shape, are wound in a direction with a separator interposed between the first electrode plate and the second electrode plate, wherein at least one of the first electrode plate or the second electrode plate includes an uncoated region in which an active material layer is not coated at a long side end.

Preferably, at least part of the uncoated region itself may be used as an electrode tab. Additionally, the uncoated region includes a core-side uncoated region adjacent to a core of the electrode assembly, an outer circumferential uncoated region adjacent to an outer circumference surface of the electrode assembly, and an intermediate uncoated region between the core-side uncoated region and the outer circumferential uncoated region.

Preferably, at least one of the core-side uncoated region or the outer circumferential uncoated region may have a smaller height in a winding axis direction than the intermediate uncoated region.

According to a twelfth embodiment of the present disclosure, in the eleventh embodiment, at least part of the intermediate uncoated region may have a stepwise increase in height in the winding axis direction as it goes from the core to the outer circumference.

According to an embodiment of the present disclosure, at least part of the intermediate uncoated region may be split into a plurality of segments.

According to a thirteenth embodiment of the present disclosure, in the eleventh or twelfth embodiment, each of the plurality of segments may have a rectangular, trapezoidal, triangular, parallelogram, semi-circular or semi-oval structure.

According to a fourteenth embodiment of the present disclosure, in any one of the eleventh to thirteenth embodiments, each of the plurality of segments may be trapezoidal, and the plurality of segments may have an increase in a lower inner angle of the trapezoid as it goes from the core to the outer circumference by individual or group.

According to a fifteenth embodiment of the present disclosure, in any one of the eleventh to fourteenth embodiments, the plurality of segments may have a stepwise increase in at least one of a height in the winding axis direction or a width in a winding direction by individual or group as it goes from the core to the outer circumference.

According to a sixteenth embodiment of the present disclosure, in any one of the eleventh to fifteenth embodiments, each of the plurality of segments may meet at least one of a width requirement of 1 to 6 mm in a winding direction; a height requirement of 2 to 10 mm in the winding axis direction; and a pitch requirement of 0.05 to 1 mm in the winding direction.

According to a seventeenth embodiment of the present disclosure, in any one of the eleventh to sixteenth embodiments, a predetermined gap may be present between a lower end of a cutting line of the segment and the active material layer.

According to an eighteenth embodiment of the present disclosure, in the seventeenth embodiment, the gap may be 0.2 mm to 4 mm.

According to a nineteenth embodiment of the present disclosure, in any one of the eleventh to eighteenth embodiments, the plurality of segments may form a plurality of segment groups as it goes from the core to the outer circumference, and the segments in a same segment group may be equal in at least one of a width in a winding direction, a height in the winding axis direction or a pitch in the winding direction.

According to a twentieth embodiment of the present disclosure, in any one of the eleventh to nineteenth embodiments, when a width in a winding direction for each of 3 segment groups successively adjacent to one another in a radial direction of the electrode assembly is W1, W2 and W3, the electrode assembly may include a combination of segment groups having a smaller W3/W2 than W2/W 1.

According to a twenty first embodiment of the present disclosure, in the nineteenth or twentieth embodiment, the segments in the same segment group may have a stepwise increase in at least one of the width in the winding direction, the height in the winding axis direction or the pitch in the winding direction as it goes from the core to the outer circumference.

According to a twenty second embodiment of the present disclosure, in any one of the nineteenth to twenty first embodiments, at least some of the plurality of segment groups may be arranged in a same winding turn of the electrode assembly.

According to a twenty third embodiment of the present disclosure, in any one of the eleventh to twenty second embodiments, the core-side uncoated region may have no segment structure of the uncoated region.

According to a twenty fourth embodiment of the present disclosure, in any one of the eleventh to twenty third embodiments, the outer circumferential uncoated region may have no segment structure of the uncoated region.

According to a twenty fifth embodiment of the present disclosure, in any one of the eleventh to twenty fourth embodiments, as the plurality of segments bends toward the core, the segments may overlap in multilayer.

According to a twenty sixth embodiment of the present disclosure, in the twenty fifth embodiment, a cavity may be present in the core of the electrode assembly, and the cavity may be not blocked by the plurality of segments bent toward the core.

According to a twenty seventh embodiment of the present disclosure, in the twenty sixth embodiment, a radial length (R) of the core-side uncoated region and a bend length (H) of an innermost segment of the intermediate uncoated region may satisfy a relationship equation H≤R.

According to a twenty eighth embodiment of the present disclosure, in any one of the eleventh to twenty seventh embodiments, the outer circumferential uncoated region may have a stepwise or gradual decrease in height as it goes from the core to the outer circumference.

According to a twenty ninth embodiment of the present disclosure, in any one of the eleventh to twenty eighth embodiments, the outer circumferential uncoated region may be split into a plurality of segments, and the plurality of segments included in the outer circumferential uncoated region may be larger than the plurality of segments included in the intermediate uncoated region in at least one of a width in a winding direction, a height in the winding axis direction or a pitch in the winding direction.

To solve the above-described technical problem, according to a thirtieth embodiment of the present disclosure, there is provided a cylindrical battery cell, comprising a j elly-roll type electrode assembly having a structure in which a first electrode plate and a second electrode plate, each having a sheet shape, are wound in a direction with a separator interposed between the first electrode plate and the second electrode plate; a battery can in which the electrode assembly is received, wherein the battery can is electrically connected to any one of the first electrode plate and the second electrode plate and has a first polarity; a sealing body configured to seal up an open end of the battery can; and a terminal electrically connected to the other one of the first electrode plate and the second electrode plate, and having an exposed surface and a second polarity, wherein at least one of the first electrode plate or the second electrode plate includes an uncoated region in which an active material layer is not coated at a long side end, wherein at least part of the uncoated region itself is used as an electrode tab, wherein the uncoated region includes a core-side uncoated region adjacent to a core of the electrode assembly, an outer circumferential uncoated region adjacent to an outer circumference surface of the electrode assembly, and an intermediate uncoated region between the core-side uncoated region and the outer circumferential uncoated region, wherein at least one of the core-side uncoated region or the outer circumferential uncoated region has a smaller height in a winding axis direction than the intermediate uncoated region, wherein at least part of the intermediate uncoated region is split into a plurality of segments, and wherein the separator is defined in any one of the first to fourth embodiments.

The cylindrical battery cell according to an embodiment of the present disclosure may include a jelly-roll type electrode assembly having a structure in which a first electrode plate and a second electrode plate, each having a sheet shape, are wound in a direction with a separator interposed between the first electrode plate and the second electrode plate; a battery can in which the electrode assembly is received, wherein the battery can is electrically connected to any one of the first electrode plate and the second electrode plate and has a first polarity; a sealing body configured to seal up an open end of the battery can; and a terminal electrically connected to the other one of the first electrode plate and the second electrode plate, and having an exposed surface and a second polarity.

According to an embodiment of the present disclosure, at least one of the first electrode plate or the second electrode plate may include an uncoated region in which an active material layer is not coated at a long side end.

According to an embodiment of the present disclosure, at least part of the uncoated region itself may be used as an electrode tab, the uncoated region may include a core-side uncoated region adjacent to a core of the electrode assembly, an outer circumferential uncoated region adjacent to an outer circumference surface of the electrode assembly, and an intermediate uncoated region between the core-side uncoated region and the outer circumferential uncoated region, and at least one of the core-side uncoated region or the outer circumferential uncoated region may have a smaller height in a winding axis direction than the intermediate uncoated region.

According to a thirty first embodiment of the present disclosure, in the thirtieth embodiment, the outer circumferential uncoated region may have a smaller height in the winding axis direction than the intermediate uncoated region, the battery can may include a beading portion bent inward at an end adjacent to the open end, and an inner circumferential surface of the beading portion and the outer circumferential uncoated region opposite a top edge of the electrode assembly may be spaced a predetermined distance apart from each other.

According to a thirty second embodiment of the present disclosure, in the thirtieth or thirty first embodiment, a beading depth (D1) of the beading portion and a distance (D2) from an inner circumferential surface of the battery can to a boundary between the outer circumferential uncoated region and the intermediate uncoated region may satisfy a relationship equation D1≤D2.

According to a thirty third embodiment of the present disclosure, in any one of the thirtieth to thirty second embodiments, the cylindrical battery cell may further comprise a current collector plate electrically coupled to the intermediate uncoated region; and an insulator configured to cover the current collector plate, and having an edge fixed between the inner circumferential surface of the beading portion and the current collector plate.

According to a thirty fourth embodiment of the present disclosure, in the thirty third embodiment, a diameter of the current collector plate and an outermost side diameter of the intermediate uncoated region may be smaller than a minimum inner diameter of the inner circumferential surface of the beading portion, and the diameter of the current collector plate may be equal to or larger than the outermost side diameter of the intermediate uncoated region.

According to a thirty fifth embodiment of the present disclosure, in the thirty third or thirty fourth embodiment, the current collector plate may be disposed higher than the beading portion.

According to a thirty sixth embodiment of the present disclosure, in any one of the thirtieth to thirty fifth embodiments, at least part of the intermediate uncoated region may be bent from the outer circumference toward the core, a cavity may be present in the core of the electrode assembly, and the cavity may be not blocked by a segment structure of the intermediate uncoated region.

According to a thirty seventh embodiment of the present disclosure, in the thirty sixth embodiment, the intermediate uncoated region may include the plurality of segments split along a winding direction of the electrode assembly, the plurality of segments may be bent from the outer circumference toward the core, and a radial length (R) of the core-side uncoated region and a bend length (H) of an innermost segment of the intermediate uncoated region may satisfy a relationship equation H≤R.

According to a thirty eighth embodiment of the present disclosure, in the thirty seventh embodiment, each of the plurality of segments may have a rectangular, trapezoidal, triangular, parallelogram, semi-circular or semi-oval structure.

According to a thirty ninth embodiment of the present disclosure, in the thirty seventh or thirty eighth embodiment, each of the plurality of segments may meet at least one of a width requirement of 1 to 6 mm in the winding direction; a height requirement of 2 to 10 mm in the winding axis direction; or a pitch requirement of 0.05 to 1 mm in the winding direction.

According to a fortieth embodiment of the present disclosure, in any one of the thirtieth to thirty ninth embodiments, a gap may be present between a lower end of a cutting line of the segment and the active material layer.

According to a forty first embodiment of the present disclosure, in the fortieth embodiment, the gap may be 0.2 mm to 4 mm.

According to a forty second embodiment of the present disclosure, in any one of the thirty seventh to forty first embodiments, the plurality of segments may form a plurality of groups, the segments in each group may be equal in at least one of a width in the winding direction, a height in the winding axis direction or a pitch in the winding direction, and at least one of the plurality of groups may form a same winding turn of the electrode assembly.

According to a forty third embodiment of the present disclosure, in any one of the thirty seventh to forty second embodiments, when a width in the winding direction for each of 3 segment groups consecutively adj acent to each other in a radial direction of the electrode assembly is W1, W2 and W3, the electrode assembly may include a combination of segment groups having a smaller W3/W2 than W2/W1.

According to a forty fourth embodiment of the present disclosure, in any one of the thirty seventh to forty third embodiments, the sealing body may include a cap plate configured to seal up the open end of the battery can, and a gasket configured to cover an edge of the cap plate and clamped on top of the battery can, and the terminal having the second polarity may be the cap plate.

According to a forty fifth embodiment of the present disclosure, in any one of the thirty seventh to forty fourth embodiments, the cylindrical battery cell may further comprise a current collector plate electrically connected to the uncoated region of the second electrode plate having the first polarity, wherein at least part of an edge of the current collector plate is coupled to a sidewall of the battery can. In this case, the sealing body may include a cap plate having no polarity, and a gasket surrounding an edge of the cap plate and clamped to top of the battery can, and the battery can may include a rivet terminal which is insulatably installed in a through-hole at a center of a closed surface, electrically connected to the first electrode plate and has the second polarity.

According to a forty sixth embodiment of the present disclosure, there is provided a battery pack comprising at least one cylindrical battery cell according to any one of the thirtieth to forty fifth embodiments.

According to a forty seventh embodiment of the present disclosure, there is provided a vehicle comprising at least one battery pack according to the forty sixth embodiment.

### Advantageous Effects

According to an aspect of the present disclosure, the separator having the porous coating layer comprising the inorganic particles and the binder polymer on at least one surface of the porous polymer substrate has the insulation coating layer at each of two ends in the transverse direction on the outermost side of the separator, thereby improving the heat resistance and compression resistance of the separator, preventing short circuits in the battery cell, improving the infiltration of the electrolyte solution at the electrode in the battery cell, and enhancing the stability of the battery cell.

According to an aspect of the present disclosure, it is possible to reduce the internal resistance of the battery cell and increase the energy density by using the uncoated region protruding from the upper and lower parts of the electrode assembly as the electrode tab.

According to another aspect of the present disclosure, it is possible to prevent short circuits in the cylindrical battery cell caused by partial deformation of the electrode assembly by improving the uncoated region structure of the electrode assembly to prevent interferences between the electrode assembly and the inner circumferential surface of the battery can in the process of forming the beading portion of the battery can.

According to another aspect of the present disclosure, it is possible to improve the uncoated region structure of the electrode assembly to prevent tearing of the uncoated region when bending the uncoated region and sufficiently increase the number of overlapping layers of the uncoated region, thereby improving the weld strength.

According to another aspect of the present disclosure, it is possible to easily perform the electrolyte solution injection process and the welding process of the battery can and the current collector plate by improving the uncoated region structure adjacent to the core of the electrode assembly to prevent the blocked cavity in the core of the electrode assembly when bending the uncoated region.

According to another aspect of the present disclosure, there may be provided the cylindrical battery cell for achieving low internal resistance, preventing internal short circuits and improving the weld strength of the current collector plate and the uncoated region, and the battery pack and the vehicle comprising the same.

The present disclosure may have any other effects, and their description will be provided in each embodiment or description of effects that can be easily inferred by those skilled in the art is omitted.

### DESCRIPTION OF DRAWINGS

The accompanying drawings illustrate an exemplary embodiment of the present disclosure and together with the following detailed description, serve to provide further understanding of the technical aspect of the present disclosure, and thus, the present disclosure is not construed as being limited to the accompanying drawings.
FIG. 1 is a schematic diagram of a separator according to an embodiment of the present disclosure.
FIG. 2 is a schematic diagram of a separator according to an embodiment of the present disclosure.
FIG. 3 is a schematic diagram the steps of manufacturing a separator according to an embodiment of the present disclosure.
FIG. 4 is a plan view showing the structure of an electrode plate used to manufacture a conventional tab-less cylindrical battery cell.
FIG. 5 is a diagram showing a process of winding an electrode plate of a conventional tab-less cylindrical battery cell.
FIG. 6 shows a process of welding a current collector plate to a bend surface of an uncoated region in a conventional tab-less cylindrical battery cell.
FIG. 7 is a plan view showing the structure of an electrode plate according to a first embodiment of the present disclosure.
FIG. 8 is a plan view showing the structure of an electrode plate according to a second embodiment of the present disclosure.
FIG. 9 is a plan view showing the structure of an electrode plate according to a third embodiment of the present disclosure.
FIG. 10a is a plan view showing the structure of an electrode plate according to a fourth embodiment of the present disclosure, and FIGS. 10b and 10c are enlarged diagrams of segments.
FIG. 11 is a diagram showing the definition of width, height and pitch of segment according to an embodiment of the present disclosure.
FIG. 12a is a plan view showing the structure of an electrode plate according to a fifth embodiment of the present disclosure, and FIG. 12b and FIG. 12c is an enlarged diagram of segments.
FIG. 13 is a diagram showing the definition of width, height and pitch of segment according to an embodiment of the present disclosure.
FIG. 14 is a cross-sectional view of a jelly-roll type electrode assembly in which an electrode plate of a first embodiment is applied to a first electrode plate (a positive electrode plate) and a second electrode plate (a negative electrode plate), taken along a Y axis direction (a winding axis direction).
FIG. 15 is a cross-sectional view of a jelly-roll type electrode assembly in which an electrode plate of a second embodiment is applied to a first electrode plate (a positive electrode plate) and a second electrode plate (a negative electrode plate), taken along a Y axis direction (a winding axis direction).
FIG. 16 is a cross-sectional view of a jelly-roll type electrode assembly in which any one of electrode plates of third to fifth embodiments (their variations) is applied to a first electrode plate (a positive electrode plate) and a second electrode plate (a negative electrode plate), taken along a Y axis direction (a winding axis direction).
FIG. 17 is a cross-sectional view of an electrode assembly according to another embodiment of the present disclosure, taken along a Y axis direction (a winding axis direction).
FIG. 18 is a cross-sectional view of an electrode assembly according to another embodiment of the present disclosure, taken along a Y axis direction (a winding axis direction).
FIG. 19 is a cross-sectional view of an electrode assembly according to another embodiment of the present disclosure, taken along a Y axis direction (a winding axis direction).
FIG. 20 is a cross-sectional view of a cylindrical battery cell according to an embodiment of the present disclosure, taken along a Y axis direction.
FIG. 21 is a cross-sectional view of a cylindrical battery cell according to another embodiment of the present disclosure, taken along a Y axis direction.
FIG. 22 is a cross-sectional view of a cylindrical battery cell according to another embodiment of the present disclosure, taken along a Y axis direction.
FIG. 23 is a cross-sectional view of a cylindrical battery cell according to another embodiment of the present disclosure, taken along a Y axis.
FIG. 24 is a cross-sectional view of a cylindrical battery cell according to another embodiment of the present disclosure, taken along a Y axis.
FIG. 25 is a cross-sectional view of a cylindrical battery cell according to another embodiment of the present disclosure, taken along a Y axis.
FIG. 26 is a cross-sectional view of a cylindrical battery cell according to another embodiment of the present disclosure, taken along a Y axis.
FIG. 27 is a cross-sectional view of a cylindrical battery cell according to another embodiment of the present disclosure, taken along a Y axis.
FIG. 28 is a cross-sectional view of a cylindrical battery cell according to another embodiment of the present disclosure, taken along a Y axis.
FIG. 29 is a diagram schematically showing the configuration of a battery pack according to another embodiment of the present disclosure.
FIG. 30 is a diagram schematically showing a vehicle comprising a battery pack according to an embodiment of the present disclosure.
FIG. 31 is a graph showing the compression characteristics of separators of example 1 and comparative example 1.
FIG. 32 is a graph showing the resistance characteristics of cylindrical battery cells comprising separators of example 1 and comparative example 1.
FIG. 33 is a graph showing the result of evaluating electrolyte solution infiltration volume (wettability) into positive and negative electrodes of cylindrical battery cells comprising separators of example 1 and comparative example 1.
FIG. 34 shows each location at which an impregnated sample is taken from electrode assemblies of example 1 and comparative example 1.
FIG. 35 is a graph showing the voltage and temperature characteristics of cylindrical battery cells comprising separators of example 1 and comparative example 1.

### BEST MODE

Hereinafter, exemplary embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the embodiments described herein and illustrations in the drawings are just an exemplary embodiment of the present disclosure, and do not fully represent the technical aspect of the present disclosure, so it should be understood that a variety of other equivalents and modifications could have been made thereto at the time of filing the patent application.

In addition, in order to help the understanding of the present disclosure, the accompanying drawings are not drawn to scale, but dimensions of some components may be exaggerated. Additionally, the same reference signs may be affixed to the same components in different embodiments.

According to another aspect of the present disclosure, there is provided a separator comprising a porous polymer substrate; and a porous coating layer on at least one surface of the porous polymer substrate, and comprising a binder polymer and inorganic particles, wherein the separator comprises an insulation coating layer at each of two ends in the Transverse Direction (TD) on the outermost side of the separator, and wherein the insulation coating layer has a porous structure comprising fillers for the insulation coating layer and a binder for the insulation coating layer.

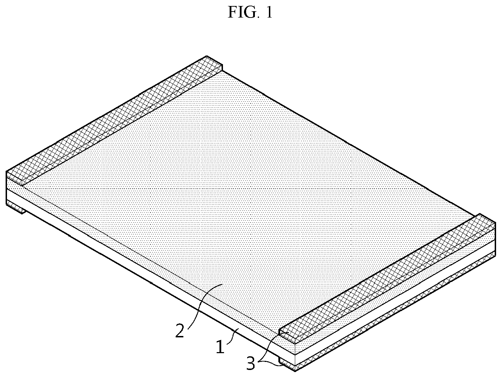

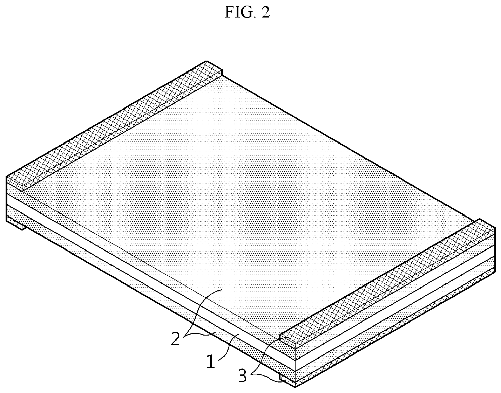

FIGS. 1 and 2 show the separator according to an embodiment of the present disclosure.

Referring to FIGS. 1 and 2, the separator according to an embodiment of the present disclosure has the porous coating layer 2 on one surface of the porous polymer substrate 1 and the separator comprises the insulation coating layer 3 at two ends on the outermost side of the separator. In this instance, when the separator has the porous coating layer on only one surface of the porous substrate, the outermost side of the separator corresponds to one side of the porous polymer substrate (having no porous coating layer) and the porous coating layer.

Additionally, when the separator has the porous coating layer on each of the two surfaces of the porous substrate, the outermost side of the separator may become the porous coating layer on the two sides, and the insulation coating layer may be present at each of the two ends in the transverse direction on the two sides.

The porous polymer substrate may be a polyolefin-based porous substrate.

The polyolefin-based porous substrate may be a film or non-woven web type. The porous structure may allow smooth movement of an electrolyte solution between the positive electrode and the negative electrode, increase the electrolyte solution infiltration of the substrate itself, thereby ensuring high ionic conductivity, and prevent the resistance rise in electrochemical devices, thereby preventing the performance degradation of the electrochemical devices.

The polyolefin-based porous substrate used in the present disclosure may include any planar porous substrate commonly used in electrochemical devices, and its material or type may be variously selected as intended.

The polyolefin porous substrate may include, without limitation, a film or a non-woven web made of high density polyethylene, low density polyethylene, linear low density polyethylene, ultrahigh molecular weight polyethylene, polypropylene or a mixture thereof, but is not limited thereto.

The polyolefin porous substrate may have a thickness of 8 to 30 *µ*m in, but this is provided by way of illustration, and the polyolefin porous substrate may have any thickness outside of the above-described range, considering the mechanical properties or high rate charge/discharge characteristics of the battery.

The non-woven fabric sheet according to the present disclosure may be made of polyethylene (PE), polypropylene (PP) or a mixture thereof. For example, the non-woven fabric sheet may be manufactured by fiber spinning. For example, the non-woven fabric sheet may be manufactured by melt spinning fibers of the above-described material at the temperature that is equal to or higher than the melting point using a melt blown method.

The non-woven fabric sheet may have an elongation of 200 to 400%, and more preferably 300 to 400%. When the elongation is less than 200%, there is a higher probability of contact between the electrodes when the nail penetrates, and when the elongation is larger than 400%, the surrounding area near the area at which the nail penetration occurred is also stretched, and the separator becomes thinner and has lower barrier performance.

The non-woven fabric sheet includes pores having an average diameter of 0.1 to 10 *µ*m. When the pore size is smaller than 0.1 *µ*m, it may fail to allow smooth movement of lithium ions and/or the electrolyte solution, and when the pore size is larger than 10 *µ*m, it may fail to achieve the effect of the present disclosure to prevent the contact between the positive electrode and the negative electrode by the stretch of the non-woven fabric sheet when the nail penetrates.

Additionally, the non-woven fabric sheet may have a porosity of 40 to 70%. When the porosity is less than 40%, it may fail to allow smooth movement of lithium ions and/or the electrolyte solution, and when the porosity is higher than 70%, it may fail to achieve the effect of the present disclosure to prevent the contact between the positive electrode and the negative electrode by the stretch of the non-woven fabric sheet when the nail penetrates. The non-woven fabric sheet manufactured as described above may have an air permeability of 1 to 20 sec/100 mL.

Additionally, the non-woven fabric sheet may have a thickness of 10 to 20 *µ*m, but this is provided by way of illustration and the thickness is not limited thereto. The non-woven fabric sheet having any thickness outside of the above-described range may be adopted according to the air permeability of the non-woven fabric sheet.

The non-woven fabric sheet may be coupled to the component of the separator below the non-woven fabric sheet, by lamination. The lamination may be performed in the temperature range between 100°C and 150°C, and when the lamination is performed at the lower temperature than 100°C, the lamination effect is not produced, and when the lamination is performed at the higher temperature than 150°C, parts of the non-woven fabric melt.

The separator according to an embodiment of the present disclosure, coupled by lamination under the above-described condition, has improved resistance to nail penetration, compared to the conventional separator of a non-woven fabric sheet and a separator having a layer comprising inorganic particles on at least one surface of a film or non-woven fabric sheet.

The inorganic particles in the porous coating layer are packed in contact with each other and bonded by the binder polymer to form interstitial volume between the inorganic particles, and the interstitial volume between the inorganic particles become empty spaces which form pores.

The inorganic particles used to form the porous coating layer may further include inorganic particles in which oxidation and/or reduction reactions do not occur in the operating voltage range (for example, 0 to 5V vs Li/Li+) of electrochemical devices. In particular, when the inorganic particles having the ability to transport ions are used, it is possible to increase the ionic conductivity in electrochemical devices, thereby contributing to the improved performance. Additionally, when inorganic particles having high dielectric constant are used as the inorganic particles, it is possible to increase the degree of dissolution of an electrolyte salt, for example, a lithium salt in a liquid electrolyte, thereby contributing to the improved ionic conductivity of the electrolyte solution.

By these reasons, the inorganic particles preferably include high dielectric constant inorganic particles having the dielectric constant of 5 or more, preferably 10 or more, inorganic particles having the ability to transport lithium ions or a mixture thereof.

Non-limiting examples of the inorganic particles having the dielectric constant of 5 or more may include BaTiO₃, Pb(Zr,Ti)O₃ (PZT), Pb₁₋ₓLaₓZr_{1-y}Ti_{y}O₃ (PLZT), PB(Mg_{1/3}Nb_{2/3})O₃-PbTiO₃ (PMN-PT), hafnia (HfO₂), SrTiO₃, SnO₂, CeO₂, MgO, NiO, CaO, ZnO, ZrO₂, Y₂O₃, Al₂O₃, TiO₂, SiC or a mixture thereof.

In particular, the inorganic particles such as BaTiO₃, Pb(Zr,Ti)O₃ (PZT), Pb₁₋ₓLaₓZr_{1-y}Ti_{y}O₃ (PLZT), PB(Mg_{1/3}Nb_{2/3})O₃-PbTiO₃ (PMN-PT) and hafnia (HfO₂) exhibit high dielectric constant characteristics having the dielectric constant of 100 or more, and moreover, they have piezoelectricity which is the phenomenon where a potential difference is generated across two surfaces by electric charges produced when stressed (tensile or compressive) by the application of a predetermined pressure, thereby preventing internal short circuits between two electrodes due to external impacts and contributing to the improved safety of electrochemical devices. Additionally, when the high dielectric constant inorganic particles and the inorganic particles having the ability to transport lithium ions are used together, their synergistic effect will increase.

The inorganic particles having the ability to transport lithium ions refer to inorganic particles that contain lithium but do not store it, and have the function of moving lithium ions. Since the inorganic particles having the ability to transport lithium ions can transport and move lithium ions due to a sort of defect present in the particle structure, it is possible to improve the conduction of lithium ions in the battery, thereby contributing to the improved battery performance. Non-limiting examples of the inorganic particles having the ability to transport lithium ions may include lithiumphosphate (Li₃PO₄), lithiumtitaniumphosphate (LiₓTi_{y}(PO₄)₃, 0<x<2, 0<y<3), lithiumaluminumtitaniumphosphate (LiₓAl_{y}Ti_{z}(PO₄)₃, 0 < x < 2, 0 < y < 1, 0 < z < 3), (LiAlTiP)ₓO_{y} based glass (0 < x < 4, 0 < y < 13) such as 14Li₂O-9Al₂O₃-38TiO₂-39P₂O₅, lithiumlanthanumtitanate (LiₓLa_{y}TiO₃, 0< x < 2, 0 < y < 3), lithiumgermaniumthiophosphate (LiₓGe_{y}P_{z}S_{w}, 0 < x < 4, 0 < y <1, 0 < z < 1, 0 < w < 5) such as Li_{3.25}Ge_{0.25}P_{0.75}S₄, lithiumnitride (LiₓN_{y}, 0 < x < 4, 0 < y < 2) such as Li₃N, SiS₂ based glass (LiₓSi_{y}S_{z}, 0 < x < 3, 0 < y < 2, 0 < z < 4) such as Li₃PO₄-Li₂S-SiS₂, P₂S₅ based glass (LiₓP_{y}S_{z}, 0 < x < 3, 0 < y < 3, 0 < z < 7) such as LiI-Li₂S-P₂S₅, or a mixture thereof.

The inorganic particles of the porous coating layer are not limited to a particular size, but to form the coating layer of uniform thickness and ensure the optimal porosity, the particle size is preferably 0.001 to 10 *µ*m. When the particle size is less than 0.001 *µ*m, the inorganic particles may less disperse, and when the particle size is larger than 10 *µ*m, the thickness of the porous coating layer increases, resulting in degradation of mechanical properties, and there is a high probability that internal short circuits occur during charging/discharging of the battery due to the large pore size.

The binder polymer that constitutes the porous coating layer may include, for example, at least one selected from the group consisting of polyvinylidene fluoride-co-hexafluoropropylene (PVdF), polyvinylidene fluoride-co-trichloroethylene, polymethylmethacrylate, polybutylacrylate, polyacrylonitrile, polyvinylpyrrolidone, polyvinylacetate, polyethylene-co-vinyl acetate, polyethylene oxide, polyarylate, cellulose acetate, cellulose acetate butyrate, cellulose acetate propionate, cyanoethylpullulan, cyanoethylpolyvinylalcohol, cyanoethylcellulose, cyanoethylsucrose, pullulan and carboxyl methyl cellulose, but is not limited thereto.

A composition ratio of the inorganic particles and the binder polymer used in the porous coating layer may be, for example, 50:50 to 99:1, or 70:30 to 95:5. When the content ratio of the inorganic particles to the binder polymer satisfies the above-described range, it is possible to improve the thermal safety of the separator, form sufficient empty spaces between the inorganic particles, maintain the pore size and porosity, improve the final battery performance, and improve the peel resistance of the porous coating layer due to the optimal level of binder polymer content. The porous coating layer is not limited to a particular thickness, but the thickness is preferably in a range between 0.01 and 20 *µ*m. Additionally, the porous coating layer is not limited to a particular pore size and porosity, but the pore size is preferably in a range between 0.001 and 10 *µ*m, and the porosity is preferably in a range between 10 and 90%. The pore size and porosity relies primarily on the size of the inorganic particles, and for example, when the inorganic particles having the particle size of 1 *µ*m or less are used, the formed pores are approximately 1 *µ*m or less. This pore structure is filled with the electrolyte solution to be subsequently injected, and the filled electrolyte solution serves to transport ions. When the pore size and porosity satisfies the above-described range, the porous coating layer does not act as a resistance layer and it is possible to improve the mechanical properties.

The porous coating layer may be formed by dissolving or dispersing the binder polymer in a dispersion medium to obtain a slurry for forming the porous coating layer with an addition of the inorganic particles, coating the slurry on at least one surface of the substrate, and drying the slurry. Preferably, the dispersion medium has a similar solubility index to the binder polymer intended to use, and a low boiling point. This is to achieve uniform mixing and ease the subsequent removal of the dispersion medium. Non-limiting examples of available dispersion mediums may include acetone, tetrahydrofuran, methylene chloride, chloroform, dimethylformamide, N-methyl-2-pyrrolidone (NMP), cyclohexane, water or a mixture thereof.

After adding the inorganic particles to a dispersion in which the binder polymer is dispersed in the dispersion medium, it is desirable to grind the inorganic particles. In this instance, the grinding time is preferably 1 to 20 hours, and the particle size of the ground inorganic particles is preferably 0.001 to 10 *µ*m as described above. The grinding method may include any common method, and in particular, a ball mill method is desirable.

Subsequently, the binder polymer dispersion containing the dispersed inorganic particles is coated on at least one surface of the porous polymer substrate under the humidity condition of 10 to 80%, followed by drying. The method for coating the dispersion on the porous polymer substrate may include coating methods known in the corresponding technical field, and for example, may include a variety of methods including dip coating, die coating, roll coating, comma coating or a combination thereof.

In addition to the inorganic particles and the binder polymer, the porous coating layer may further comprise additives, for example, a conductive agent.

The finally manufactured separator according to the present disclosure may have a thickness of 1 to 100 *µ*m or 5 to 50 *µ*m. When the thickness is smaller than 1 *µ*m, the separator cannot sufficiently exert its function and the mechanical characteristics may degrade, and when the thickness is larger than 100 *µ*m, the characteristics of the battery may degrade during high rate charging/discharging. Additionally, the separator may have a porosity of 40 to 60% and air permeability of 150 to 300 sec/100 mL.

According to an embodiment of the present disclosure, the porous polymer substrate may comprise polyethylene or polypropylene. Additionally, the inorganic particles in the porous coating layer may comprise Al oxide, Si oxide based coating materials.

When the separator according to an embodiment of the present disclosure is used, the porous coating layer is provided on two sides of the porous polymer substrate, thereby improving the infiltration performance of the electrolyte solution, leading to a uniform solid electrolyte interphase layer, and ensuring much higher air permeability than the conventional separator having inorganic coating on one surface. For example, the air permeability may be 120s/100cc or less. Additionally, the thickness may be at the level of the conventional separator having inorganic coating on one surface even in the presence of the inorganic porous coating layer on two surfaces. For example, the thickness may be ~15.0 *µ*m.

Additionally, when the separator according to an embodiment of the present disclosure is used, it is possible to improve the stability of the separator and ensure heat resistance and compression resistance characteristics. Specifically, it is possible to ensure heat resistance characteristics having thermal shrinkage characteristics of 5% or less on the basis of 180°C, and have the puncture strength of 550 gf or more, thereby preventing damage or puncture of the separator at the stepped portion when core deformation occurs during cycles of the battery including the separator.

The insulation coating layer comprises the fillers for the insulation coating layer and the binder for the insulation coating layer.

The fillers for the insulation coating layer may be selected from the inorganic particles included in the porous coating layer described above, and the binder for the insulation coating layer may be selected from the binder polymers included in the porous coating layer described above. The types of fillers for the insulation coating layer and the binder for the insulation coating layer and the types of the inorganic particles and the binder polymer included in the porous coating layer may be independently the same or different, respectively.

According to an embodiment of the present disclosure, non-limiting examples of the fillers for the insulation coating layer may include BaTiO₃, Pb(Zr,Ti)O₃ (PZT), Pb₁₋ₓLaₓZr_{1-y}Ti_{y}O₃ (PLZT), PB(Mg_{1/3}Nb_{2/3})O₃-PbTiO₃ (PMN-PT), hafnia (HfO₂), SrTiO₃, SnO₂, CeO₂, MgO, NiO, CaO, ZnO, ZrO₂, Y₂O₃, Al₂O₃, TiO₂, SiC or a mixture thereof.

According to an embodiment of the present disclosure, non-limiting examples of the binder for the insulation coating layer may include at least one binder polymer selected from the group consisting of polyvinylidene fluoride-co-hexafluoropropylene (PVdF), polyvinylidene fluoride-co-trichloroethylene, polymethylmethacrylate, polybutylacrylate, polyacrylonitrile, polyvinylpyrrolidone, polyvinylacetate, polyethylene-co-vinyl acetate, polyethylene oxide, polyarylate, cellulose acetate, cellulose acetate butyrate, cellulose acetate propionate, cyanoethylpullulan, cyanoethylpolyvinylalcohol, cyanoethylcellulose, cyanoethylsucrose, pullulan and carboxyl methyl cellulose.

According to an embodiment of the present disclosure, a composition ratio of the fillers for the insulation coating layer and the binder for the insulation coating layer used in the insulation coating layer may be, for example, 50:50 to 99: 1, or 70:30 to 95:5.

According to an embodiment of the present disclosure, the average particle size of the fillers for the insulation coating layer may be smaller than the average particle size of the inorganic fillers, and specifically, the average particle size of the fillers for the insulation coating layer may be 10% or more, 20% or more, 30% or more, 40% or more, 50% or more, 50% or less, 60% or less, 70% or less, 80% or less, 90% or less of the average particle size of the inorganic fillers. When the average particle size of the fillers for the insulation coating layer is smaller than the average particle size of the inorganic fillers or the ratio requirement is met, the packing density of the fillers in the insulation coating layer increases, thereby further suppressing thermal shrinkage of the separator.

According to an embodiment of the present disclosure, the width of the insulation layer may be adjusted such that the insulation coating layer at two ends of the separator in the transverse direction comes into contact with an uncoated region of the electrode (the positive electrode and the negative electrode) in the electrode assembly, and the insulation coating layer does not come into direct contact with the active material layer of the electrode. For example, the width of one insulation coating layer may be 0.1% or more, 0.5% or more, 1% or more, 3% or more, 5% or less, 7% or less, 9% or less or 10% or less of the total length of the separator in the widthwise direction.

According to an embodiment of the present disclosure, the vertical cross-sectional shape of the insulation coating layer may have a rectangular, trapezoidal, triangular, parallelogram, semi-circular or semi-oval structure. The insulation coating layer may be in contact with the uncoated region of the electrode, and to improve the contact with the uncoated region, the rectangular, trapezoidal or parallelogram shape may be more desirable.

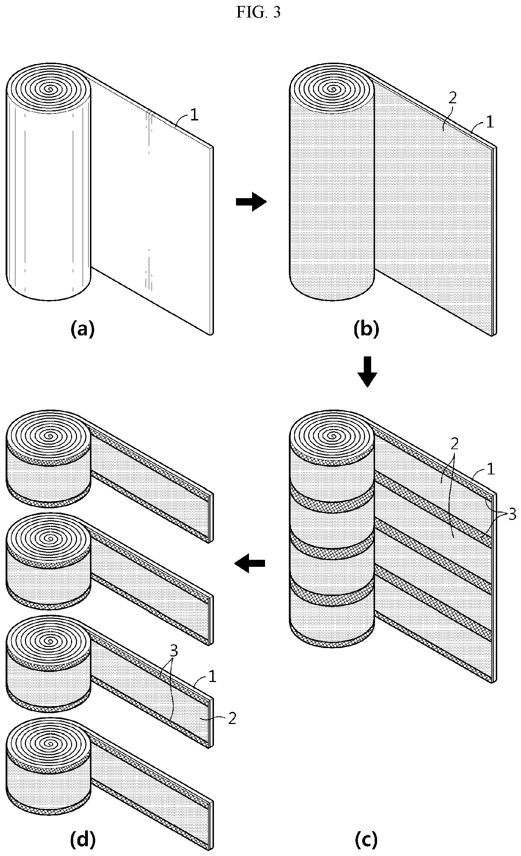

FIG. 3 is a schematic diagram showing the steps of manufacturing the separator according to an embodiment of the present disclosure.

Referring to FIG. 3, a method for manufacturing the separator according to an embodiment of the present disclosure is as follows.

To begin with, the porous polymer substrate 1 (a separator substrate, a large non-slit substrate) is prepared (step a).

Subsequently, the binder polymer is dissolved or dispersed in the dispersion medium with an addition of the inorganic particles to obtain the slurry for forming the porous coating layer, and the slurry is coated on one or two surfaces of the porous substrate 1 and dried to form the porous coating layer (step b).

Subsequently, the binder for the insulation coating layer is dissolved or dispersed in the dispersion medium for the insulation coating layer with an addition of the fillers for the insulation coating layer to obtain the slurry for forming the insulation coating layer, and the slurry is coated on two ends of the separator in the transverse direction on the outermost side at a predetermined width and dried to form the insulation coating layer (step c).

Subsequently, the separator having the porous coating layer and the insulation coating layer on the porous polymer substrate in a sequential order is finally manufactured by slitting to suit the width required for battery cell assembly in the separator substrate having the insulation coating layer (step d).

Subsequently, a cylindrical battery cell according to the present disclosure will be described.

The cylindrical battery cell according to the present disclosure includes a jelly-roll type electrode assembly having a structure in which a positive electrode plate and a negative electrode plate are wound in a direction with a separator interposed between the positive electrode plate and the negative electrode plate; a battery can in which the electrode assembly is received; and a sealing body configured to seal up the open end of the battery can.

Preferably, the cylindrical battery cell according to the present disclosure may be a large-size cylindrical battery cell having a form factor ratio (defined as a value obtained by dividing a diameter of a cylindrical battery by its height, i.e., a height (H)-to-diameter (Φ) ratio) of 0.4 or more. Here, the form factor refers to values indicating the diameter and height of the cylindrical battery cell.

The cylindrical battery cell according to the present disclosure may be, for example, a 46110 cell (diameter 46 mm, height 110 mm, form factor ratio 0.418), a 48750 cell (diameter 48 mm, height 75 mm, form factor ratio 0.640), a 48110 cell (diameter 48 mm, height 110 mm, form factor ratio 0.418), a 48800 cell (diameter 48 mm, height 80 mm, form factor ratio 0.600), a 46800 cell (diameter 46 mm, height 80 mm, form factor ratio 0.575). In the numerical value indicating the form factor, the first two numbers indicate the diameter of the cell, the next two numbers indicate the height of the cell, and the last number 0 indicates a circular cross section of the cell.

The cylindrical battery cell according to the present disclosure significantly reduces the gas generation by applying the monolithic or monolith-like positive electrode active material, thereby achieving high safety for large-size cylindrical battery cells having the form factor ratio of 0.4 or more.

Meanwhile, the cylindrical battery cell according to the present disclosure may be preferably a battery of tab-less structure having no electrode tab, but is not limited thereto.

The battery of the tab-less structure may have, for example, a structure in which each of the positive electrode plate and the negative electrode plate includes an uncoated region having no active material layer, the positive electrode plate uncoated region and the negative electrode plate uncoated region are disposed on top and bottom of the electrode assembly, respectively, a current collector plate is coupled to the positive electrode plate uncoated region and the negative electrode plate uncoated region, and the current collector plate is connected to the electrode terminal.

The electrode assembly according to an embodiment of the present disclosure is a jelly-roll type electrode assembly having a structure in which a first electrode plate and a second electrode plate, each having a sheet shape, are wound in a direction with a separator interposed between the first electrode plate and the second electrode plate.

Preferably, at least one of the first electrode plate or the second electrode plate includes the uncoated region that is not coated with the active material at the long side end in the winding direction. At least part of the uncoated region itself is used as the electrode tab. The uncoated region includes a core-side uncoated portion adjacent to the core of the electrode assembly, an outer circumferential uncoated region adjacent to the outer circumference surface of the electrode assembly, and an intermediate uncoated region between the core-side uncoated region and the outer circumferential uncoated region. Preferably, at least one of the core-side uncoated region or the outer circumferential uncoated region is smaller in height than the intermediate uncoated region.

For convenience of description, in the specification, a direction that follows the lengthwise direction of the winding axis of the electrode assembly wound in a jelly-roll shape is referred to as an axial direction Y. Additionally, a direction around the winding axis is referred to as a circumferential direction X. Additionally, a direction that faces toward or faces away from the winding axis is referred to as a radial direction Z. In particular, the direction that faces toward the winding axis is referred to as a centripetal direction, and the direction that faces away from the winding axis is referred to as a centrifugal direction.

To begin with, the electrode assembly according to an embodiment of the present disclosure will be described.

The electrode assembly includes the first electrode plate and the second electrode plate and the separator interposed between them, and the first electrode plate, the second electrode plate and the separator are wound around the axis in a direction and have a plurality of winding turns. Additionally, each of the first and second electrode plates independently includes a first side and a second side, and the first side and the second side are disposed on the opposite sides in the axial direction.

In an embodiment of the present disclosure, the first and second electrode plates may have a rectangular sheet shape. Additionally, the first and second electrode plates may have a sheet shape having the aspect ratio of more than 1. In this instance, each side at the end of each electrode plate in the widthwise direction corresponds to the first side and the second side.

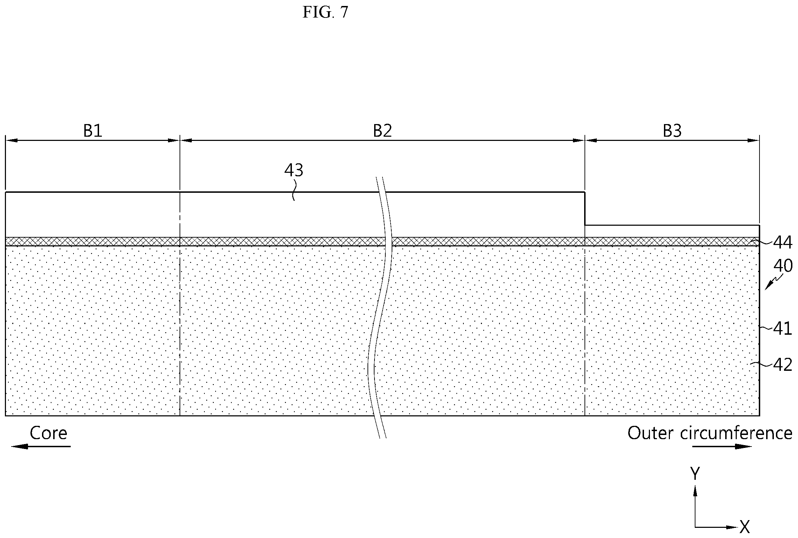

FIG. 7 is a plan view showing the structure of the electrode plate 40 according to a first embodiment of the present disclosure.

Referring to FIG. 7, the second side is a side running along the bottommost end of the electrode active material region 42 in the winding axis direction Y, and the first side is a side running along the topmost end of the uncoated region 43 in the winding axis direction Y.

Each of the first electrode plate and the second electrode plate independently includes a first part which is the electrode active material region coated with the electrode active material on at least one surface or two surfaces. The first part is extended to a predetermined length in a direction toward the first side from the second side. FIG. 4 shows the shape of the electrode plate before the winding of the electrode assembly. Referring to FIG. 4, the electrode active material region may have a uniform width over the total length of the electrode plate from the second side to a location at which the uncoated region starts in the axial direction.

The second part is an uncoated region that is not coated with the electrode active material. The second part forms the electrode tab, and is extended to the electrode active material region of the first part in a direction from the first side toward the second side.

In an embodiment of the present disclosure, at least part of the uncoated region is split into a plurality of segments by a cutout groove of a predetermined depth (not shown).

The segment has a first end corresponding to the first side. In an embodiment of the present disclosure, all or at least some of the segments may be bent radially around the axis at a bending point which is any one point in the segment below the first end, and in this instance, any one end of the separator may be disposed between the bending point and the boundary of the first part and the second part. According to a further specific embodiment of the present disclosure, any one end of the separator may be disposed between the bending point and a baseline or may be disposed below the baseline.

Meanwhile, in a specific embodiment of the present disclosure, the bending point may be a predetermined point between the first end and the baseline.

As described above, in the current collector according to the present disclosure, the uncoated region includes the plurality of segments, and in this instance, the separator may be disposed such that the notch crest of the cutout groove between the segments is covered with the separator to avoid exposure. The placement of the separator will be described in more detail below.

In the present disclosure, the segments may have different heights of the first ends, each cutout groove may have different shapes, and the heights of the notch crests of the cutout grooves may be different. That is, the segments may differ in shape and size, and the cutout grooves may differ in shape and size.

Meanwhile, the height of the segment may be defined as an axial distance C2, D2 from the notch crest of the cutout groove defining the corresponding segment to the first end of the corresponding segment. In case that the heights of the notch crests of the cutout grooves on two sides of the corresponding segment are different, the height of the corresponding segment may be defined as the axial distance from the location corresponding to the average height of the notch crests of the cutout grooves on the two sides to the first end of the segment.

Meanwhile, in the present disclosure, the baseline is an imaginary straight line formed by extending the height corresponding to the notch crests of the cutout grooves in the winding direction X.

Each of the first and second electrode plates may independently include a current collector which is a conductive thin film, and an electrode active material layer on one or two surfaces of the current collector. The active material layer forms the first part of the electrode plate.

The first and second electrode plates, each having a sheet shape, may have the aspect ratio of more than 1. In this instance, the uncoated region may be present at the long side end of at least one of the first electrode plate or the second electrode plate in the winding direction. At least part of the uncoated region itself is used as the electrode tab.

In an embodiment of the present disclosure, the uncoated region includes the core-side uncoated region adjacent to the core of the electrode assembly, the outer circumferential uncoated region adjacent to the outer circumference surface of the electrode assembly, and the intermediate uncoated region between the core-side uncoated region and the outer circumferential uncoated region.

Preferably, at least one of the core-side uncoated region or the outer circumferential uncoated region may be smaller in height than the intermediate uncoated region.

Meanwhile, in the specification, for convenience of description, the 'height' may refer to a distance (length) from a predetermined location in the winding direction x to the first side in the axial direction. In the specification, in the description of the height of the uncoated region/the notch crest, rather than an absolute value of the height, a relative numerical value of heights measured at different locations in the winding direction has significance, and the definition of the baseline (zero point) for measurement of the height of the uncoated region/the notch crest may be omitted. In an embodiment of the present disclosure, the height of the uncoated region may be a relative distance at a specific point on the basis of an arbitrary vertical line in the winding axis direction. For example, the baseline (zero point) for height measurement may be the second side.

Meanwhile, more specifically, at the region at which the segment is not formed, the height of the uncoated region refers to a distance to the first side, and at the region at which the segment is formed, the first side refers to a location corresponding tot the first end of the segment, and the region that constitutes the cutout groove between the segments is not considered when measuring the height of the uncoated region at the region at which the segment is formed.

Additionally, the height of the notch crest is measured on the basis of the cutout groove having the smallest height.

Referring to FIG. 7, the electrode plate 40 of the first embodiment includes the current collector 41 of a metal foil and the active material layer 42. The metal foil may be aluminum or copper, and is appropriately selected according to the polarity of the electrode plate 40. The active material layer 42 is formed on at least one surface of the current collector 41, and includes the uncoated region 43 at the long side end in the winding direction X. The uncoated region 43 is a region that is not coated with the active material. The insulation coating layer 44 may be present in the boundary between the active material layer 42 and the uncoated region 43. At least part of the insulation coating layer 44 overlaps the boundary of the active material layer 42 and the uncoated region 43. The insulation coating layer 44 may comprise a polymer resin and an inorganic filter such as Al₂O₃.

The uncoated region 43 includes the core-side uncoated region B1 adjacent to the core of the electrode assembly, the outer circumferential uncoated region B3 adjacent to the outer circumference of the electrode assembly, and the intermediate uncoated region B2 between the core-side uncoated region B 1 and the outer circumferential uncoated region B3.

When the electrode plate 40 is wound into the jelly-roll type electrode assembly, the core-side uncoated region B1, the outer circumferential uncoated region B3 and the intermediate uncoated region B3 may be defined as an uncoated region of an area adjacent to the core, an uncoated region of an area adjacent to the outer circumference and an uncoated region of the remaining area, respectively. The B1/B2 boundary may be appropriately defined as a location at which the height (or change pattern) of the uncoated region substantially changes it goes from the core to the outer circumference of the electrode assembly or a location of a predetermined % (for example, 5%, 10%, 15%) of the radius of the electrode assembly. The B2/B3 boundary may be defined as a location at which the height (or change pattern) of the uncoated region substantially changes as it goes from the outer circumference to the core of the electrode assembly or a location of a predetermined % (for example, 85%, 90%, 95%) of the radius of the electrode assembly. When the B1/B2 boundary and the B2/B3 boundary are defined, the intermediate uncoated region B2 may be automatically defined. In case that only the B 1B2 boundary is defined, the B2/B3 boundary may be appropriately selected at a location near the outer circumference of the electrode assembly. On the contrary, in case that only the B2/B3 boundary is defined, the B 1B2 boundary may be appropriately selected at a location near the core of the electrode assembly. In the first embodiment, the height of the uncoated region 43 is not uniform and has a relative difference in the winding direction X. That is, the height (the length in the Y axis direction) of the outer circumferential uncoated region B3 is smaller than the core-side uncoated region B1 and the intermediate uncoated region B2.

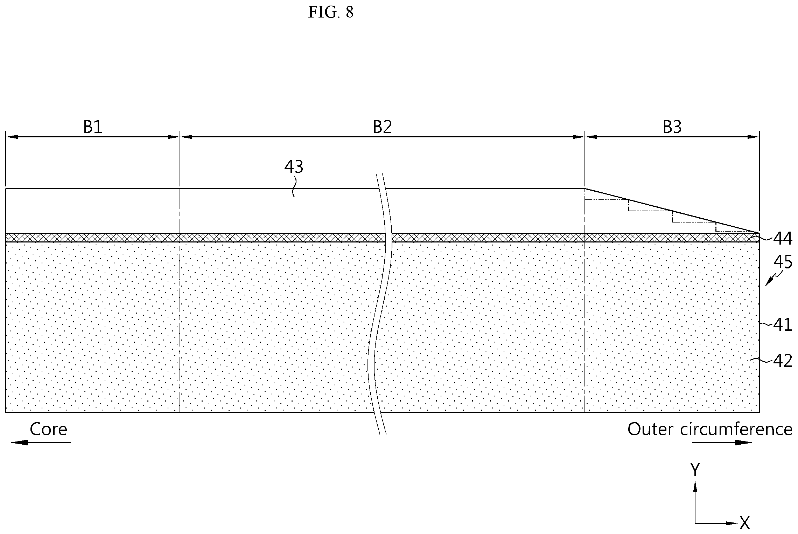

FIG. 8 is a plan view showing the structure of the electrode plate 45 according to a second embodiment of the present disclosure.

Referring to FIG. 8, when compared with the first embodiment, the electrode plate 45 of the second embodiment is different in that the height of the outer circumferential uncoated region B3 gradually decreases as it goes to the outer circumference, and the remaining configuration is substantially the same.

In a variation, the outer circumferential uncoated region B3 may have a stepped shape (see the dashed line) having a stepwise decrease in height.

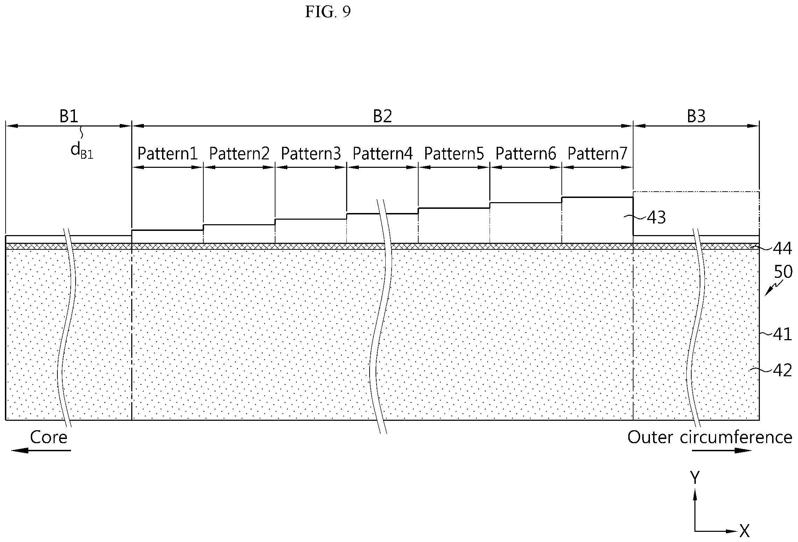

FIG. 9 is a plan view showing the structure of the electrode plate 50 according to a third embodiment of the present disclosure.

Referring to FIG. 9, the electrode plate 50 of the third embodiment has a smaller height of the core-side uncoated region B1 and the outer circumferential uncoated region B3 than the intermediate uncoated region B2. Additionally, the height of the core-side uncoated region B1 and the height of the outer circumferential uncoated region B3 may be equal or different.

Preferably, the intermediate uncoated region B2 may have a stepped shape having a stepwise increase in height as it goes from the core to the outer circumference.

The patterns 1 to 7 are divisions of the intermediate uncoated region B2 on the basis of the location at which the height of the uncoated region 43 changes. Preferably, the number of patterns and the height (the length in the Y axis direction) and the width (the length in the X axis direction) of each pattern may be adjusted to achieve maximum stress dissipation in the process of bending the uncoated region 43. The stress dissipation is intended to prevent tearing of the uncoated region 43.

The width d_{B1} of the core-side uncoated region B 1 is designed by applying the condition for preventing the cavity in the core of the electrode assembly from being blocked when bending the patterns of the intermediate uncoated region B2 toward the core.

In an example, the width d_{B1} of the core-side uncoated region B 1 may increase in proportion to a bend length of the pattern 1. The bend length corresponds to the height of the pattern on the basis of the bending point of the pattern.

In a specific example, when the electrode plate 60 is used to manufacture the electrode assembly of the cylindrical cell with 46800 form factor, the width d_{B1} of the core-side uncoated region B 1 may be set to 180 to 350 mm according to the diameter of the core of the electrode assembly.

In an embodiment, the width of each pattern may be designed to form the same winding turn of the electrode assembly.

In a variation, the intermediate uncoated region B2 may have such a stepped shape that the height increases and then decreases as it goes from the core to the outer circumference.

In another variation, the outer circumferential uncoated region B3 may be modified to have the same structure as the second embodiment.

In another variation, the pattern structure applied to the intermediate uncoated region B2 may be extended to the outer circumferential uncoated region B3 (see the dashed line).

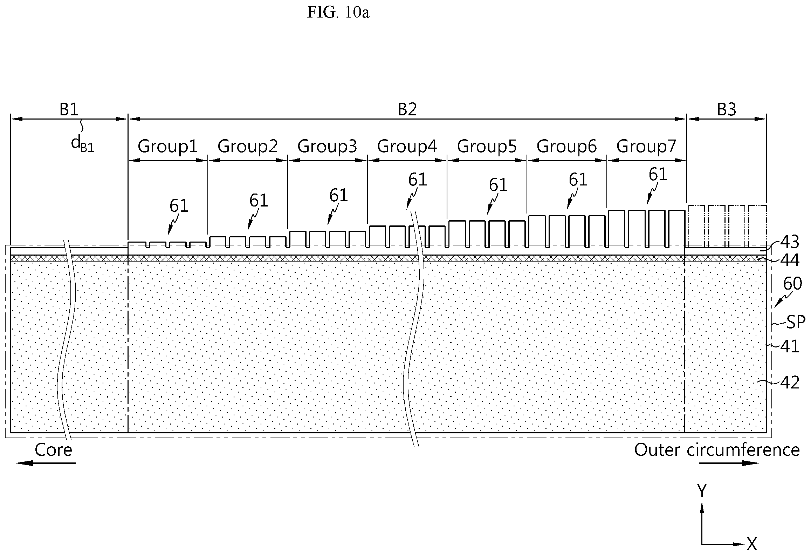

FIG. 10a is a plan view showing the structure of the electrode plate 60 according to a fourth embodiment of the present disclosure.

Referring to FIG. 10a, the electrode plate 60 of the fourth embodiment has a smaller height of the core-side uncoated region B1 and the outer circumferential uncoated region B3 than the intermediate uncoated region B2. Additionally, the height of the core-side uncoated region B1 and the height of the outer circumferential uncoated region B3 may be equal or different.

Preferably, at least part of the intermediate uncoated region B2 may include a plurality of segments 61. The height of the plurality of segments 61 may increase stepwise as it goes from the core to the outer circumference.

In the present disclosure, all or at least some of the segments are bent in the radial direction (toward the center of winding) of the electrode assembly or the opposite direction to the radius. The bending of the segments may take place at a location spaced a predetermined height apart in the upward direction from the notch crest (the bottom of the cutout groove). In the present disclosure, a starting point at which the slope of the tangent line is below 45° in an area where the segment is bent toward the center by an external force is referred to as the bending point. The slope of the tangent line refers to an angle between a tangent line at the bending point and a plane perpendicular to the winding axis of the electrode assembly. Meanwhile, a line that includes the bending point and is perpendicular to the baseline is referred to as a bending line.

Meanwhile, in the present disclosure, the heights corresponding to the notch crests of the plurality of cutout grooves may be equal or different.

In case that the heights are equal, an imaginary straight line formed by extending the height corresponding to the notch crest in the winding direction X is set as the baseline.

In case that most of the notch crests of the cutout grooves are disposed at a specific height, and only the heights of the notch crests of some cutout grooves are different from the specific height, the baseline may be determined as a height corresponding to the specific height. For example, in case that 50% or more of the notch crests is disposed at the specific height, the baseline may be determined as a height corresponding to the heights of the notch crests. Alternatively, the baseline may be determined on the basis of the heights of the notch crests of the cutout grooves occupying the largest length in the winding direction. In case that about 2/3 of the total length occupied by the notch crests of the cutout grooves in the winding direction has a first height, and the heights of the notch crests of the cutout grooves corresponding to 1/3 of the total length occupied by the notch crests of the cutout grooves in the winding direction are different from the first height, the baseline may be defined as a location corresponding to the first height.

In case that the heights of the notch crests of the cutout grooves are not concentrated on a specific height (when the number of cutout grooves concentrated the most is less than 50%), the baseline may be determined as the average of the heights of the notch crests of the cutout grooves. When the length occupied by the height x of the notch crest of the cutout groove in the winding direction is 30%, the length occupied by the height y of the notch crest of the cutout groove in the winding direction is 30%, and the length occupied by the height z of the notch crest of the cutout groove in the winding direction is 40%, the baseline may be x*0.3+y*0.3+z*0.4. The height of the notch crest may be a relative distance at a specific point on the basis of an arbitrary vertical line in the winding axis direction. For example, the heights of the cutout grooves may be distances from the second side to the cutout grooves.

Meanwhile, in an embodiment of the present disclosure, the bending point may be disposed at about 2 mm to 3 mm in the upward direction from the notch crest, and may be parallel to the baseline.

Meanwhile, in an embodiment of the present disclosure, the baseline may be identical or different from a line formed by extending points having the smallest height at the uncoated region in the winding direction Y. In a specific embodiment, the baseline may be identical to the line formed by extending the points having the smallest height at the uncoated region in the winding direction.

The segment 61 may be notched using a laser. The segment 61 may be formed by known metal foil cutting processes such as ultrasonic cutting or punching.

In the fourth embodiment, to prevent damage to the active material layer 42 and/or the insulation coating layer 44 when bending the uncoated region 43, a predetermined gap is preferably present between the lower end of the cutting line between the segments 61 and the active material layer 42. It is because stress concentration occurs near the lower end of the cutting line when bending the uncoated region 43. The gap is preferably 0.2 to 4 mm. When the gap is adjusted to the corresponding numerical range, it is possible to prevent damage to the active material layer 42 and/or the insulation coating layer 44 near the lower end of the cutting line due to the stress occurring when bending the uncoated region 43. Additionally, the gap may prevent damage to the active material layer 42 and/or the insulation coating layer 44 due to the allowance when notching or cutting the segments 61. Preferably, when the electrode plate 40 is wound into the electrode assembly, at least part of the insulation coating layer 44 may be exposed through the separator. In this case, when the segment 61 is bent, the insulation coating layer 44 may support the notch crest.

The gap between the notch crest of the segment and the active material layer may be preferably 1.0 mm or more. This may be better when the corresponding electrode is a negative electrode.

The gap between the notch crest of the segment and the active material layer may be, more preferably, 2.0 mm or more. This may be better when the corresponding electrode is a positive electrode.

When the gap is smaller than the above-described range, the above-described damage prevention effect is not sufficient, and when the gap is larger than the above-described range, the damage prevention effect does not increase and only the capacity of the electrode may decrease.

The boundary between the uncoated region not coated with the active material layer and the region coated with the active material layer may be covered with the insulation layer, and in this instance, a predetermined gap may be also present between the notch crest of the segment and the insulation layer.

The gap may be 0.2 mm to 1.5 mm.

When the gap is smaller than the above-described range, the above-described damage prevention effect is not sufficient, and when the gap is larger than the above-described range, the damage prevention effect does not increase and the segment bending support effect of the insulation coating layer may decrease.

The plurality of segments 61 may form a plurality of segment groups as it goes from the core to the outer circumference. The width, height and pitch of the segments in the same segment group may be substantially equal.

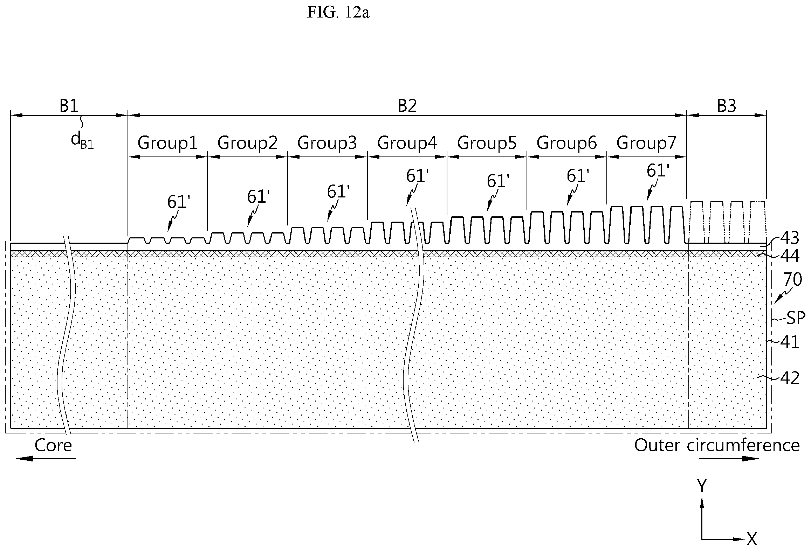

In FIGS. 10a and 12a, the electrode assembly may include the separator SP in contact with the active material layer 42 and/or the insulation coating layer 44 of the electrode plate 60 of the fourth embodiment.

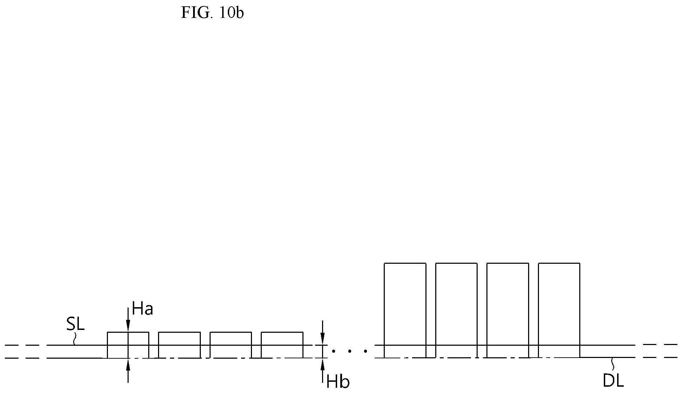

Referring to FIGS. 10b, 10c, 11, 12b and 12c, the point at which the end of the separator is disposed in the uncoated region of the electrode plate of the electrode assembly according to an embodiment of the present disclosure will be described below.

With reference to FIGS. 10b, 10c, 11, 12b and 12c, the point at which the end of the separator is disposed in the uncoated region of the electrode plate of the electrode assembly of the present disclosure will be described in more detail.

Describing an embodiment of the present disclosure with reference to the accompanying drawings, the uncoated region may include the plurality of segments, and the depths of the notch crests between the plurality of segments may be equal. In this instance, the line formed by extending the points corresponding to the depths of the notch crests is set as the baseline.

In this instance, the baseline may correspond to a line connecting the smallest height among the core-side uncoated region, the outer circumferential uncoated region and the intermediate uncoated region to two ends of the uncoated region.

In the present disclosure, the end SL of the separator in the widthwise direction is disposed between the bending point and the baseline DL or in an inward direction of the electrode assembly from the baseline. Here, an outward direction of the electrode assembly refers to a direction from the active material layer of the electrode plate toward the uncoated region, i.e., a direction toward the first side, and the inward direction refers to the opposite direction to the outward direction, i.e., a direction toward the second side.

Additionally, in an embodiment of the present disclosure, the electrode assembly may have a surface area on top or bottom in the winding axis direction by continuously overlapping the segments of the adjacent winding turns in the radial direction or opposite direction among the bent segments. In this instance, when the shortest distance between the maximum height (highest point) in the winding axis direction and the baseline in the surface area is a height HS of the surface area, the end of the separator in the widthwise direction may be disposed in the outward or inward direction of the electrode assembly 90% or less of the height HS of the surface area on the basis of the baseline.

According to an embodiment of the present disclosure, as the end of the separator in the widthwise direction is controlled to be disposed close to the baseline, the electrolyte solution is fed into the electrode assembly along the notch crest (the empty space), thereby improving the infiltration. Specifically, the electrolyte solution is fed into the electrode assembly, and in this instance, the electrolyte solution moves to the cutout groove between the segments, and in this instance, the electrolyte solution permeates into the notch crest, i.e., the end of the separator disposed near the baseline, and finally into the active material layer of the electrode. As a result, it is possible to increase the infiltration uniformity of the electrolyte solution in the electrode assembly.

As the end of the separator in the widthwise direction is far from the outer side of the jelly roll, i.e., the outward direction of the electrode assembly, the negative influence is exerted on the welding characteristics, and as the end of the separator in the widthwise direction is closer to the inner side of the jelly roll, i.e., the inward direction of the electrode assembly, there is a higher short circuit risk in the positive electrode and the negative electrode.

Accordingly, the present disclosure performs controls to dispose the end of the separator in the widthwise direction in the outward direction of the electrode assembly on the basis of the baseline, or dispose the end of the separator in the widthwise direction in the inward direction of the electrode assembly on the basis of the baseline, and more preferably, 90% or less of the height HS of the surface area.

Meanwhile, in an embodiment of the present disclosure, when the segment having the smallest height in the bent segments among the plurality of segments is referred to as a smallest bent segment, the end of the separator in the widthwise direction may be disposed in the outward direction (a first direction) of the electrode assembly less than 50% or 40% or less, 30% or less, 20% or less or 10% or less of the height Ha of the smallest bent segment on the basis of the baseline. Preferably, the end of the separator in the widthwise direction may be disposed in the outward direction of the electrode assembly 30% or less. In this instance, the separator may be disposed such that the notch crest of the cutout groove between the segments is covered by the separator to avoid exposure.

In case that the separator is disposed closer to the first end of the segment beyond the above-described range, there is a risk that the separator may be damaged by heat when subsequently welding the segments. According to another embodiment, the end of the separator in the widthwise direction may be disposed in the inward direction (a second direction) of the electrode assembly 30% or less, 20% or less or 10% or less of the height Ha of the smallest bent segment on the basis of the baseline. When the end of the separator in the widthwise direction is disposed below the baseline as described above, all or at least some of the notch crest(s) may be exposed, but not covered by the separator.

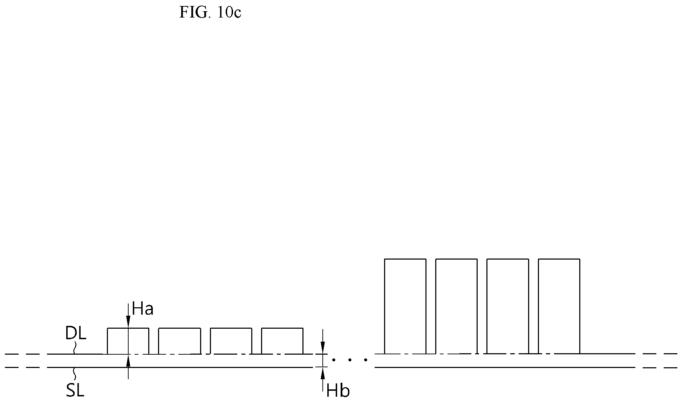

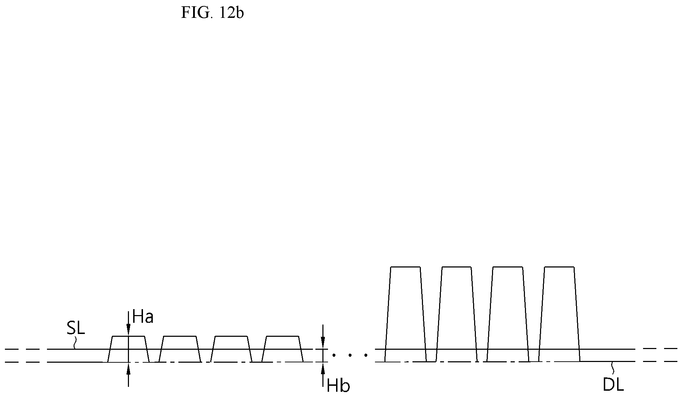

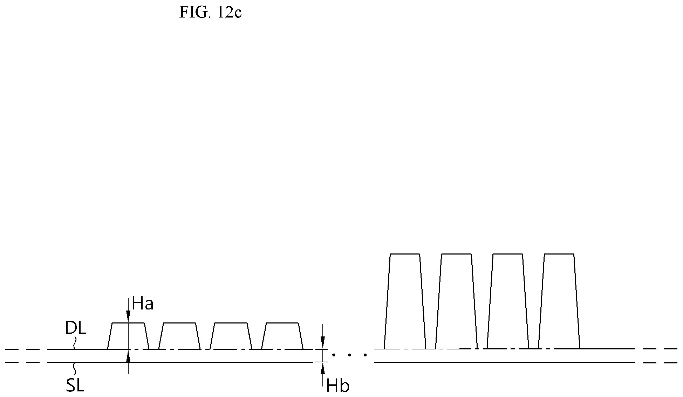

According to FIG. 10b, 10c, 12b or 12c, the segment of the group 1 may be the smallest bent segment, and one end of the separator in the widthwise direction may be disposed in the outward direction (the first direction) of the electrode assembly less than 50% or 30% or less of the height Ha of the smallest bent segment on the basis of the baseline, or the end of the separator in the widthwise direction may be disposed in the inward direction (the second direction) of the electrode assembly 30% or less of the height Ha of the smallest bent segment on the basis of the baseline. More specifically, the segment of the group 1 may be the smallest bent segment, and one end of the separator in the widthwise direction may be disposed in the outward direction (the first direction) of the electrode assembly 30% or less of the height Ha of the smallest bent segment on the basis of the baseline. Referring to FIG. 10b or 12b, when one end of the separator is disposed above the baseline, one end of the separator is disposed between Hb. Here, the maximum length of Hb is less than 50% of the smallest bent segment height (length). On the other hand, when one end of the separator is disposed below DL, the maximum length of Hb is 30% of the height of the smallest bent segment.

That is, in the present disclosure, the segment that is the reference for placing the separator may be a segment having the smallest height among the bent segments, and is referred to as the smallest bent segment.

In a specific embodiment of the present disclosure, the smallest bent segment may be 2 mm or more, and in this instance, the height of the smallest bent segment is larger than the height of the bending point. When the height of the segment is less than 2 mm, the segment bending may not be smoothly performed by interferences between the separator and the segment. Accordingly, the smallest segment may be determined among the segments having the height of 2 mm or more.

According to an embodiment of the present disclosure, in the smallest bent segment, the height A from the baseline to the bending line may be equal to or longer than the length from the bending line to segment height B on the basis of the bending line. Alternatively, in the smallest bent segment, the height A from the baseline to the bending line may be equal to or shorter than the length from the bending line to the segment height B on the basis of the bending line.

Additionally, in an embodiment of the present disclosure, the electrode assembly may further include the segment having the smaller height (segment A) than the smallest bent segment. In this instance, the segment A is not bent. In a specific embodiment, the segment A may be closer to the core than any other segment among the plurality of segments.

In an embodiment of the present disclosure, the electrode assembly does not include the segment having the smaller height than the smallest bent segment, and the smallest bent segment may be the smallest segment.

According to an embodiment of the present disclosure, the end of the separator in the widthwise direction may be disposed in the outward direction of the electrode assembly within 1.5 mm on the basis of the baseline, or the end of the separator in the widthwise direction may be disposed in the inward direction of the electrode assembly within 1.5 mm on the basis of the baseline.

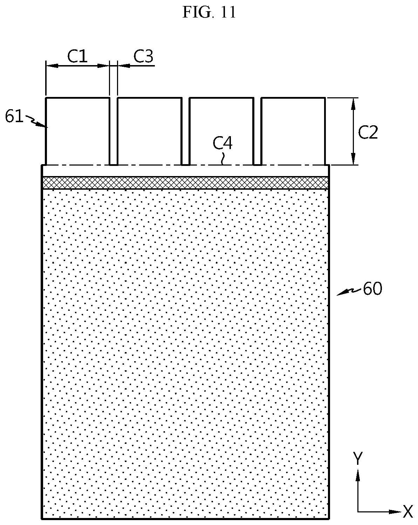

FIG. 11 is a diagram showing the definition of the width, height and pitch of the segment 61 according to an embodiment of the present disclosure.

Referring to FIG. 11, the width C1, height C2 and pitch C3 of the segment 61 are designed to sufficiently increase the number of overlapping layers of the uncoated region 43 and prevent abnormal deformation of the uncoated region 43 in order to prevent tearing of the uncoated region 43 when bending the uncoated region 43 and improve the weld strength. The abnormal deformation refers to irregular deformation occurring when the uncoated region below the bending point C4 does not maintain the straight line state and collapses.

According to an embodiment of the present disclosure, preferably, the width C1 of the segment 61 may be adjusted in a range between 1 mm and 6 mm. In case that C1 is less than 1 mm, a non-overlap region or an empty space (gap) may be formed enough to ensure the weld strength when the segment 61 is bent toward the core. In contrast, in case that C1 is larger than 6 mm, the uncoated region 43 near the bending point C4 may be torn by stress when the segment 61 is bent. Additionally, the height of the segment 61 may be adjusted in a range between 2 mm to 10 mm. In case that C2 is less than 2 mm, a non-overlap region or an empty space (gap) may be formed enough to ensure the weld strength when the segment 61 is bent toward the core. In contrast, in case that C2 is larger than 10 mm, it is difficult to manufacture the electrode plate while uniformly maintaining the flatness of the uncoated region in the winding direction X. That is, swelling occurs due to the large height of the uncoated region.

Additionally, the pitch C3 of the segment 61 may be adjusted in a range between 0.05 mm and 1 mm. In case that C3 is less than 0.05 mm, the uncoated region 43 near the bending point C4 may be torn by stress when the segment 61 is bent. In contrast, in case that C3 is larger than 1 mm, a non-overlap region of the segments 61 or an empty space (gap) may be formed enough to ensure the weld strength when the segment 61 is bent.

In an embodiment of the present disclosure, the corners of the two segments may be connected in a straight line shape. That is, the bottom of the cutout groove may have a flat straight line shape extended in the winding direction X. The corner may have a round reinforcement.

The radius r of the round reinforcement may be 0.02 mm or more. When the corresponding radius is larger than the above-described range, it is possible to achieve the stress dissipation effect. The radius of the round reinforcement may be 0.1 mm or less. When the corresponding radius is larger than 0.1 mm, the stress dissipation effect does not increase any longer, and the space near the bottom of the cutout groove reduces, resulting in poor wettability of the electrolyte solution.

Referring back to FIG. 10a, the width d_{B1} of the core-side uncoated region B1 is designed by applying the condition for preventing the cavity in the core of the electrode assembly from being blocked when bending the segment 61 of the intermediate uncoated region B2 toward the core.

In an example, the width d_{B1} of the core-side uncoated region B 1 may increase in proportion to the bend length of the segment 61 of the group 1. The bend length corresponds to the height of the segment 61 on the basis of the bending point (C4 in FIG. 11).

In a specific example, when the electrode plate 60 is used to manufacture the electrode assembly of the cylindrical cell with the form factor of 46800, the width d_{B1} of the core-side uncoated region B1 may be set to 180 to 350 mm according to the diameter of the core of the electrode assembly.

In an embodiment, the width of each segment group may be designed to form the same winding turn of the electrode assembly.

In a variation, the width and/or height and/or pitch of the segments 61 in the same segment group may gradually and/or stepwise and/or irregularly increase or decrease in the group.

The groups 1 to 7 are an example of the segment group. The number of groups and the number of segments 61 included in each group may be adjusted to overlap the segment 61 in multilayer to achieve maximum stress dissipation in the process of bending the uncoated region 43 and ensure sufficient weld strength.

In another variation, in the same way as the first embodiment and the second embodiment, the height of the outer circumferential uncoated region B3 may gradually or stepwise decrease. Additionally, the segment structure of the intermediate uncoated region B2 may be extended to the outer circumferential uncoated region B3 (see the dashed line). In this case, the outer circumferential uncoated region B3 may include a plurality of segments in the same way as the intermediate uncoated region B2. In this case, the segments of the outer circumferential uncoated region B3 may have a larger width and/or height and/or pitch than the intermediate uncoated region B2.

In a specific example, when the electrode plate 60 is used to manufacture the electrode assembly of the cylindrical cell with the form factor of 46800, eight groups of segments may be formed. In this instance, the segments of the groups 1 to 7 may be present in the intermediate uncoated region B2, and the segments of the group 8 may be present in the outer circumferential uncoated region B3 as in the above-described variation.

In a specific example, the width d_{B1} of the core-side uncoated region B1 may be 180 to 350 mm. The width of the group 1 may be 35 to 40% of the width of the core-side uncoated region B1. The width of the group 2 may be 130 to 150% of the width of the group 1. The width of the group 3 may be 120 to 135% of the width of the group 2. The width of the group 4 may be 85 to 90% of the width of the group 3. The width of the group 5 may be 120 to 130% of the width of the group 4. The width of the group 6 may be 100 to 120% of the width of the group 5. The width of the group 7 may be 90 to 120% of the width of the group 6. The width of the group 8 may be 115 to 130% of the width of the group 7.

The reason that the width of the groups 1 to 8 does not show a uniformly increasing or decreasing pattern is that the width of the segments gradually increases as it goes from the group 1 to the group 8, but the number of segments in the group is limited to an integral number. Accordingly, the number of segments in a specific segment group may decrease. Accordingly, as shown in the above example, the width of the group may show an irregular change as it goes from the core to the outer circumference.

That is, when for each of 3 segment groups successively adjacent to one another in the radial direction of the electrode assembly, the width in the winding direction is W1, W2 and W3, the electrode assembly may include a combination of segment groups having a smaller W3/W2 than W2/W1.

In the above specific example, the groups 4 to 6 correspond to the combination. A width ratio of the group 5 to the group 4 is 120% to 130%, and a width ratio of the group 6 to the group 5 is 100% to 120% which is smaller than 120% to 130%.

FIG. 12a is a plan view showing the structure of the electrode plate 70 according to the fifth embodiment of the present disclosure.

Referring to FIG. 12a, when the electrode plate 70 of the fifth embodiment is compared with the fourth embodiment, except that the shape of the segment 61' is changed from rectangular to trapezoidal, the remaining configuration is substantially the same as the fourth embodiment (or variations).

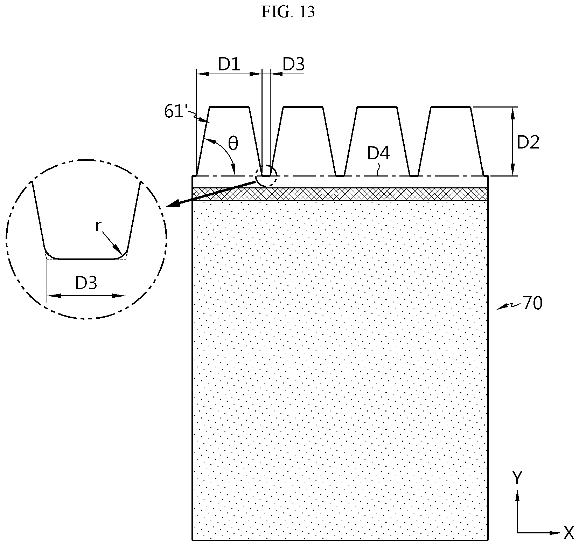

FIG. 13 shows the definition of the width, height and pitch of the trapezoidal segment 61'.

Referring to FIG. 13, the width D1, height D2 and pitch D3 of the segment 61' are designed to sufficiently increase the number of overlapping layers of the uncoated region 43 and prevent abnormal deformation of the uncoated region 43 in order to prevent tearing of the uncoated region 43 near the bending point D4 when bending the uncoated region 43 and ensure sufficient weld strength.

Preferably, the width D1 of the segment 61' may be adjusted in a range between 1 mm and 6 mm. In case that D1 is smaller than 1 mm, a non-overlap region of the segments 61' or an empty space (gap) may be formed enough to ensure the weld strength when the segment 61' is bent toward the core. In contrast, in case that D1 is larger than 6 mm, the uncoated region 43 near the bending point D4 may be torn by stress when the segment 61 is bent. Additionally, the height of the segment 61' may be adjusted in a range between 2 mm and 10 mm. In case that D2 is smaller than 2 mm, a non-overlap region of the segments 61' or an empty space (gap) may be formed enough to ensure the weld strength when the segment 61' is bent toward the core. In contrast, in case that D2 is larger than 10 mm, it is difficult to manufacture the electrode plate while uniformly maintaining the flatness of the uncoated region 43 in the winding direction. Additionally, the pitch D3 of the segment 61' may be adjusted in a range between 0.05 mm and 1 mm. In case that D3 is smaller than 0.05 mm, the uncoated region 43 near the bending point D4 may be torn by stress when the segment 61' is bent. In contrast, in case that D3 is larger than 1 mm, a non-overlap region of the segments 61' or an empty space (gap) may be formed enough to the weld strength when the segment 61' is bent.

When the segment is trapezoidal in shape, the pitch D3 may be defined as a distance between the corners of the two adjacent segments 61'. The corners of the two adjacent segments may be connected in a straight line shape. That is, the bottom of the cutout groove may have a flat straight line shape extended in the winding direction X.

The round reinforcement may be further provided at the corner. Accordingly, it is possible to prevent stress concentration that may occur at the corner.

The radius r of the round reinforcement may be 0.02 mm or more. When the corresponding radius is larger than the above-described range, it is possible to achieve the stress dissipation effect.

The radius of the round reinforcement may be 0.1 mm or less. When the corresponding radius is larger than 0.1 mm, the stress dissipation effect does not increase any longer, and the space near the bottom of the cutout groove reduces, resulting in poor wettability of the electrolyte solution.

The pitch C3, D3 may be determined in relation to the size C1, D1 of the width measured in the winding direction of the neighboring segments 61, 61' defining the pitch C3, D3. As the width of the segments in the winding direction increases, their pitch preferably has an increasing tendency. Accordingly, it is possible to achieve uniform distribution of electrolyte solution wettability along the winding direction of the electrode assembly.

The width of the segment in the winding direction may be set to gradually increase as it goes from the core to the outer circumference of the electrode assembly. The width of the segment in the winding direction may gradually or stepwise increase as it goes from the core to the outer circumference of the electrode assembly. The width C1, D1 of the segment in the winding direction may range from 1 to 6 mm, and may decrease as it goes to the core and increase as it goes to the outer circumference.

Accordingly, the pitch C3, D3 may range from 0.5 to 1mm, and gradually or stepwise increase as it goes from the core to the outer circumference of the electrode assembly.

In the fifth embodiment, the plurality of segments 61' may increase in the lower inner angle θ of the trapezoid as it goes from the core to the outer circumference. With the increasing radius of the electrode assembly 70, the curvature increases. In case that the lower inner angle θ of the segment 61' increases with the increasing radius of the electrode assembly, it is possible to reduce stress occurring in the radial direction and circumferential direction when the segment 61' is bent. Additionally, when the lower inner angle θ increases, the overlap area with the inner segment 61' and the number of overlapping layers increases when the segment 61' is bent, thereby uniformly ensuring the weld strength in the radial direction and circumferential direction and making the bend surface flat.

In an example, in case that the electrode plate 70 is used to manufacture the electrode assembly of the cylindrical cell with the form factor 46800, when the radius of the electrode assembly 70 increases from 4 mm to 22 mm, the inner angle of the segment 61' may stepwise increase in the range between 60° and 85°.

In a variation, in the same way as the first embodiment and the second embodiment, the height of the outer circumferential uncoated region B3 may gradually or stepwise decrease. Additionally, the segment structure of the intermediate uncoated region B2 may be extended to the outer circumferential uncoated region B3 (see the dashed line). In this case, in the same way as the intermediate uncoated region B2, the outer circumferential uncoated region B3 may include a plurality of segment. In this case, the segment of the outer circumferential uncoated region B3 may have a larger width and/or height and/or pitch than the intermediate uncoated region B2.

As in the fourth and fifth embodiments, when the intermediate uncoated region B2 includes the plurality of segments 60, 60', the shape of each segment 60, 60' may be changed to a triangular, semi-circular, semi-oval or parallelogram shape.

Additionally, the shape of the segments 60, 60' may be differently changed depending on the area of the intermediate uncoated region B2. In an example, a region in which stress concentration occurs may have a round shape (for example, semi-circular, semi-oval, etc.) good for stress dissipation, and a region in which stress is relatively low may have a polygonal shape (for example, rectangular, trapezoidal, parallelogram, etc.) having the widest possible area.

In the fourth and fifth embodiments, the segment structure of the intermediate uncoated region B2 may be applied to the core-side uncoated region B 1. When the segment structure is applied to the core-side uncoated region B 1, reverse forming may occur in which the end of the core-side uncoated region B 1 is bent toward the outer circumference when the segments 60, 60' of the intermediate uncoated region B2 are bent due to the curvature radius of the core. Accordingly, preferably, the core-side uncoated region B1 does not have the segment structure. Even though the segment structure is applied, it is desirable to adjust the width and/or height and/or pitch of the segments 60, 60' to a level at which reverse forming does not occur, considering the curvature radius of the core.

The height of the segment at which reverse forming may occur may be less than approximately 3 mm. Additionally, when the height of the segment is less than 2 mm, it may be difficult to bend due to interferences between the segment and the separator. Furthermore, when the height of the segment is less than 4 mm, the segment welding process may not be smoothly performed. Accordingly, the smallest height Hₘᵢₙ of the segment may be 2 mm or more, or 3 mm or more, or 4 mm or more or 5 mm or more with an intention of bending. Accordingly, the height of the smallest bent segment may be 2 mm or more, or 3 mm or more, or 4 mm or more or 5 mm or more.

Accordingly, on the basis of the baseline DL, when the end SL of the separator in the widthwise direction is present in a range (on the basis of the baseline) of ±30% of the height Ha of the smallest bent segment which is bent among the segments having the height that is equal to or larger than the smallest bendable height Hₘᵢₙ (for example, 2 mm or 3 mm or 4 mm or 5 mm) in the uncoated region, it is possible to significantly improve the wettability. That is, in determining the smallest segment defining the position of the end SL of the separator in the widthwise direction, a segment having a reverse forming risk or an unbent segment may be excluded.

Describing from another point of view, when the end SL of the separator in the widthwise direction is present in a range of ±30% of the height f max(Ha, Hₘᵢₙ)} that is larger among the height Ha of the smallest bent segment present in the uncoated region and the smallest bendable height Hₘᵢₙ on the basis of the baseline DL, it is possible to significantly improve the wettability.

Describing from another point of view, when the end SL of the separator in the widthwise direction is present in a range of ±30% of the smallest bendable height Hₘᵢₙ on the basis of the baseline DL, it is possible to significantly improve the wettability of the electrolyte solution. This may be in a range of the baseline DL±1.5 mm or the baseline DL±1.2 mm or the baseline DL±0.9 mm or the baseline DL±0.6 mm.

Alternatively, the position of the end of the separator in the widthwise direction may be present in a range of DL±0.3Ha and a range of DL±1.5 mm, or the position of the end of the separator in the widthwise direction may be present in a range of DL±0.3Ha and a range of DL±1.2 mm, or the position of the end of the separator in the widthwise direction may be present in a range of DL±0.3Ha and a range of DL±0.9 mm, or the position of the end of the separator in the widthwise direction may be present in a range of DL±0.3Ha and a range of DL±0.6 mm.

The electrode plate structures of the above-described embodiments (variations) may be applied to at least one of the first electrode plate or the second electrode plate with the opposite polarity included in the j elly-roll type electrode assembly. Additionally, when the electrode structures of the embodiments (variations) re applied to any one of the first electrode plate and the second electrode plate, the conventional electrode plate structure may be applied to the other. Additionally, the electrode plate structures applied to the first electrode plate and the second electrode plate may be different, not identical.

In an example, when the first electrode plate and the second negative electrode plate are the positive electrode plate and the negative electrode plate, respectively, any one of the embodiments (variations) may be applied to the first electrode plate and the conventional electrode plate structure (see FIG. 1) may be applied to the second electrode plate.

In another example, when the first electrode plate and the second negative electrode plate are the positive electrode plate and the negative electrode plate, respectively, any one of the embodiments (variations) may be selectively applied to the first electrode plate and any one of the embodiments (variations) may be selectively applied to the second electrode plate.

In the present disclosure, a positive electrode active material coated on the positive electrode plate and a negative electrode active material coated on the negative electrode plate may include any active material known in the corresponding technical field without limitation.

The positive electrode active material mainly includes lithium intercalation materials including layered compounds or compounds with one or more transition metal substitution such as lithium cobalt oxide (LiCoO2), lithium nickel oxide (LiNiO₂); lithium manganese oxide (LiMnO₂) of formula Li₁₊ₓMn₂₋ₓO₄ (where x is 0 to 0.33), LiMnO₃, LiMn₂O₃, LiMnO₂; lithium copper oxide (Li₂CuO₂); vanadium oxide such as LiVsOs, LiFe₃O₄, V₂O₅, Cu₂V₂O₇; nickel site type lithium nickel oxide (lithiated nickel oxide) represented by formula LiNi₁₋ₓMₓO₂ (where M = Co, Mn, Al, Cu, Fe, Mg, B or Ga, x = 0.01 to 0.3); lithium manganese composite oxide represented by formula LiMn₂₋ₓMₓO₂ (where M = Co, Ni, Fe, Cr, Zn or Ta, x = 0.01 to 0.1) or Li₂Mn₃MO₈ (where M = Fe, Co, Ni, Cu or Zn); LiMn₂O₄ with partial substitution of alkali earth metal ion for Li in the formula; disulfide compounds; Fe₂(MoO₄)₃ or composite oxide thereof, but is not limited thereto.

In the present disclosure, the positive electrode active material may be a monolithic positive electrode active material comprising one primary particle or a monolith-like positive electrode active material comprising agglomerates of 10 or less primary particles.

In general, the existing positive electrode active material of the battery cell comprises spherical secondary particles comprising agglomerates of a few tens to a few hundreds of primary particles. However, the secondary particle type positive electrode active material comprising agglomerates of many primary particles, detachment of primary particles or particle cracking easily occurs in the rolling process in the manufacture of the positive electrode, and interganular cracking occurs during charging/discharging. In case that particle cracking or interganular cracking occurs in the positive electrode active material, the area of contact with the electrolyte solution increases, and gas generation caused by side reactions with the electrolyte solution increases. In case that gas generation in the cylindrical battery cell increases, the pressure in the battery increases and there is a risk that the battery may explode. In particular, in case that the volume of the cylindrical battery cell increases, the amount of the active material in the battery increases due to the increased volume, and as a consequence, the amount of gas generated significantly increases, and fire and/or explosion risks of the battery increase.

In contrast, the monolithic positive electrode active material comprising one primary particle or the monolith-like positive electrode active material comprising agglomerates of 10 or less primary particles has higher particle strength than the existing secondary particle type positive electrode active material comprising agglomerates of a few tens to a few hundreds of primary particles, so particle cracking scarcely occurs during rolling. Additionally, in the case of the monolithic or monolith-like positive electrode active material, the number of primary particles that constitute the particles is small, so there is little or no change induced by the volume expansion and contraction of the primary particles during charging/discharging, and accordingly, intergranular cracking significantly reduces.

Accordingly, when the monolithic or monolith-like positive electrode active material is used according to the present disclosure, it is possible to significantly reduce the amount of gas generated by particle cracking and intergranular cracking, thereby achieving high safety of large-size cylindrical battery cells. The present disclosure does not use secondary particle type positive electrode active material and only uses the monolithic or monolith-like positive electrode active material as the positive electrode active material. In case that the secondary particle type positive electrode active material is included, the gas generation suppression effect is low, thereby failing to ensure sufficient safety when applied to large-size cylindrical battery cells.

Meanwhile, the average particle size D₅₀ of the monolithic or monolith-like positive electrode active material according to the present disclosure may be 5 *µ*m or less, preferably 1*µ*m to 5*µ*m, and more preferably 2 *µ*m to 5 *µ*m. When the average particle size D₅₀ of the positive electrode active material satisfies the above-described range, it is possible to minimize the resistance increase.

The monolithic or monolith-like positive electrode active material has poorer lithium mobility than the secondary particle type positive electrode active material due to the smaller interface between the primary particles that serve as the movement path of lithium ions in the particles, resulting in resistance increase. As the particle size increases, the resistance increases, and when the resistance increases, the capacity and output characteristics are adversely affected. Accordingly, the present disclosure uses the monolithic or monolith-like positive electrode active material having the average particle size D₅₀ of 5 ,um or less to minimize the lithium ion movement distance in the particles, thereby suppressing the resistance rise.

The positive electrode active material may have the particle size of the primary particles of 0.5 *µ*m to 5 *µ*m, preferably 1 *µ*m to 5 *µ*m, and more preferably 2 *µ*m to 5 *µ*m. When the average particle size of the primary particles satisfies the above-described range, it is possible to form the monolithic or monolith-like positive electrode active material having good electrical and chemical properties. When the average particle size of the primary particles is too small, the number of agglomerates of primary particles that form the positive electrode active material may increase and the suppression effect of particle cracking during rolling may decrease, and when the average particle size of the primary particles is too large, the lithium propagation path in the primary particles may increase, the resistance may rise and the output characteristics may degrade.

In the present disclosure, the positive electrode active material preferably has a unimodal particle size distribution. Bimodal positive electrode active materials comprising a mixture of a large particle size positive electrode active material having a large average particle size and a small particle size positive electrode active material having a small average particle size have been widely used to improve the electrode density of the positive electrode active material layer. However, as described above, in the case of the monolithic or monolith-like positive electrode active material, when the particle size increases, the lithium movement path increases and the resistance significantly rises, so when large size particles are used together, the capacity and output characteristics may degrade, and thus it is desirable to use positive electrode active materials having a unimodal distribution.

Meanwhile, the positive electrode active material may comprise lithium nickel-based oxide, and specifically, may comprise lithium nickel-based oxide represented by the following [formula 1].

[Formula 1] LiₐNi_{b}Co_{c}M¹_{d}M²ₑO₂

In the above formula 1, M¹ may be Mn, Al or a combination thereof, and preferably Mn or Mn and Al.

The M² may be at least one selected from the group consisting of Zr, W, Y, Ba, Ca, Ti, Mg, Ta and Nb, preferably at least one selected from the group consisting of Zr, Y, Mg, and Ti, and more preferably Zr, Y or a combination thereof. The M² is optional, but may play a role in promoting grain growth during sintering or improving the crystal structure stability when it is included in an optimal amount.

The a denotes the mole ratio of lithium in the lithium nickel-based oxide, and may be 0.8≤a ≤1.2, 0.85≤a ≤1.15, or 0.9≤a ≤1.2. When the mole ratio of lithium satisfies the above-described range, it is possible to stably form the crystal structure of the lithium nickel-based oxide.

The b denotes the mole ratio of nickel among all the metals except lithium in the lithium nickel-based oxide, and may be 0.8≤b<1, 0.82≤b<1, or 0.83≤b<1. When the mole ratio of nickel satisfies the above-described range, it is possible to achieve high energy density and high capacity.

The c denotes the mole ratio of cobalt among all the metals except lithium in the lithium nickel-based oxide, and may be 0<c<0.2, 0<c<0.18, or 0.01<c<0.17. When the mole ratio of cobalt satisfies the above-described range, it is possible to ensure good resistance characteristics and output characteristics.

The d denotes the mole ratio of M¹ among all the metals except lithium in the lithium nickel-based oxide, and may be 0<d<0.2, 0<d<0.18, or 0.01≤d≤0.17. When the mole ratio of M¹ satisfies the above-described range, it is possible to achieve good structural stability of the positive electrode active material.

The e denotes the mole ratio of M² among all the metals except lithium in the lithium nickel-based oxide, and may be 0≤e≤0.1, or 0≤e≤0.05.

Meanwhile, the positive electrode active material according to the present disclosure may further comprise a coating layer comprising at least one coating element selected from the group consisting of Al, Ti, W, B, F, P, Mg, Ni, Co, Fe, Cr, V, Cu, Ca, Zn, Zr, Nb, Mo, Sr, Sb, Bi, Si and S on the lithium nickel-based oxide particle surface, if necessary. Preferably, the coating element may be Al, B, Co or a combination thereof.

When the coating layer is present on the lithium nickel-based oxide particle surface, the coating layer may suppress the contact between the electrolyte and lithium composite transition metal oxide, thereby reducing transition metal dissolution or gas generation caused by side reactions with the electrolyte.

The positive electrode active material may be included in an amount of 80 to 99 weight%, preferably 85 to 99 weight%, and more preferably 90 to 99 weight% based on the total weight of the positive electrode active material layer.

The positive electrode current collector has, for example, a thickness of 3 to 500 *µ*m. The positive electrode current collector is not limited to a particular type and may include any material having conductive properties without causing any chemical change to the battery, for example, stainless steel, aluminum, nickel, titanium, sintered carbon, or aluminum or stainless steel treated with carbon, nickel, titanium or silver on the surface. The electrode current collector may have microtexture on the surface to improve the adhesion strength of the positive electrode active material, and may come in various types, for example, film, sheet, foil, net, porous body, foam and non-woven.

A conductive material may be additionally mixed with the positive electrode active material particles. The conductive material is added, for example, in an amount of 1 to 50 weight% based on the total weight of the mixture comprising the positive electrode active material. The conductive material is not limited to a particular type and may include any conductive material having high conductivity without causing any chemical change to the battery, for example, graphite including natural graphite, artificial graphite; carbon black including carbon black, acetylene black, ketjen black, channel black, furnace black, lamp black and thermal black; conductive fibers including carbon fibers and metal fibers; fluorocarbon; metal powder including aluminum and nickel powder; conductive whiskers including zinc oxide and potassium titanate; conductive oxide including titanium oxide; polyphenylene derivatives.

Additionally, the negative electrode is manufactured by coating negative electrode active material particles on a negative electrode current collector and drying, and if necessary, may further comprise components such as the conductive material described above, a binder and a solvent.

The negative electrode current collector has, for example, a thickness 3 to 500 *µ*m. The negative electrode current collector is not limited to a particular type and may include any material having conductive properties without causing any chemical change to the corresponding battery, for example, copper, stainless steel, aluminum, nickel, titanium, sintered carbon, copper or stainless steel treated with carbon, nickel, titanium or silver on the surface, and an aluminum-cadmium alloy. Additionally, in the same way as the positive electrode current collector, the negative electrode current collector may have microtexture on the surface to improve the bonding strength of the negative electrode active material, and may come in various types, for example, film, sheet, foil, net, porous body, foam and non-woven.

The negative electrode active material may include, for example, carbon such as non-graphitizable carbon, graphite-based carbon; metal composite oxide of LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, elements of Group 1, 2 or 3 in the Periodic Table, halogen; 0<x≤1; 1≤y≤3; 1≤z≤8); lithium metal; lithium alloy; silicon-based alloy; tin-based alloy; oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅; conductive polymer such as polyacetylene; Li-Co-Ni-based materials.

The binder polymer that may be used in the electrode is the component that helps to bind the electrode active material particles and the conductive material and bind to the electrode current collector, and for example, is added in an amount of 1 to 50 weight% based on the total weight of the mixture comprising the electrode active material. The binder polymer may include, for example, any one selected from the group consisting of polyvinylidene fluoride-co-hexafluoropropylene (PVdF), polyvinylidene fluoride-co-trichloroethylene, polymethylmethacrylate, polybutylacrylate, polyacrylonitrile, polyvinylpyrrolidone, polyvinylacetate, polyethylene-co-vinyl acetate, polyethylene oxide, polyarylate, cellulose acetate, cellulose acetate butyrate, cellulose acetate propionate, cyanoethylpullulan, cyanoethylpolyvinylalcohol, cyanoethylcellulose, cyanoethylsucrose, pullulan and carboxyl methyl cellulose or a mixture thereof, but is not limited thereto.

Non-limiting examples of the solvent used to manufacture the electrode may include acetone, tetrahydrofuran, methylene chloride, chloroform, dimethylformamide, N-methyl-2-pyrrolidone (NMP), cyclohexane, water or a mixture thereof. These solvents provides the optimal level of viscosity to form a slurry coating layer on the electrode current collector surface at a desired level.

The negative electrode comprises the current collector; and a negative electrode active material layer on at least one surface of the current collector, and comprising the negative electrode active material, the binder polymer and the conductive material, the negative electrode active material layer having a lower layer area at which the negative electrode active material layer is in contact with the current collector and an upper layer area in contact with the lower layer area and extended to the surface of the negative electrode active material layer, and each of the lower layer area and the upper layer area may independently comprise at least one of graphite and a silicon-based compound as the negative electrode active material.

The lower layer area may comprise natural graphite as the negative electrode active material, and the upper layer area may comprise artificial graphite as the negative electrode active material.

Each of the lower layer area and the upper layer area may further comprise, independently, the silicon-based compound as the negative electrode active material.

The silicon-based compound may comprise at least one of SiOx (0≤x≤2) or SiC.

According to an embodiment of the present disclosure, the negative electrode may be manufactured by coating a slurry for the lower layer comprising the negative electrode active material for the lower layer on the current collector and drying the slurry to form the lower layer area, and subsequently, coating a slurry for the upper layer comprising the negative electrode active material for the upper layer on the lower layer area and drying the slurry to form the upper layer area.

Additionally, according to an embodiment of the present disclosure, the negative electrode may be manufactured by a method including preparing the slurry for the lower layer comprising the negative electrode active material for the lower layer; and the slurry for the upper layer comprising the negative electrode active material for the upper layer;
coating the slurry for the lower layer on one surface of negative electrode current collector, and the slurry for the upper layer on the slurry for the lower layer at the same time or a predetermined time interval; and
drying the coated slurry for the lower layer and the coated slurry for the upper layer at the same time to form the active material layer.

In case that the latter method is used to manufacture, the negative electrode may have an intermixing zone in which the different types of active materials are mixed at the area of contact between the lower layer area and the upper layer area. This is because when the active material layer is formed by continuously coating the slurry for the lower layer comprising the lower layer negative electrode active material and the slurry for the upper layer comprising the upper layer negative electrode active material on the current collector at the same time or at a very short time interval, and subsequently drying at the same time, the predetermined intermixing zone is formed at the interface of contact between the slurry for the lower layer and the slurry for the upper layer before drying, and subsequently, during the drying, the intermixing zone is formed in the form of a layer of mix area.

In the active material layer of the negative electrode of an embodiment of the present disclosure, a weight ratio (or a ratio of loading amount per unit area) of the upper layer area and the lower layer area may be 20:80 to 50:50, and specifically 25:75 to 50:50.

The thickness of the lower layer area and the upper layer area of the active material layer of the negative electrode of the present disclosure may not completely match the thickness of the coated slurry for the lower layer and the coated slurry for the upper layer. However, the ratio of thickness of the lower layer area and the upper layer area of the active material layer of the negative electrode of the present disclosure finally obtained as a result of drying or optionally, rolling may match a ratio of thickness of the coated slurry for the lower layer and the coated slurry for the upper layer.

The first slurry is coated and the second slurry is coated on the first slurry at the same time or the predetermined time interval, and according to an embodiment of the present disclosure, the predetermined time interval may be 0.6 sec or less, or 0.02 sec to 0.6 sec, or 0.02 sec to 0.06 sec, or 0.02 sec to 0.03 sec. The time interval in the coating of the first slurry and the second slurry results from a coater, and it may be more desirable to coat the first slurry and the second slurry at the same time. The method of coating the second slurry on the first slurry may be performed, for example, using a double slot die.

The step of forming the active material layer may further comprise rolling the active material layer after the drying. In this instance, the rolling may be performed by methods commonly used in the corresponding technical field such as roll pressing, and for example, may be performed under the pressure of 1 to 20 MPa at the temperature of 15 to 30°C.

The step of drying the coated slurry for the lower layer and the coated slurry for the upper layer at the same time to form the active material layer may be performed by methods commonly used in the corresponding technical field using a combination of a hot air drying device and an infrared drying device.

The weight percent of a first binder polymer in the solids of the slurry for the lower layer may be equal to or larger than the weight percent of a second binder polymer in the solids of the slurry for the upper layer. According to an embodiment of the present disclosure, the weight percent of the first binder polymer in the solids of the slurry for the lower layer may be 1.0 to 4.2 times, or 1.5 to 3.6 times or 1.5 to 3 times larger than the weight percent of the second binder polymer in the solids of the slurry for the upper layer.

In this instance, when the weight percent of the first binder in the coated slurry for the lower layer and the weight percent of the second binder in the coated slurry for the upper layer satisfy the above-described range, the binder of the lower layer area is not too small, so detachment of the electrode layer does not occur, and the binder of the upper layer area is not too large, so the resistance of the upper layer of the electrode decreases, thereby improving fast charge performance.

The weight percent of the first binder polymer in the solids of the slurry for the lower layer may be 2 to 30 weight%, or 5 to 20 weight%, and the weight percent of the second binder polymer in the solids of the slurry of the upper layer may be 0.5 to 20 weight%, or 1 to 15 weight%, or 1 to 10 weight%, or 2 to 5 weight%.

The total weight percent (total ratio) of the first binder polymer and the second binder polymer in the total solids of the slurry for the lower layer and the slurry for the upper layer may be 2 to 20 weight%, or 5 to 15 weight%.

Hereinafter, the structure of the electrode assembly according to an embodiment of the present disclosure will be described in detail.

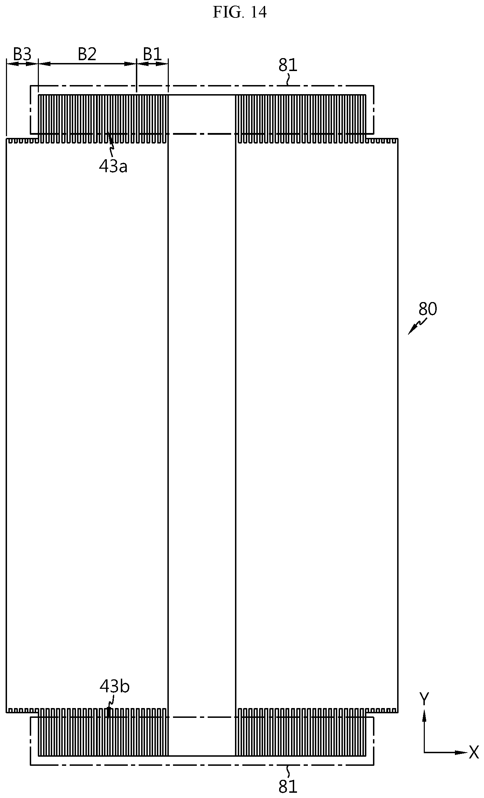

FIG. 14 is a cross-sectional view of the jelly-roll type electrode assembly 80 in which the electrode plate 40 of the first embodiment is applied to the first electrode plate (the positive electrode plate) and the second electrode plate (the negative electrode plate), taken along the Y axis direction (the winding axis direction).

The electrode assembly 80 may be manufactured by the winding process described through FIG. 2. For convenience of description, the protrusion structure of the uncoated regions 43a, 43b extended out of the separator is shown in detail, and the illustration of the winding structure of the first electrode plate, the second electrode plate and the separator is omitted. The uncoated region 43a protruding upward is extended from the first electrode plate, and the uncoated region 43b protruding downward is extended from the second electrode plate.

A pattern of changes in the height of the uncoated regions 43a, 43b is schematically shown. That is, the height of the uncoated regions 43a, 43b may irregularly change according to the location at which the cross section is cut. In an example, when the side of the trapezoidal segments 61, 61' is cut, the uncoated region height in cross section is lower than the height of the segments 61, 61'. Accordingly, it should be understood that the height of the uncoated regions 43a, 43b shown in the drawings depicting the cross section of the electrode assembly corresponds to the average of uncoated region heights (C2 in FIG. 11, D2 in FIG. 13) included in each winding turn.

Referring to FIG. 14, the uncoated region 43a of the first electrode plate includes the core-side uncoated region B1 adjacent to the core of the electrode assembly 80, the outer circumferential uncoated region B3 adjacent to the outer circumference surface of the electrode assembly 80, and the intermediate uncoated region B2 between the core-side uncoated region B1 and the outer circumferential uncoated region B3.

The height (the length in Y axis direction) of the outer circumferential uncoated region B3 is smaller than the height of the intermediate uncoated region B2. Accordingly, it is possible to prevent internal short circuits that occur when the outer circumferential uncoated region B3 is pressed against the beading portion of the battery can.

The lower uncoated region 43b has the structure as the upper uncoated region 43a. In a variation, the lower uncoated region 43b may have the conventional electrode plate structure or the electrode plate structures of other embodiments (variations).

The end 81 of the upper uncoated region 43a and the lower uncoated region 43b may be bent from the outer circumference toward the core of the electrode assembly 80. In this instance, the outer circumferential uncoated region B3 may not be substantially bent.

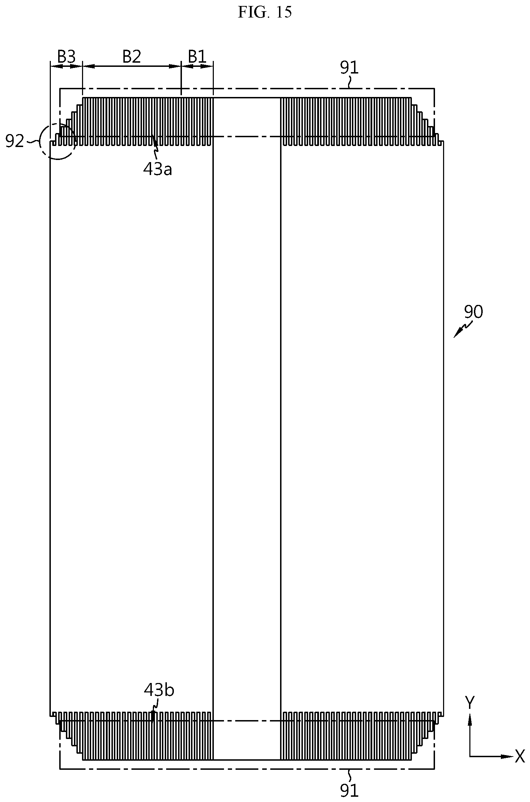

FIG. 15 is a cross-sectional view of the jelly-roll type electrode assembly 90 in which the electrode plate 45 of the second embodiment is applied to the first electrode plate (the positive electrode plate) and the second electrode plate (the negative electrode plate), taken along the Y axis direction (the winding axis direction).

Referring to FIG. 15, the uncoated region 43a of the first electrode plate includes the core-side uncoated region B1 adjacent to the core of the electrode assembly 90, the outer circumferential uncoated region B3 adjacent to the outer circumference surface of the electrode assembly 90, and the intermediate uncoated region B2 between the core-side uncoated region B1 and the outer circumferential uncoated region B3.

The height of the outer circumferential uncoated region B3 is smaller than the height of the intermediate uncoated region B2 and gradually or stepwise decreases as it goes from the core to the outer circumference. Accordingly, it is possible to prevent internal short circuits that occur when the outer circumferential uncoated region B3 is pressed against the beading portion of the battery can.

The lower uncoated region 43b has the same structure as the upper uncoated region 43a. In a variation, the lower uncoated region 43b may have the conventional electrode plate structure or electrode plate structures of other embodiments (variations).

The end 91 of the upper uncoated region 43a and the lower uncoated region 43b may be bent from the outer circumference toward the core of the electrode assembly 90. In this instance, the outermost side 92 of the outer circumferential uncoated region B3 may not be substantially bent.

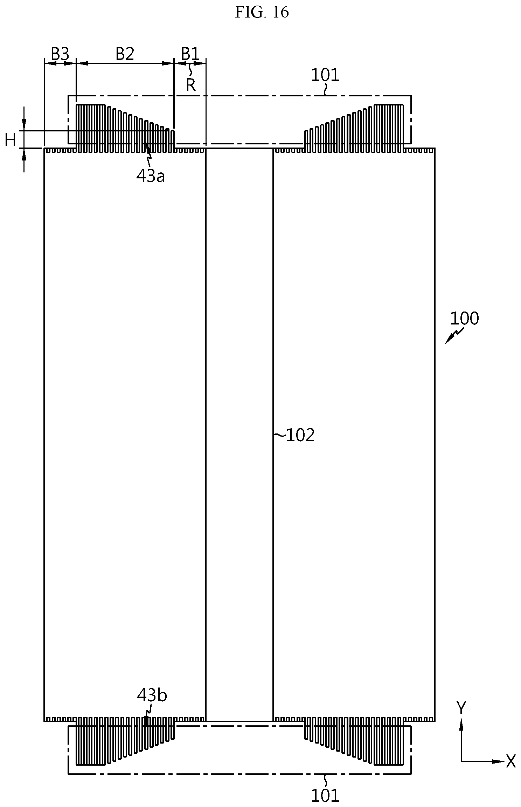

FIG. 16 is a cross-sectional view of the jelly-roll type electrode assembly 100 in which any one of the electrode plates 50, 60, 70 of the third to fifth embodiments (their variations) is applied to the first electrode plate (the positive electrode plate) and the second electrode plate (the negative electrode plate), taken along the Y axis direction (the winding axis direction).

Referring to FIG. 16, the uncoated region 43a of the first electrode plate includes the core-side uncoated region B1 adjacent to the core of the electrode assembly 100, the outer circumferential uncoated region B3 adjacent to the outer circumference surface of the electrode assembly 100, and the intermediate uncoated region B2 between the core-side uncoated region B1 and the outer circumferential uncoated region B3.

The height of the core-side uncoated region B1 is smaller than the height of the intermediate uncoated region B2. Additionally, the bend length of the uncoated region 43a disposed at the innermost side in the intermediate uncoated region B2 is equal to or smaller than the radial length R of the core-side uncoated region B1. The bend length H corresponds to the height of the uncoated region 43a on the basis of the location at which the uncoated region 43a is bent (C4 in FIG. 11, D4 in FIG. 13).

Accordingly, when the intermediate uncoated region B2 is bent, the bent part does not block the cavity 102 in the core of the electrode assembly 100. When the cavity 102 is not blocked, it is not difficult to perform the electrolyte injection process and it is possible to improve the electrolyte solution injection efficiency. Additionally, it is possible to easily perform the welding process between the current collector plate of the negative electrode and the battery can by inserting a welding jig through the cavity 102.

The height of the outer circumferential uncoated region B3 is smaller than the height of the intermediate uncoated region B2. Accordingly, it is possible to prevent internal short circuits that occur when the outer circumferential uncoated region B3 is pressed against the beading portion of the battery can.

In a variation, the height of the outer circumferential uncoated region B3 may gradually or stepwise decrease unlike FIG. 16. Additionally, in FIG. 16, the height of the intermediate uncoated region B2 is equal to the height of the outer circumferential uncoated region, but the height of the intermediate uncoated region B2 may gradually or stepwise increase from the boundary between the core-side uncoated region B 1 and the intermediate uncoated region B2 to the boundary between the intermediate uncoated region B2 and the outer circumferential uncoated region B3.

The lower uncoated region 43b has the same structure as the upper uncoated region 43a. In a variation, the lower uncoated region 43b may have the conventional electrode plate structure or the electrode plate structures of other embodiments (variations).

The end 101 of the upper uncoated region 43a and the lower uncoated region 43b may be bent from the outer circumference toward the core of the electrode assembly 100. In this instance, the core-side uncoated region B1 and the outer circumferential uncoated region B3 are not substantially bent.

When the intermediate uncoated region B2 includes the plurality of segments, it is possible to mitigate bending stress, thereby preventing tearing or abnormal deformation of the uncoated region 43a near the bending point. Additionally, in case that the width and/or height and/or pitch of the segments is adjusted according to the numerical range of the above-described embodiment, as the segments bend toward the core, the segments overlap in multilayer enough to ensure the weld strength without forming an empty hole (gap) in the bend surface (the surface viewed from the Y axis).

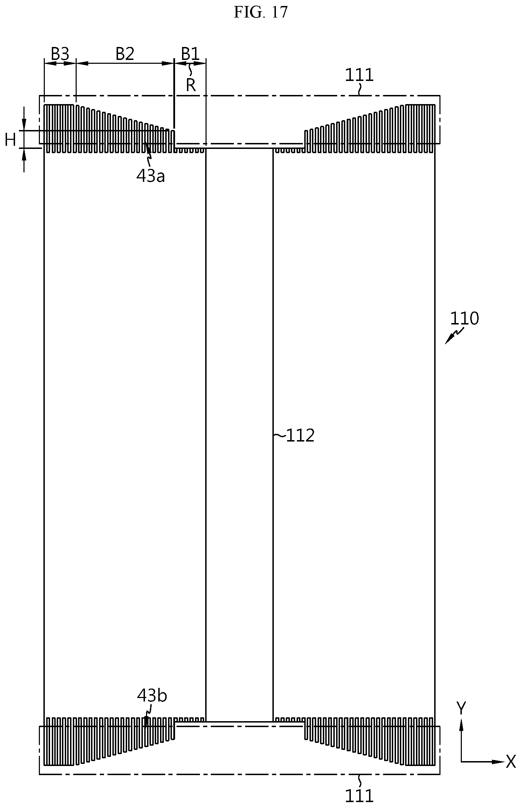

FIG. 17 is a cross-sectional view of the electrode assembly 110 according to another embodiment of the present disclosure, taken along the Y axis direction (the winding axis direction).

Referring to FIG. 17, when the electrode assembly 110 is compared with the electrode assembly 100 of FIG. 16, except the height of the outer circumferential uncoated region B3 is substantially the same as the outermost side height of the intermediate uncoated region B2, the remaining configuration is substantially the same.

The outer circumferential uncoated region B3 may include the plurality of segments. Regarding the plurality of segments, the description of the fourth and fifth embodiments (variations) is, in substance, equally applied.

In the electrode assembly 110, the height of the core-side uncoated region B1 is smaller than the height of the intermediate uncoated region B2. Additionally, the bend length H of the uncoated region disposed at the innermost side in the intermediate uncoated region B2 is equal to or smaller than the radial length R of the core-side uncoated region B1.

Accordingly, when the intermediate uncoated region B2 is bent, the bent part does not block the cavity 112 in the core of the electrode assembly 110. When the cavity 112 is not blocked, it is not difficult to perform the electrolyte injection process and it is possible to improve the electrolyte solution injection efficiency. Additionally, it is possible to easily perform the welding process between the current collector plate of the negative electrode and the battery can by inserting the welding jig through the cavity 112.

In a variation, the structure in which the height of the intermediate uncoated region B2 gradually or stepwise increases from the core toward the outer circumference may be extended to the outer circumferential uncoated region B3. In this case, the height of the uncoated region 43a may gradually or stepwise increase from the boundary between the core-side uncoated region B1 and the intermediate uncoated region B2 to the outermost side surface of the electrode assembly 110.

The lower uncoated region 43b has the same structure as the upper uncoated region 43a. In a variation, the lower uncoated region 43b may have the conventional electrode plate structure or the electrode plate structures of other embodiments (variations).

The end 111 of the upper uncoated region 43a and the lower uncoated region 43b may be bent from the outer circumference toward the core of the electrode assembly 110. In this instance, the core-side uncoated region B1 is not substantially bent.

When the intermediate uncoated region B2 and the outer circumferential uncoated region B3 include the plurality of segments, it is possible to mitigate bending stress, thereby preventing tearing or abnormal deformation of the uncoated regions 43a, 43b near the bending point. Additionally, when the width and/or height and/or pitch of the segments is adjusted according to the numerical range of the above-described embodiment, as the segments bend toward the core, the segments overlap in multilayer enough to ensure the weld strength without forming an empty hole (gap) in the bend surface (the surface viewed from the Y axis).

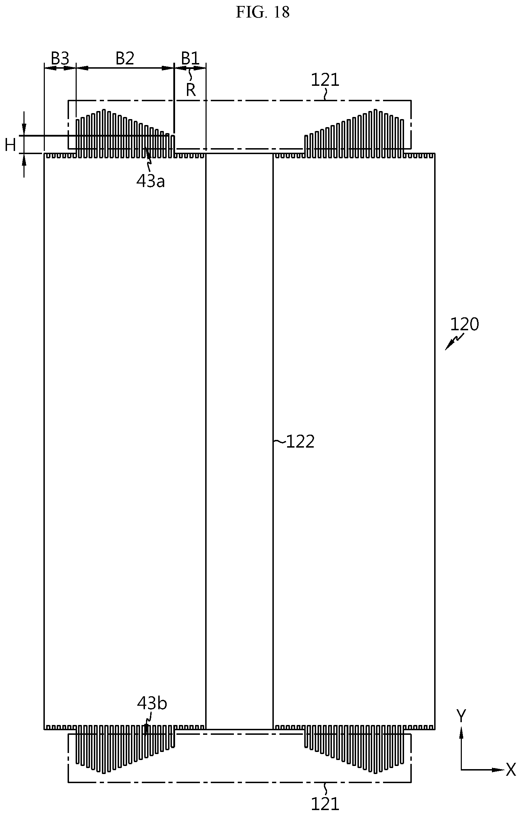

FIG. 18 is a cross-sectional view of the electrode assembly 120 according to another embodiment of the present disclosure, taken along the Y axis direction (the winding axis direction).

Referring to FIG. 18, when the electrode assembly 120 is compared with the electrode assembly 100 of FIG. 16, there is a difference in that the height of the intermediate uncoated region B2 has a gradual or stepwise increasing and decreasing pattern, and the remaining configuration is substantially the same.

This height change of the intermediate uncoated region B2 may be made by the step pattern (see FIG. 9) included in the intermediate uncoated region B2 or adjusting the height of the segment (see FIG. 10a or FIG. 12a).

In the electrode assembly 120, the height of the core-side uncoated region B 1 is smaller than the height of the intermediate uncoated region B2. Additionally, the bend length H of the uncoated region disposed at the innermost side in the intermediate uncoated region B2 is equal to or smaller than the radial length R of the core-side uncoated region B1.

Accordingly, when the intermediate uncoated region B2 is bent toward the core, the bent part does not block the cavity 122 in the core of the electrode assembly 120. When the cavity 122 is not blocked, it is not difficult to perform the electrolyte injection process and it is possible to improve the electrolyte solution injection efficiency. Additionally, it is possible to easily perform the welding process between the current collector plate of the negative electrode and the battery can by inserting the welding jig through the cavity 122.

Additionally, the height of the outer circumferential uncoated region B3 is smaller than the height of the intermediate uncoated region B2. Accordingly, it is possible to prevent internal short circuits that occur when the outer circumferential uncoated region B3 is pressed against the beading portion of the battery can. In a variation, the height of the outer circumferential uncoated region B3 gradually or stepwise decreases as it goes to the outer circumference.

The lower uncoated region 43b has the same structure as the upper uncoated region 43a. In a variation, the lower uncoated region 43b may have the conventional electrode plate structure or the electrode plate structures of other embodiments (variations).

The end 121 of the upper uncoated region 43a and the lower uncoated region 43b may be bent from the outer circumference toward the core of the electrode assembly 120. In this instance, the core-side uncoated region B1 and the outer circumferential uncoated region B3 are not substantially bent.

When the intermediate uncoated region B2 includes the plurality of segments, it is possible to mitigate bending stress, thereby preventing tearing or abnormal deformation of the uncoated regions 43a, 43b. Additionally, when the width and/or height and/or pitch of the segments is adjusted according to the numerical range of the above-described embodiment, as the segments bend toward the core, the segments overlap in multilayer enough to ensure the weld strength without forming an empty hole (gap) in the bend surface (the surface viewed from the Y axis).

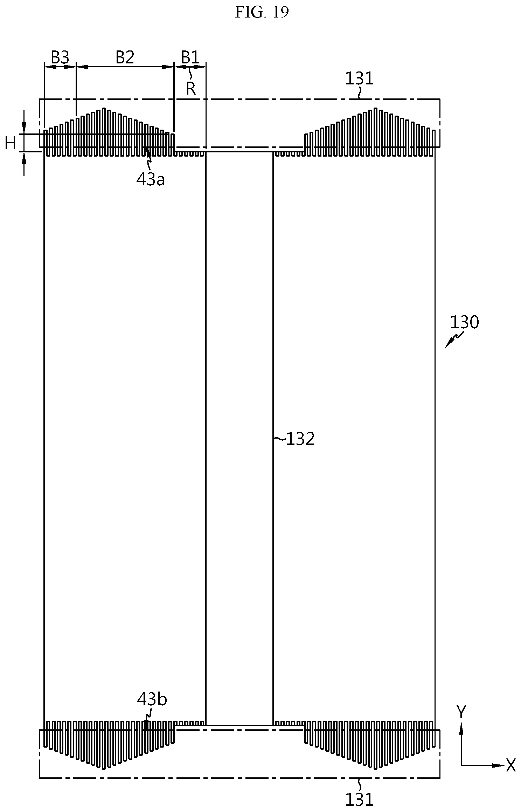

FIG. 19 is a cross-sectional view of the electrode assembly 130 according to another embodiment of the present disclosure, taken along the Y axis direction (the winding axis direction).

Referring to FIG. 19, when the electrode assembly 130 is compared with the electrode assembly 120 of FIG. 18, there is a difference in that the height of the outer circumferential uncoated region B3 has a gradually or stepwise decreasing pattern from the boundary between the outer circumferential uncoated region B3 and the intermediate uncoated region B2 toward the outermost side surface of the electrode assembly 130, and the remaining configuration is substantially the same.

This height change of the outer circumferential uncoated region B3 may be made by extending the step pattern (see FIG. 9) included in the intermediate uncoated region B2 to the outer circumferential uncoated region B3, and at the same time, gradually or stepwise reducing the height of the pattern as it goes to the outer circumference. Additionally, in another variation, the height change of the outer circumferential uncoated region B3 may be made by extending the segment structure of the intermediate uncoated region B2 to the outer circumferential uncoated region B3, and at the same time, gradually or stepwise reducing the height of the segment as it goes to the outer circumference.

In the electrode assembly 130, the height of the core-side uncoated region B 1 is smaller than the height of the intermediate uncoated region B2. Additionally, the bend length H of the uncoated region disposed at the innermost side in the intermediate uncoated region B2 is equal to or smaller than the radial length R of the core-side uncoated region B1.

Accordingly, when the intermediate uncoated region B2 is bent toward the core, the bent part does not block the cavity 132 in the core of the electrode assembly 120. When the cavity 132 is not blocked, it is not difficult to perform the electrolyte injection process and it is possible to improve the electrolyte solution injection efficiency. Additionally, it is possible to easily perform the welding process between the current collector plate of the negative electrode and the battery can by inserting the welding jig through the cavity 132.

The lower uncoated region 43b has the same structure as the upper uncoated region 43a. In a variation, the lower uncoated region 43b may have the conventional electrode plate structure or the electrode plate structures of other embodiments (variations).

The end 131 of the upper uncoated region 43a and the lower uncoated region 43b may be bent from the outer circumference toward the core of the electrode assembly 130. In this instance, the core-side uncoated region B1 is not substantially bent.

When the intermediate uncoated region B2 and the outer circumferential uncoated region B3 include the plurality of segments, it is possible to mitigate bending stress, thereby preventing tearing or abnormal deformation of the uncoated regions 43a, 43b near the bending point. Additionally, when the width and/or height and/or pitch of the segments is adjusted according to the numerical range of the above-described embodiment, as the segments bend toward the core, the segments overlap in multilayer enough to ensure the weld strength without forming an empty hole (gap) in the bend surface (the surface viewed from the Y axis).

The various electrode assembly structures according to the embodiments of the present disclosure may be applied to jelly-roll type cylindrical battery cells.

Preferably, the cylindrical battery cell may be, for example, a cylindrical battery cell having a form factor ratio (defined as a value obtained by dividing the diameter of the cylindrical battery cell by its height, i.e., a height (H)-to-diameter (Φ) ratio) of approximately more than 0.4.

Here, the form factor refers to values indicating the diameter and height of the cylindrical battery cell. The cylindrical battery cell according to an embodiment of the present disclosure may be, for example, a 46110 cell, a 48750 cell, a 48110 cell, a 48800 cell, a 46800 cell. In the numerical value indicating the form factor, the first two numbers indicate the diameter of the cell, the next two numbers indicate the height of the cell, and the last number 0 indicates a circular cross section of the cell.

In case that the electrode assembly having the tab-less structure is applied to the cylindrical battery cell having the form factor ratio of more than 0.4, the uncoated region may be easily torn by high stress applied in the radial direction when bending the uncoated region. Additionally, it is necessary to sufficiently increase the number of overlapping layers of the uncoated region to sufficiently ensure the weld strength and reduce the resistance when welding the current collector plate to the bend surface of the uncoated region. These requirements may be achieved by the electrode plate and the electrode assembly according to the embodiments (variations) of the present disclosure.

The battery cell according to an embodiment of the present disclosure may be a cylindrical battery cell having an approximately cylindrical shape, with the diameter of approximately 46 mm, the height of approximately 110 mm, and the form factor ratio of 0.418.

The battery cell according to another embodiment may be a cylindrical battery cell having an approximately cylindrical shape, with the diameter of approximately 48 mm, the height of approximately 75 mm, and the form factor ratio of 0.640.

The battery cell according to another embodiment may be a cylindrical battery cell having an approximately cylindrical shape, with the diameter of approximately 48 mm, the height of approximately 110 mm, and the form factor ratio of 0.418.

The battery cell according to another embodiment may be a cylindrical battery cell having an approximately cylindrical shape, with the diameter of approximately 48 mm, the height of approximately 80 mm, and the form factor ratio of 0.600.

The battery cell according to another embodiment may be a cylindrical battery cell having an approximately cylindrical shape, with the diameter of approximately 46 mm, the height of approximately 80 mm, and the form factor ratio of 0.575.

Conventionally, battery cells having the form factor ratio of about 0.4 or less have been used. That is, conventionally, for example, 18650 cell, 21700 cell and the like have been used. The 18650 cell has the diameter of approximately 18 mm, the height of approximately 65 mm and the form factor ratio of 0.277. The 21700 cell has the diameter of approximately 21 mm, the height of approximately 70 mm and the form factor ratio of 0.300.

Hereinafter, the cylindrical battery cell according to an embodiment of the present disclosure will be described in detail.

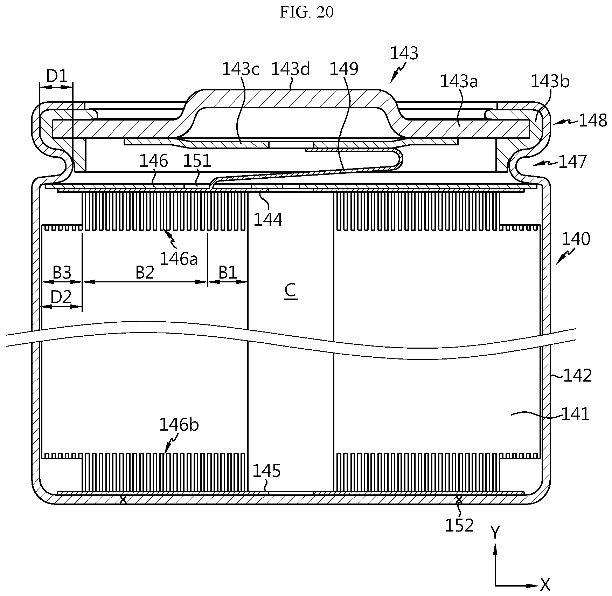

FIG. 20 is a cross-sectional view of the cylindrical battery cell 140 according to an embodiment of the present disclosure, taken along the Y axis direction.

Referring to FIG. 20, the cylindrical battery cell 140 according to an embodiment of the present disclosure includes the electrode assembly 141 including the first electrode plate, the separator and the second electrode plate, the battery can 142 accommodating the electrode assembly 141 and the sealing body 143 configured to seal up the open portion of the battery can 142.

The battery can 142 is a cylindrical container having a top open portion. The battery can 142 is made of a metal having conductive properties such as aluminum or steel. The battery can 142 accommodates the electrode assembly 141 in the internal space through the top open portion and also accommodates the electrolyte together.

The electrolyte may be a salt having a structure of A⁺B⁻. Here, A⁺ includes an alkali metal cation such as Li⁺, Na⁺, K⁺ or a combination thereof. Additionally, B⁻ includes at least one anion selected from the group consisting of F⁻, Cl⁻, Br, I⁻, NO₃⁻, N(CN)₂⁻, BF₄⁻, ClO₄⁻, AlO₄⁻, AlCl₄⁻, PF₆⁻, SbF₆⁻, AsF₆⁻, BF₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (FSO₂)₂N⁻; CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

Additionally, the electrolyte may be dissolved in an organic solvent. The organic solvent may include propylene carbonate (PC), ethylenecarbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), γ-butyrolactone or a mixture thereof.

The electrode assembly 141 may have a jelly-roll shape. As shown in FIG. 5, the electrode assembly 141 may be manufactured by winding a stack around the winding center C, the stack being formed by stacking the lower separator, the first electrode plate, the upper separator and the second electrode plate in a sequential order at least once.

The first electrode plate and the second electrode plate have opposite polarity. That is, when one is positive, the other is negative. At least one of the first electrode plate or the second electrode plate may have the electrode plate structure according to the above-described embodiments (variations). Additionally, the other one of the first electrode plate and the second electrode plate may have the conventional electrode plate structure or the electrode plate structures according to the embodiments (variations).

The uncoated region 146a of the first electrode plate and the uncoated region 146b of the second electrode plate protrude at the upper and lower parts of the electrode assembly 141, respectively. The first electrode plate has the electrode plate structure of the first embodiment (variation). Accordingly, the uncoated region 146a of the first electrode plate has a smaller height of the outer circumferential uncoated region B3 than the height of the other region. The outer circumferential uncoated region B3 is spaced a predetermined distance apart from the inner circumferential surface of the battery can 142, in particular, the beading portion 147. Accordingly, the outer circumferential uncoated region B3 of the first electrode plate does not contact the battery can 142 electrically connected to the second electrode plate, thereby preventing internal short circuits in the battery cell 140.

The uncoated region 146b of the second electrode plate has the same height. In a variation, the uncoated region 146b of the second electrode plate may have the same structure as the uncoated region 146a of the first electrode plate. In another variation, the uncoated region 146b of the second electrode plate may selectively have the uncoated region structures of the electrode plates according to the embodiments (variations).

The sealing body 143 may include a cap plate 143a, a first gasket 143b configured to provide sealability between the cap plate 143a and the battery can 142 and having insulating properties and a connection plate 143c electrically and mechanically coupled to the cap plate 143a.

The cap plate 143a is the component made of a metal having conductive properties, and covers the top open portion of the battery can 142. The cap plate 143a is electrically connected to the uncoated region 146a of the first electrode plate, and is electrically insulated from the battery can 142 through the first gasket 143b. Accordingly, the cap plate 143a may act as a first electrode terminal of the cylindrical battery cell 140.

The cap plate 143a is placed on the beading portion 147 of the battery can 142, and fixed by a crimping portion 148. The first gasket 143b may be interposed between the cap plate 143a and the crimping portion 148 to ensure sealability of the battery can 142 and electrically insulate the battery can 142 from the cap plate 143a. The cap plate 143a may have a protrusion 143d that protrudes upward from the center.

The battery can 142 is electrically connected to the uncoated region 146b of the second electrode plate. Accordingly, the battery can 142 has the same polarity as the second electrode plate. In case that the second electrode plate has the negative polarity, the battery can 142 has the negative polarity.

The battery can 142 has the beading portion 147 and the crimping portion 148 on top. The beading portion 147 is formed by beading the outer circumferential surface of the battery can 142. The beading portion 147 may prevent the electrode assembly 141 received in the battery can 142 from slipping through the top open portion of the battery can 142, and act as a support on which the sealing body 143 is placed.

The inner circumferential surface of the beading portion 147 is spaced a predetermined distance apart from the outer circumferential uncoated region B3 of the first electrode plate. More specifically, the lower end of the inner circumferential surface of the beading portion 147 is spaced the predetermined distance apart from the outer circumferential uncoated region B3 of the first electrode plate. Additionally, due to the low height of the outer circumferential uncoated region B3, the outer circumferential uncoated region B3 is not substantially affected when beading the battery can 12 to form the beading portion 147. Accordingly, the outer circumferential uncoated region B3 is not pressed by the other component such as the beading portion 147, thereby preventing partial deformation of the electrode assembly 141 and preventing short circuits in the cylindrical battery cell 140.

Preferably, when the beading depth of the beading portion 147 is defined as D1, and the radial length from the inner circumferential surface of the battery can 142 to the boundary between the outer circumferential uncoated region B3 and the intermediate uncoated region B2 is defined as D2, a relationship equation D1 ≤ D2 may be satisfied. In this case, it is possible to prevent damage to the outer circumferential uncoated region B3 when beading the battery can 142 to form the beading portion 147.

The crimping portion 148 is present on the beading portion 147. The crimping portion 148 is extended and bent to cover the outer circumferential surface of the cap plate 143a on the beading portion 147 and parts of the upper surface of the cap plate 143a.

The cylindrical battery cell 140 may further comprise a first current collector plate 144 and/or a second current collector plate 145 and/or an insulator 146.

The first current collector plate 144 is coupled to the top of the electrode assembly 141. The first current collector plate 144 is made of a metal having conductive properties such as aluminum, copper and nickel and is electrically connected to the uncoated region 146a of the first electrode plate. A lead 149 may be connected to the first current collector plate 144. The lead 149 may be extended upward from the electrode assembly 141 and coupled to the connection plate 143c or directly coupled to the lower surface of the cap plate 143a. The coupling between the lead 149 and other component may be performed through welding.

Preferably, the first current collector plate 144 may be integrally formed with the lead 149. In this case, the lead 149 may have an elongated plate shape extended outward from the center of the first current collector plate 144.

The first current collector plate 144 may have a plurality of irregularities (not shown) radially formed on the lower surface. When the radial irregularities are included, the irregularities may be pushed on the uncoated region 146a of the first electrode plate by pressing the first current collector plate 144.

The first current collector plate 144 is coupled to the end of the uncoated region 146a of the first electrode plate. The coupling between the uncoated region 146a and the first current collector plate 144 may be performed, for example, by laser welding. The laser welding may be performed by partially melting the material of the current collector plate. In a variation, the welding between the first current collector plate 144 and the uncoated region 146a may be performed with solders interposed therebetween. In this case, the solders may have lower melting point than the first current collector plate 144 and the uncoated region 146a. The laser welding may be replaced with resistance welding, ultrasonic welding or the like.

The second current collector plate 145 may be coupled to the lower surface of the electrode assembly 141. One surface of the second current collector plate 145 may be coupled to the uncoated region 146b of the second electrode plate by welding, and the opposite surface may be coupled to the inner bottom surface of the battery can 142 by welding. The coupling structure between the second current collector plate 145 and the uncoated region 146b of the second electrode plate may be substantially the same as the coupling structure between the first current collector plate 144 and the uncoated region 146a of the first electrode plate.

The uncoated regions 146a, 146b are not limited to the shown structure. Accordingly, in addition to the conventional uncoated region structure, the uncoated regions 146a, 146b may selectively have the uncoated region structures of the electrode plates according to the embodiments (variations).

The insulator 146 may cover the first current collector plate 144. The insulator 146 may cover the first current collector plate 144 on the upper surface of the first current collector plate 144, thereby preventing the direct contact between the first current collector plate 144 and the inner circumferential surface of the battery can 142.

The insulator 146 has a lead hole 151 through which the lead 149 extended upward from the first current collector plate 144 is drawn. The lead 149 is drawn upward through the lead hole 151 and coupled to the lower surface of the connection plate 143c or the lower surface of the cap plate 143a.

The edge area of the insulator 146 may be present between the first current collector plate 144 and the beading portion 147 to fix an assembly of the electrode assembly 141 and the first current collector plate 144. Accordingly, the assembly of the electrode assembly 141 and the first current collector plate 144 may limit the movement of the battery cell 140 in the heightwise direction, thereby improving the assembly stability of battery cell 140.

The insulator 146 may be made of a polymer resin having insulating properties. In an example, the insulator 146 may be made of polyethylene, polypropylene, polyimide or polybutyleneterephthalate.

The battery can 142 may further include a venting portion 152 in the lower surface. The venting portion 152 corresponds to an area having a smaller thickness than the surrounding area in the lower surface of the battery can 142. The venting portion 152 is structurally weaker than the surrounding area. Accordingly, when the internal pressure rises above a predetermined level due to a fault or failure in the cylindrical battery cell 140, the venting portion 152 may rupture to force gas generated in the battery can 142 out.

The venting portion 152 may be continuously or discontinuously formed in a circular pattern on the lower surface of the battery can 142. In a variation, the venting portion 152 may be formed in a straight line pattern or any other pattern.

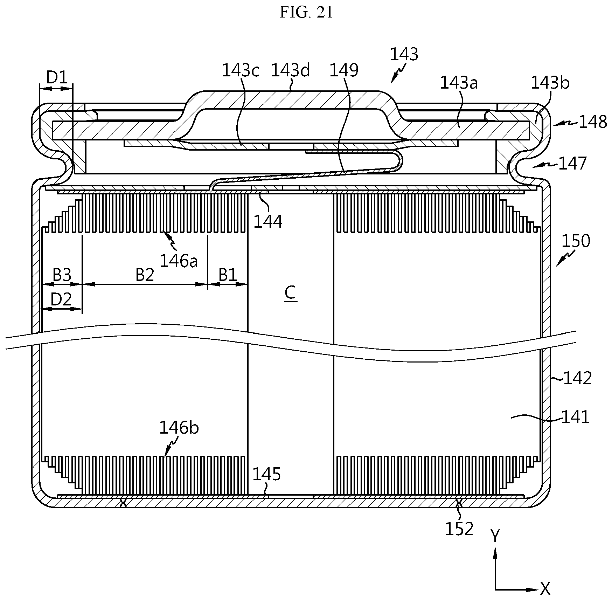

FIG. 21 is a cross-sectional view of the cylindrical battery cell 150 according to another embodiment of the present disclosure, taken along the Y axis direction.

Referring to FIG. 21, when the cylindrical battery cell 150 is compared with the cylindrical battery cell 140 of FIG. 20, except that the electrode plate structure of the second embodiment (variation) is employed in the uncoated region 146a of the first electrode plate, the remaining configuration is substantially the same.

Referring to FIG. 21, in the uncoated region 146a of the first electrode plate, the height of the outer circumferential uncoated region B3 may gradually or stepwise decrease as it goes toward the inner circumferential surface of the battery can 142. Preferably, an imaginary line connecting the topmost ends of the outer circumferential uncoated region B3 may have the identical or similar shape to the inner circumferential surface of the beading portion 147.

The outer circumferential uncoated region B3 has a slope surface. Accordingly, it is possible to prevent damage to the outer circumferential uncoated region B3 due to compression by the beading portion 147 when beading the battery can 142 to form the beading portion 147. Additionally, it is possible to suppress internal short circuits caused by the contact between the outer circumferential uncoated region B3 and the battery can 142 having the opposite polarity.

The remaining configuration of the cylindrical battery cell 150 is substantially the same as the above-described embodiment (variation).

The uncoated regions 146a, 146b are not limited to the shown structure. Accordingly, in addition to the conventional uncoated region structure, the uncoated regions 146a, 146b may selectively have the uncoated region structures of the electrode plates according to the embodiments (variations).

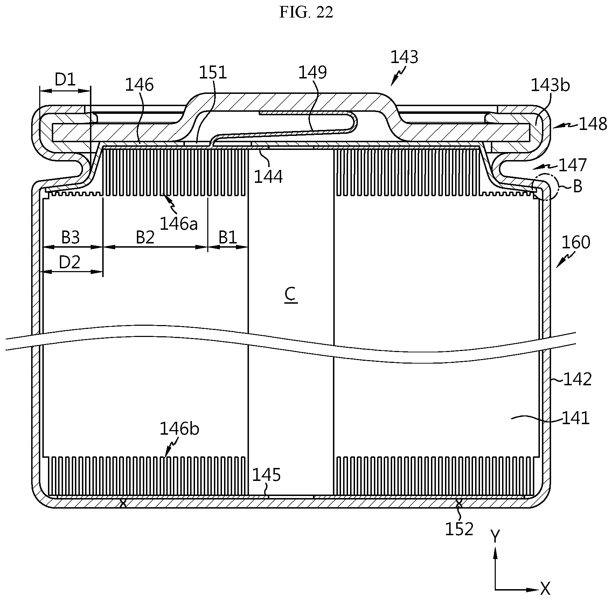

FIG. 22 is a cross-sectional view of the cylindrical battery cell 160 according to another embodiment of the present disclosure, taken along the Y axis direction.

Referring to FIG. 22, when the cylindrical battery cell 160 is compared with the above-described cylindrical battery cells 140, 150, there is a difference in that the cylindrical battery cell 160 has a structure in which the lead 149 connected to the first current collector plate 144 is directly connected to the cap plate 143a of the sealing body 143 through the lead hole 151 of the insulator 146 and the insulator 146 and the first current collector plate 144 is in close contact with the lower surface of the cap plate 143a, and the remaining configuration is substantially the same.

In the cylindrical battery cell 160, the diameter of the first current collector plate 144 and the outermost side diameter of the intermediate uncoated region B2 are smaller than the minimum inner diameter of the battery can 142. Additionally, the diameter of the first current collector plate 144 may be equal to or larger than the outermost side diameter of the intermediate uncoated region B2.

Specifically, the minimum inner diameter of the battery can 142 may correspond to the inner diameter of the battery can 142 at the location at which the beading portion 147 is formed. In this instance, the dimeter of the first current collector plate 144 and the outermost side diameter of the intermediate uncoated region B2 is smaller than the inner diameter of the battery can 142 at the location at which the beading portion 147 is formed. Additionally, the diameter of the first current collector plate 144 may be equal to or larger than the outermost side diameter of the intermediate uncoated region B2. The edge area of the insulator 146 may be bent downward and present between the outer circumferential uncoated region B3 and the beading portion 147 to fix the assembly of the electrode assembly 141 and the first current collector plate 144.

Preferably, the insulator 146 includes a region that covers the outer circumferential uncoated region B3 and a region that covers the first current collector plate 144, and a region connecting the two regions may have a curved shape corresponding to the curved shape of the beading portion 147. The insulator 146 may insulate the outer circumferential uncoated region B3 from the inner circumferential surface of the beading portion 147 and the first current collector plate 144 from the inner circumferential surface of the beading portion 147 at the same time.

The first current collector plate 144 may be disposed higher than the lower end of the beading portion 147, and may be coupled to the core-side uncoated region B1 and the intermediate uncoated region B2. In this instance, the beading depth D1 of the beading portion 147 is equal to or smaller than the distance D2 from the inner circumferential surface of the battery can 142 to the boundary between the outer circumferential uncoated region B3 and the intermediate uncoated region B2. Accordingly, the core-side uncoated region B 1 and the intermediate uncoated region B2 and the first current collector plate 144 coupled to them may be disposed higher than the lower end of the beading portion 147. The lower end of the beading portion 147 refers to the bending point B between a part of the battery can 142 accommodating the electrode assembly 141 and the beading portion 147.

Since the core-side uncoated region B1 and the intermediate uncoated region B2 occupy the internal space of the beading portion 147 in the radius direction, it is possible to minimize the empty space between the electrode assembly 141 and the cap plate 143a. Additionally, the connection plate 143c disposed in the empty space between the electrode assembly 141 and the cap plate 143a is omitted. Accordingly, the lead 149 of the first current collector plate 144 may be directly coupled to the lower surface of the cap plate 143a. According to the above-described structure, it is possible to reduce the empty space in the battery cell, and maximize the energy density as much as the reduced empty space.

In the cylindrical battery cell 160, the first current collector plate 144 and the second current collector plate 145 may be welded to the ends of the uncoated regions 146a, 146b, respectively, in the same way as the above-described embodiment.

The uncoated regions 146a, 146b are not limited to the shown structure. Accordingly, in addition to the conventional uncoated region structure, the uncoated regions 146a, 146b may selectively have the uncoated region structures of the electrode plates according to the embodiments (variations).

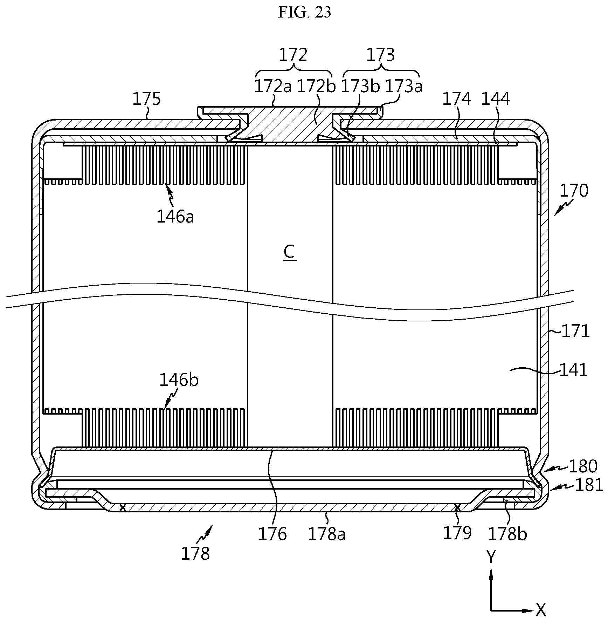

FIG. 23 is a cross-sectional view of the cylindrical battery cell 170 according to another embodiment of the present disclosure, taken along the Y axis.

Referring to FIG. 23, the cylindrical battery cell 170 has substantially the same structure of the electrode assembly as the cylindrical battery cell 140 shown in FIG. 20, and is different in the remaining structure except the electrode assembly.

Specifically, the cylindrical battery cell 170 includes the battery can 171 having a rivet terminal 172 installed therethrough. The rivet terminal 172 is installed in the closed surface (the upper surface in the drawing) of the battery can 171. The rivet terminal 172 is riveted to the through-hole of the battery can 171 with a second gasket 173 having insulating properties interposed therebetween. The rivet terminal 172 is exposed in the opposite direction to the gravity direction.

The rivet terminal 172 includes a terminal exposure portion 172a and a terminal insertion portion 172b. The terminal exposure portion 172a is exposed through the closed surface of the battery can 171. The terminal exposure portion 172a may be disposed at approximately the center of the closed surface of the battery can 171. The maximum diameter of the terminal exposure portion 172a may be larger than the maximum diameter of the through-hole of the battery can 171. The terminal insertion portion 172b may be electrically connected to the uncoated region 146a of the first electrode plate through approximately the center of the closed surface of the battery can 171. The terminal insertion portion 172b may be rivet coupled to the inner surface of the battery can 171. That is, the end of the terminal insertion portion 172b may be bent toward the inner surface of the battery can 171. The maximum diameter of the end of the terminal insertion portion 172b may be larger than the maximum diameter of the through-hole of the battery can 171.

The bottom surface of the terminal insertion portion 172b may be welded to the first current collector plate 144 connected to the uncoated region 146a of the first electrode plate. An insulation cap 174 made of an insulation material may be interposed between the first current collector plate 144 and the inner surface of the battery can 171. The insulation cap 174 covers the top of the first current collector plate 144 and the top edge of the electrode assembly 141. Accordingly, it is possible to prevent short circuits caused by the contact between the outer circumferential uncoated region B3 of the electrode assembly 141 and the inner surface of the battery can 171 having the opposite polarity. The terminal insertion portion 172b of the rivet terminal 172 may be welded to the first current collector plate 144 through the insulation cap 174.

The second gasket 173 is interposed between the battery can 171 and the rivet terminal 172 to prevent the electrical contact between the battery can 171 and the rivet terminal 172 having the opposite polarities. Accordingly, the upper surface of the battery can 171 having an approximately flat shape may act as a second electrode terminal of the cylindrical battery cell 170.

The second gasket 173 includes a gasket exposure portion 173a and a gasket insertion portion 173b. The gasket exposure portion 173a is interposed between the terminal exposure portion 172a of the rivet terminal 172 and the battery can 171. The gasket insertion portion 173b is interposed between the terminal insertion portion 172b of the rivet terminal 172 and the battery can 171. When riveting the terminal insertion portion 172b, the gasket insertion portion 173b may deform together and come into close contact with the inner surface of the battery can 171. The second gasket 173 may be made of, for example, a polymer resin having insulating properties.

The gasket exposure portion 173a of the second gasket 173 may be extended to cover the outer circumferential surface of the terminal exposure portion 172a of the rivet terminal 172. When the second gasket 173 covers the outer circumferential surface of the rivet terminal 172, it is possible to prevent short circuits in the process of coupling an electrical connection component, for example, a busbar, to the upper surface of the battery can 171 and/or the rivet terminal 172. Although not shown in the drawing, the gasket exposure portion 173a may be extended to cover the outer circumferential surface of the terminal exposure portion 172a together with parts of the upper surface.

When the second gasket 173 is made of a polymer resin, the second gasket 173 may be coupled to the battery can 171 and the rivet terminal 172 by heat welding. In this case, it is possible to enhance sealibility at the coupling interface between the second gasket 173 and the rivet terminal 172 and the coupling interface between the second gasket 173 and the battery can 171. Meanwhile, when the gasket exposure portion 173a of the second gasket 173 is extended to the upper surface of the terminal exposure portion 172a, the rivet terminal 172 may be integrally coupled to the second gasket 173 by insert molding.

The remaining area 175 except the area occupied by the rivet terminal 172 and the second gasket 173 in the upper surface of the battery can 171 corresponds to the second electrode terminal having the opposite polarity to the rivet terminal 172.

The second current collector plate 176 is coupled to the bottom of the electrode assembly 141. The second current collector plate 176 is made of a metal having conductive properties, such as aluminum, steel, copper and nickel, and is electrically connected to the uncoated region 146b of the second electrode plate.

Preferably, the second current collector plate 176 is electrically connected to the battery can 171. To this end, at least part of the edge of the second current collector plate 176 may be fixed between the inner surface of the battery can 171 and the first gasket 178b. In an example, at least part of the edge of the second current collector plate 176 may be secured to the beading portion 147 by welding when supported on the lower end surface of the beading portion 147 at the lower end of the battery can 171. In a variation, at least part of the edge of the second current collector plate 176 may be directly welded to the inner walls of the battery can 171.

The second current collector plate 176 may have a plurality of irregularities (not shown) radially formed on a surface opposite the uncoated region 146b. When the irregularities are formed, the irregularities may be pushed on the uncoated region 146b by pressing the second current collector plate 176.

Preferably, the second current collector plate 176 and the end of the uncoated region 146b may be coupled by welding, for example, laser welding.

The sealing body 178 which seals up the lower open end of the battery can 171 includes the cap plate 178a and the first gasket 178b. The first gasket 178b electrically separates the cap plate 178a from the battery can 171. The crimping portion 181 fixes the edge of the cap plate 178a and the first gasket 178b together. The cap plate 178a has the venting portion 179. The venting portion 179 is substantially the same as the above-described embodiment (variation).

Preferably, the cap plate 178a is made of a metal having conductive properties. However, since the first gasket 178b is interposed between the cap plate 178a and the battery can 171, the cap plate 178a has no electrical polarity. The sealing body 178 performs the function to seal up the open end on bottom of the battery can 171 and force gas out when the internal pressure of the battery cell 170 rises above the threshold.

Preferably, the rivet terminal 172 electrically connected to the uncoated region 146a of the first electrode plate is used as the first electrode terminal. Additionally, the part 175 except the rivet terminal 172 on the upper surface of the battery can 171 electrically connected to the uncoated region 146b of the second electrode plate through the second current collector plate 176 is used as the second electrode terminal having the opposite polarity to the first electrode terminal. As described above, when the two electrode terminals are disposed at the upper part of the cylindrical battery cell 170, it is possible to place the electrical connection component, for example, a busbar on only one side of the cylindrical battery cell 170. This may lead to the simple design of battery pack structure and improved energy density. Additionally, since the part 175 used as the second electrode terminal has an approximately flat shape, it is possible to ensure a sufficient joint area in joining the electrical connection component, for example, a busbar. Accordingly, the cylindrical battery cell 170 may reduce the resistance of the electrical connection component at the joined part to a desirable level.

Meanwhile, the structure of the electrode assembly 141 and the uncoated region structure are not limited to the shown structure, and may be replaced with the structures of the above-described embodiments (variations).

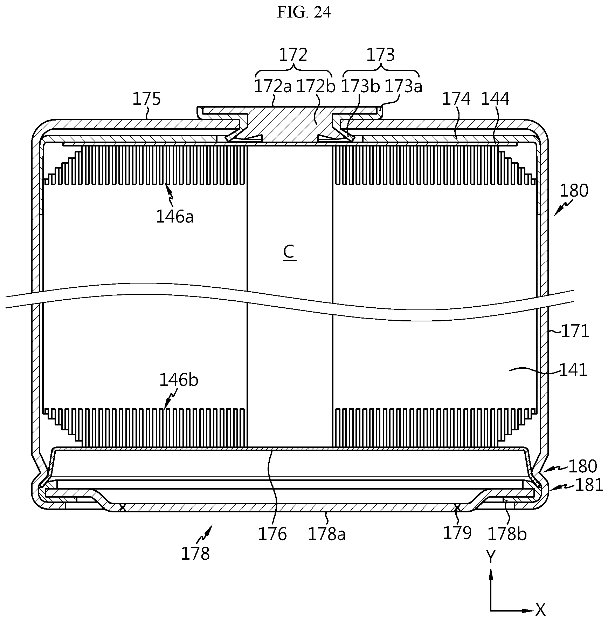

FIG. 24 is a cross-sectional view of the cylindrical battery cell 180 according to another embodiment of the present disclosure, taken along the Y axis.

Referring to FIG. 24, the cylindrical battery cell 180 has substantially the same structure of the electrode assembly 141 as the cylindrical battery cell 150 shown in FIG. 21, and the remaining configuration except the electrode assembly 141 is substantially the same as the cylindrical battery cell 170 shown in FIG. 23.

Accordingly, the configuration of the cylindrical battery cells 150, 170 according to the embodiment (variation) may be equally applied to the cylindrical battery cell 180.

Additionally, the structure of the electrode assembly 141 and the uncoated region structure are not limited to the shown structure, and may be replaced with the structures of the above-described embodiments (variations).

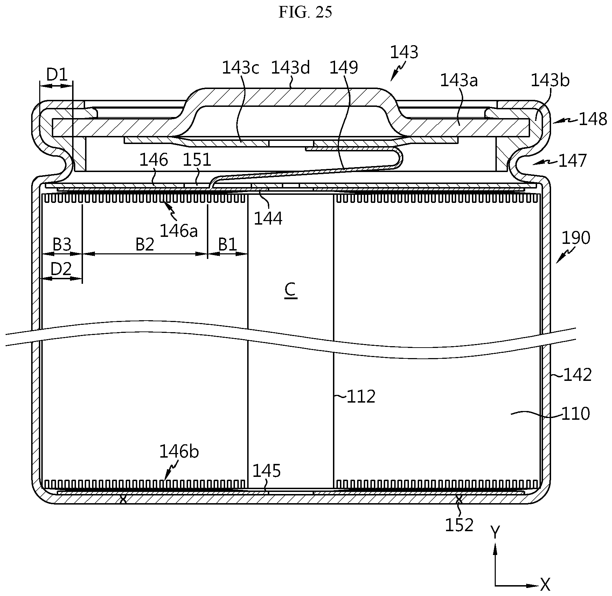

FIG. 25 is a cross-sectional view of the cylindrical battery cell 190 according to an embodiment of the present disclosure, taken along the Y axis.

Referring to FIG. 25, the cylindrical battery cell 190 includes the electrode assembly 110 shown in FIG. 17, and the remaining configuration except the electrode assembly 110 is substantially the same as he cylindrical battery cell 140 shown in FIG. 20.

Referring to FIG. 25, the uncoated regions 146a, 146b of the electrode assembly 110 are bent from the outer circumference toward the core. In this instance, the core-side uncoated region B1 has a smaller height than the other region and is not substantially bent. The first current collector plate 144 may be welded to the bend surface of the uncoated region 146a, and the second current collector plate 145 may be welded to the bend surface of the uncoated region 146b. The bend surface may be formed at each of the upper and lower parts of the electrode assembly 110 as the uncoated regions 146a, 146b overlap in multilayer when they are bent.

The electrode assembly 110 has a smaller height of the core-side uncoated region B1 than the other region. Additionally, as shown in FIG. 17, the bend length H of the uncoated region disposed at the innermost side in the intermediate uncoated region B2 is equal to or smaller than the radial length R of the core-side uncoated region B1.

Accordingly, when the uncoated region 46a is bent toward the core, the cavity 112 in the core of the electrode assembly 110 is not blocked and may be open upward (see the dotted circle).

When the cavity 112 is not blocked, it is not difficult to perform the electrolyte injection process and it is possible to improve the electrolyte solution injection efficiency. Additionally, it is possible to easily perform the welding process between the second current collector plate 145 and the battery can 142 by inserting the welding jig through the cavity 112.

In case that the uncoated regions 146a, 146b have the segment structure, when the width and/or height and/or pitch of the segments is adjusted to satisfy the numerical range of the above-described embodiment, as the segments bend, the segments overlap in multilayer enough to ensure the weld strength without forming an empty space (gap) in the bend surface.

The structure of the uncoated regions 146a, 146b may be changed to the structures according to the above-described embodiments (variations) in place of the structure shown in the drawing. Additionally, the conventional uncoated region structure may be applied to any one of the uncoated regions 146a, 146b.

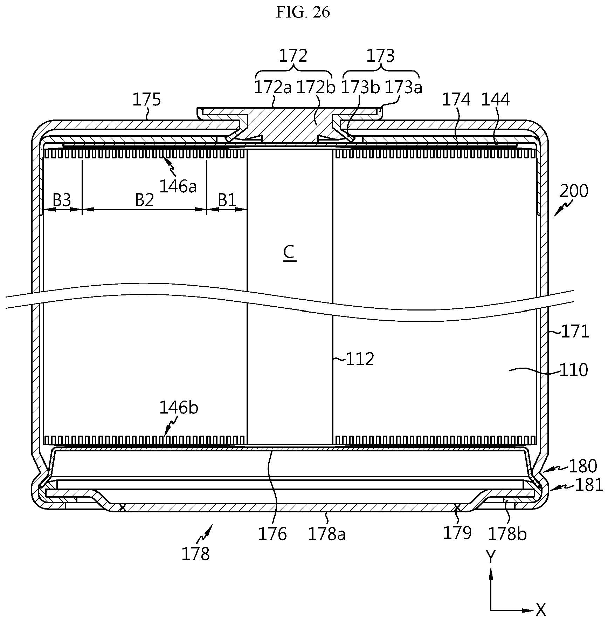

FIG. 26 is a cross-sectional view of the cylindrical battery cell 200 according to another embodiment of the present disclosure, taken along the Y axis.

Referring to FIG. 26, the cylindrical battery cell 200 includes the electrode assembly 110 shown in FIG. 17, and the remaining configuration except the electrode assembly 110 is substantially the same as the cylindrical battery cell 180 shown in FIG. 25.

Referring to FIG. 26, the uncoated regions 146a, 146b of the electrode assembly 110 are bent from the outer circumference toward the core. In this instance, the core-side uncoated region B1 has a smaller height than the other region and is not substantially bent. The first current collector plate 144 may be welded to the bend surface of the uncoated region 146a, and the second current collector plate 176 may be welded to the bend surface of the uncoated region 146b.

The electrode assembly 110 has a smaller height of the core-side uncoated region B 1 than the other region. Additionally, as shown in FIG. 17, the bend length H of the uncoated region disposed at the innermost side in the intermediate uncoated region B2 is equal to or smaller than the radial length R of the core-side uncoated region B1.

Accordingly, when the uncoated regions 146a, 146b are bent toward the core, the cavity 112 in the core of the electrode assembly 110 is not blocked and may be open upward (see the dotted circle).

When the cavity 112 is not blocked, it is not difficult to perform the electrolyte injection process and it is possible to improve the electrolyte solution injection efficiency. Additionally, it is possible to easily perform the welding process between the second current collector plate 176 and the battery can 171 by inserting the welding jig through the cavity 112.

In case that the uncoated regions 146a, 146b have the segment structure, when the width and/or height and/or pitch of the segments is adjusted to satisfy the numerical range of the above-described embodiment, as the segments bend, the segments overlap in multilayer enough to ensure the weld strength without forming an empty space (gap) in the bend surface.

The structure of the uncoated regions 146a, 146b may be changed to the structures according to the above-described embodiments (variations) in place of the structure shown in the drawing. Additionally, the conventional uncoated region structure may be applied to any one of the uncoated regions 146a, 146b.

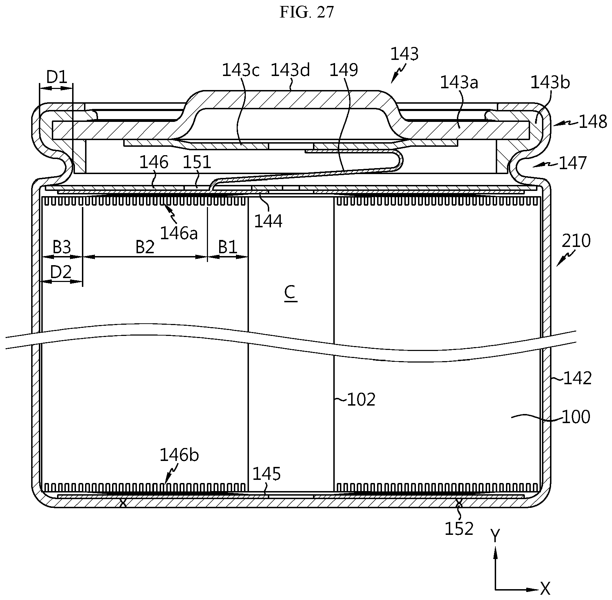

FIG. 27 is a cross-sectional view of the cylindrical battery cell 210 according to another embodiment of the present disclosure, taken along the Y axis.

Referring to FIG. 27, the cylindrical battery cell 210 includes the electrode assembly 100 shown in FIG. 16, and the remaining configuration except the electrode assembly 100 is substantially the same as the cylindrical battery cell 140 shown in FIG. 20.

Preferably, the uncoated regions 146a, 146b of the electrode assembly 100 are bent from the outer circumference toward the core. In this instance, the core-side uncoated region B1 and the outer circumferential uncoated region B3 of the uncoated region 146a have a smaller height than the other region and are not substantially bent. The same is true of the uncoated region 146b. The first current collector plate 144 may be welded to the bend surface of the uncoated region 146a, and the second current collector plate 145 may be welded to the bend surface of the uncoated region 146b.

The height of the core-side uncoated region B 1 is smaller than the intermediate uncoated region B2. Additionally, as shown in FIG. 16, the bend length H of the uncoated region disposed at the innermost side in the intermediate uncoated region B2 is equal to or smaller than the radial length R of the core-side uncoated region B 1.

Accordingly, when the uncoated regions 146a, 146b are bent toward the core, the cavity 102 in the core of the electrode assembly 100 is not blocked and may be open upward (see the dotted circle).

When the cavity 102 is not blocked, it is not difficult to perform the electrolyte injection process and it is possible to improve the electrolyte solution injection efficiency. Additionally, it is possible to easily perform the welding process between the second current collector plate 145 and the battery can 142 by inserting the welding jig through the cavity.

Additionally, the height of the outer circumferential uncoated region B3 is smaller than the intermediate uncoated region B2. Accordingly, when the uncoated region 146a is bent, the outer circumferential uncoated region B3 is not substantially bent. Additionally, since the outer circumferential uncoated region B3 is spaced a sufficient distance apart from the beading portion 147, thereby preventing damage to the outer circumferential uncoated region B3 during the beading to form the beading portion 147.

In case that the uncoated regions 146a, 146b have the segment structure, when the width and/or height and/or pitch of the segments is adjusted to satisfy the numerical range of the above-described embodiment, as the segments bend, the segments overlap in multilayer enough to ensure the weld strength without forming an empty space (gap) in the bend surface.

The structure of the uncoated regions 146a, 146b may be changed to the structures according to the above-described embodiments (variations) in place of the shown structure. Additionally, the conventional uncoated region structure may be applied to any one of the uncoated regions 146a, 146b.

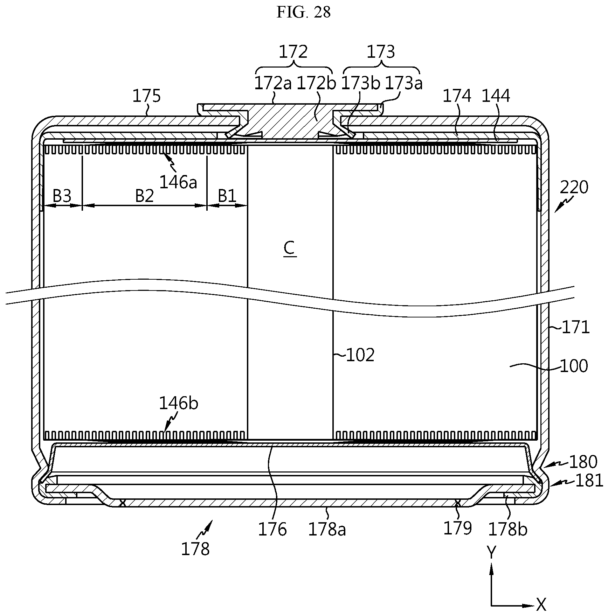

FIG. 28 is a cross-sectional view of the cylindrical battery cell 220 according to an embodiment of the present disclosure, taken along the Y axis.

Referring to FIG. 28, the cylindrical battery cell 220 includes the electrode assembly 100 shown in FIG. 17, and the remaining configuration except the electrode assembly 100 is substantially the same as the cylindrical battery cell 180 shown in FIG. 24.

Preferably, the uncoated regions 146a, 146b of the electrode assembly 100 are bent from the outer circumference toward the core. In this instance, the core-side uncoated region B 1 of the uncoated region 146a has a smaller height than the other region and is not substantially bent. The same is true of the uncoated region 146b. The first current collector plate 144 may be welded to the bend surface of the uncoated region 146a, and the second current collector plate 176 may be welded to the bend surface of the uncoated region 146b.

The electrode assembly 100 has a smaller height of the core-side uncoated region B 1 than the intermediate uncoated region B2. Additionally, as shown in FIG. 16, the bend length H of the uncoated region disposed at the innermost side in the intermediate uncoated region B2 is equal to or smaller than the radial length R of the core-side uncoated region B1.

Accordingly, when the uncoated region 146a is bent toward the core, the cavity 102 in the core of the electrode assembly 100 is not blocked and may be open upward (see the dotted circle).

When the cavity 102 is not blocked, it is not difficult to perform the electrolyte injection process and it is possible to improve the electrolyte solution injection efficiency. Additionally, it is possible to easily perform the welding process between the second current collector plate 176 and the battery can 171 by inserting the welding jig through the cavity 102.

Additionally, the outer circumferential uncoated region B3 of the uncoated region 146a has a smaller height than the intermediate uncoated region B2. Accordingly, when the uncoated region 146a is bent, the outer circumferential uncoated region B3 is not substantially bent. This is the same for the uncoated region 146b.

In case that the uncoated regions 146a, 146b have the segment structure, when the width and/or height and/or pitch of the segments is adjusted to satisfy the numerical range of the above-described embodiment, as the segments bend, the segments overlap in multilayer enough to ensure the weld strength without forming an empty space (gap) in the bend surface.

The structure of the uncoated regions 146a, 146b may be changed to the structures according to the above-described embodiments (variations) in place of the shown structure. Additionally, the conventional uncoated region structure may be applied to any one of the uncoated regions 146a, 146b.

The cylindrical battery cells according to the above-described embodiments (variations) may be used to manufacture a battery pack.

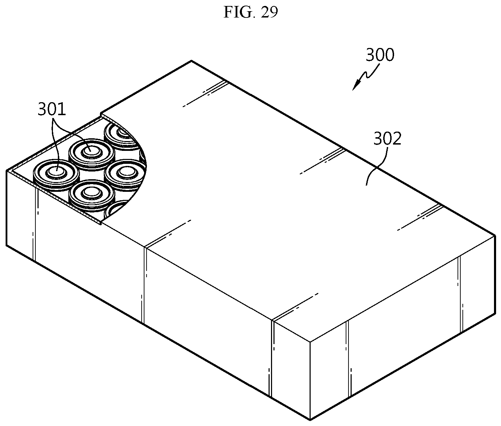

FIG. 29 is a diagram schematically showing the configuration of the battery pack according to an embodiment of the present disclosure.

Referring to FIG. 29, the battery pack 300 according to an embodiment of the present disclosure includes an assembly including the cylindrical battery cells 301 electrically connected to each other and a pack housing 302 accommodating the assembly. The cylindrical battery cell 301 may be any one of the battery cells according to the above-described embodiments (variations). For convenience of illustration, the illustration of the components such as a busbar for electrical connection of the cylindrical battery cells 301, a cooling unit and an external terminal is omitted.

The battery pack 300 may be mounted in a vehicle. The vehicle may be, for example, an electric vehicle, a hybrid electric vehicle or a plugin hybrid electric vehicle. The vehicle includes a 4-wheeled vehicle or a 2-wheeled vehicle.

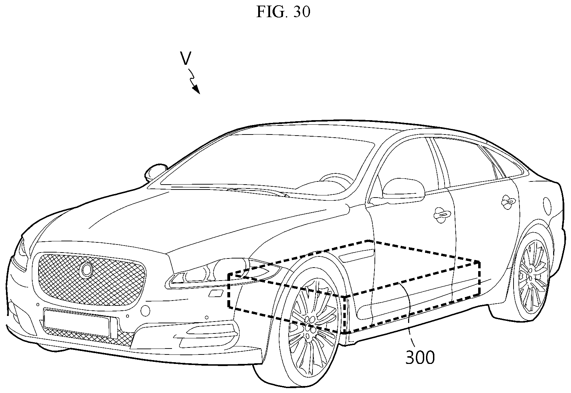

FIG. 30 is a diagram illustrating the vehicle including the battery pack 300 of FIG. 29.

Referring to FIG. 30, the vehicle V according to an embodiment of the present disclosure includes the battery pack 300 according to an embodiment of the present disclosure. The vehicle V operates using the power supplied from the battery pack 300 according to an embodiment of the present disclosure.

According to the present disclosure, it is possible to reduce the internal resistance of the cylindrical battery cell and increase the energy density by using the uncoated region protruding at the upper and lower parts of the electrode assembly as the electrode tab.

According to another aspect of the present disclosure, it is possible to improve the uncoated region structure of the electrode assembly to prevent interferences between the electrode assembly and the inner circumferential surface of the battery can in the process of forming the beading portion of the battery can, thereby preventing short circuits in the cylindrical battery cell caused by partial deformation of the electrode assembly.

According to another aspect of the present disclosure, it is possible to prevent tearing of the uncoated region near the bending point when bending the uncoated region and sufficiently increase the number of overlapping layers of the uncoated region by improving the uncoated region structure of the electrode assembly, thereby improving the weld strength.

According to another aspect of the present disclosure, it is possible to prevent the cavity in the core of the electrode assembly from being blocked when bending the uncoated region by improving the funcoated region structure adjacent to the core of the electrode assembly, thereby easily performing the electrolyte solution injection process and the welding process of the battery can and the current collector plate.

According to another aspect of the present disclosure, it is possible to provide the cylindrical battery cell with low internal resistance, reduced risk of internal short circuit and improved weld strength of the current collector plate and the uncoated region, and the battery pack and the vehicle comprising the same.

Although the present disclosure has been hereinabove described with regard to a limited of embodiments and drawings, the present disclosure is not limited thereto and a variety of changes and modifications may be made by those skilled in the art without departing from the technical aspect of the present disclosure and the scope of the appended claims and their equivalent.

### Example 1

### (1) Manufacture of separator

About 5 weight% of a polyvinylidenefluoride-hexafluoropropylene (PVdF-HFP) copolymer is added to tetrahydrofuran (THF) and dissolved at the temperature of 50°C for about 12 hours or more to prepare a polymer solution. BaTiO₃ powder having the particle size of about 400 nm is added to the polymer solution such that the total solids is 20 weight%, and dispersed to prepare a mixed solution (BaTiO₃/ PVdF-HFP = 80:20 (a weight ratio)). The prepared mixed solution is coated on two surfaces of a porous polymer substrate made of polypropylene using a doctor blade method. After the coating, the THF is dried to form a porous coating layer on the two surfaces of the porous polymer substrate.

Subsequently, 80 parts by weight of Al₂O₃ as fillers for the insulation coating layer, 20 parts by weight of polyvinylidenefluoride (PVdF) as a binder for the insulation coating layer and tetrahydrofuran as a solvent (a dispersion medium) are added to prepare to prepare a composition for the insulation coating layer containing 20 weight% solids. The prepared composition for the insulation coating layer is coated at two ends of the porous coating layer on the two surfaces of the porous polymer substrate, and dried to manufacture a separator having the insulation coating layer.

In this instance, the width of the insulation coating layer is 1.25 mm, and the height is 0.3 *µ*m. The thickness of the porous polymer substrate is 10 *µ*m, and the thickness of the porous coating layer on each of the two surfaces is 1.5 *µ*m. As a result of measuring using a porosimeter, the pore size and porosity of the manufactured separator are 0.4 *µ*m and 60%, respectively.

### (2) Preparation of current collector

### 1) Preparation of positive electrode current collector

A metal thin film (thickness 15*µ*m) for an aluminum current collector including an uncoated region at which segments of groups 1 and 2 will be formed is prepared as shown in the following table 1.

In the metal thin film, the length B1+B2+B3 along the winding direction from the core to the outer circumference is 4,000 mm, and the width along the winding axis direction is 75 mm. The metal thin film is divided into a core-side uncoated region B1, an outer circumferential uncoated region B3 and an intermediate uncoated region B2 between the core side and the outer side. The length of the B1 is 350 mm, the length of the B2 is 3500 mm and the length of the B3 is 150 mm.

A predetermined width in the inward direction from the second side in the widthwise direction of the metal thin film is a positive electrode active material region and the remain part is a first part corresponding to the uncoated region, and the core-side uncoated region and the outer circumferential uncoated region has a smaller height in the winding axis direction than the intermediate uncoated region.

### 2) Preparation of negative electrode current collector

A negative electrode current collector is prepared in the same way as the positive electrode current collector except that a copper thin film (thickness 10*µ*m) is used as the current collector and the width along the winding axis direction is 80 mm.

**[Table 1]**

| | | Example 1 | Example 2 | Comparative example 1 |
|---|---|---|---|---|
| Total length of current collector (mm) (Length from core to outer circumference) | | 4000 mm | 4000 mm | 4000 mm |
| Total width of current collector (mm) | Negative electrode | 80 mm | 80 mm | 80 mm |
| | Positive electrode | 75 mm | 75 mm | 75 mm |
| Length of B1 (mm) | | 350 mm | 350 mm | 350 mm |
| Length of B2 (mm) | | 3500 mm | 3500 mm | 3500 mm |
| Length of each group (mm)(Groups 1 to 7) | | 500 mm | 500 mm | 500 mm |
| Height (C2) of B2 segment (mm) | Group 1 | 5 mm | 5 mm | 5 mm |
| | Groups 2 to 7 | 6 mm | 6 mm | 6 mm |
| Length of B3 (mm) | | 150 mm | 150 mm | 150 mm |
| Width (C1) of B2 segment | | 5 mm | 5 mm | 5 mm |
| Distance between segments (Pitch, C3) | | 0.5 mm | 0.5 mm | 0.5 mm |

### (3) Manufacture of negative electrode

Natural graphite, carbon black, carboxylmethylcellulose (CMC) and styrene butadiene rubber (SBR) having the average particle size D₅₀ of 11 ,um are mixed with water at a weight ratio of 94:1.5:2:2.5 to prepare a slurry for a negative electrode active material layer in which the remaining components except the water have a concentration of 50 wt%. Subsequently, the slurry is coated on a negative electrode active material region on the surface of the prepared copper current collector at the rate of 40 m/min using a slot die. On the basis of the winding axis direction, the width of the negative electrode active material region is 70 mm, and the width of the uncoated region is 10 mm. The loading amount of the negative electrode active material is 16 mg/cm² on the basis of the electrode area. The copper thin film coated with the slurry for the negative electrode active material layer is dried while passing through a hot air oven having the length of 60 m, and in this instance, the temperature of the oven is adjusted to maintain 130°C. Subsequently, roll pressing is performed to a target thickness of 180 *µ*m to obtain a negative electrode having the density of 3.45g/cc.

Subsequently, the intermediate uncoated region is split according to the requirements in the table 1 by notching using a laser to form a plurality of segments. In this instance, the lower end of the notch crest of each segment is adjusted to have substantially the same height.

### (4) Manufacture of positive electrode

Li(Ni_{0.6}Mn_{0.2}Co_{0.2})O₂(NCM-622) as a positive electrode active material, carbon black as a conductive material and polyvinylidene fluoride (PVdF) as a binder are added to water as a dispersion medium at a weight ratio of 96:2:2 to prepare a slurry for a positive electrode active material layer. The slurry is coated on the surface of the prepared aluminum current collector, and dried and rolled under the same condition as the negative electrode to manufacture a positive electrode. In the positive electrode, the width of the positive electrode active material region is 65 mm, and the width of the uncoated region is 10 mm, on the basis of the winding axis direction.

In this instance, the positive electrode active material layer is adjusted to the NP ratio of 1.18 (118%, about 27.7 cm²) of the battery considering the theoretical discharge capacity of the NMC 622.

Subsequently, the intermediate uncoated region is split according to the requirements in the table 1 by notching using a laser to form a plurality of segments. In this instance, the lower end of the notch crest of each segment is adjusted to have substantially the same height.

### (5) Preparation of electrode assembly

The negative electrode/the separator/the positive electrode as prepared are stacked in that order and wound to manufacture a jelly-roll type electrode assembly. The end of the separator in the widthwise direction is disposed in the outward direction of the electrode assembly 30% (1.5 mm) of the height of the smallest bent segment (group 1) on the basis of the baseline.

### (6) Manufacture of cylindrical battery cell (battery) (4680 type)

The segments of groups 1 to 7 exposed at the upper and lower parts of the electrode assembly are bent toward the core, and the positive electrode current collector and the negative electrode current collector are welded to the upper bend surface and the lower bend surface, respectively. Subsequently, a cylindrical cell having the structure shown in FIG. 28 is manufactured. That is, the electrode assembly including the positive electrode current collector plate and the negative electrode current collector plate is inserted into a battery housing in which an external terminal is pre-installed, the positive electrode current collector plate and the external terminal are welded, and the edge of the negative electrode current collector plate is welded to the beading portion. Subsequently, the battery housing is put in a chamber equipped with an electrolyte solution injection device, and is placed upright such that the open portion of the battery housing faces the opposite direction of the gravity. Subsequently, 1.0M LiPF₆ is dissolved in an organic solvent in which ethylene carbonate (EC), dimethylcarbonate (DMC) and diethyl carbonate (DEC) are mixed at 1:2:1 (a volume ratio) to prepare a non-aqueous electrolyte solution. Subsequently, the electrolyte solution is injected through the open portion of the battery housing, followed by increasing the pressure of the chamber to 800 kPa for 20 sec, maintaining for 150 sec, reducing to -90 kPa for 20 sec and keeping in a substantial vacuum state again for 20 sec. After the electrolyte solution infiltration process is completed, the open portion of the battery housing is sealed up by a sealing body using a gasket to complete the manufacture of a cylindrical cell.

### Comparative example 1

### (1) Manufacture of separator

About 5 weight% of a polyvinylidenefluoride-hexafluoropropylene (PVdF-HFP) copolymer is added to tetrahydrofuran (THF) and dissolved at the temperature of 50°C for about 12 hours or more to prepare a polymer solution. BaTiO₃ powder having the particle size of about 400 nm is added to the polymer solution such that the total solids is 20 weight% and dispersed to prepare a mixed solution (BaTiO₃/ PVdF-HFP = 80:20 (a weight ratio)). The prepared mixed solution is coated on two surfaces of a porous polymer substrate made of polypropylene using a doctor blade method. After the coating, the THF is dried to form a porous coating layer on the two surfaces of the porous polymer substrate, to manufacture a separator.

In this instance, the thickness of the porous polymer substrate is 10 *µ*m, and the thickness of the porous coating layer on each of the two surfaces is 1.5 *µ*m. As a result of measuring using a porosimeter, the pore size and porosity of the manufactured separator are 0.4 *µ*m and 60%, respectively.

Each of a current collector, a positive electrode, a negative electrode and a cylindrical battery cell is manufactured by the same method as the method set forth in example 1, except that the separator manufactured in comparative example 1 is used.

### Evaluation of separator and cylindrical battery cell

### (1) Evaluation of compression characteristics of separator

The compression characteristics of the separators manufactured in example 1 and comparative example 1 are evaluated by the following method.

4 sheets of paper A4 in 70 mm x 100 mm size, 2 sheets of Haze PET in 50mm x 50mm size and 1 sheet of Haze PET are prepared, and the separator is punched into 3 or more in 50mm x 50mm size using a punching machine.

The thickness of the punched separator before compression is measured. After stacking 3 sheets, 3 x 3 points in an inner area 10 cm away from the edge are measured. The prepared separator substrate, the PET film and the paper A4 are stacked in that order. 2 sheets of paper A4, 1 sheet of haze PET film, 1 sheet of separator substrate, 2 sheets of haze PET film and 2 sheets of paper A4 are stacked in a sequential order from the top.

2000 kgf (7.8MPa), 70°C, 10 sec conditions are set using a hot press, and the stacked sample is hot pressed using the hot press. The thickness of the compressed separator is measured in the same way as the thickness before compression and a thickness change is determined.

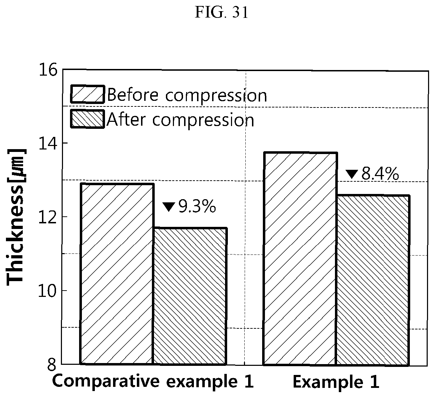

The compression characteristics evaluation results of the separators manufactured in example 1 and comparative example 1 are shown in FIG. 31.

Referring to FIG. 31, it can be seen that the separator of example 1 having the insulating coating layer at two ends of the porous coating layer has about 1% improvement in compression ratio, compared to the separator of comparative example 1 without the insulating coating layer. Presumably, it is due to a supporting force by the insulation coating layer coated at two ends of the separator during the compression of the separator.

### (2) Evaluation of resistance characteristics of cylindrical battery cell

The resistance characteristics as a function of SOC in the cylindrical battery cells manufactured in example 1 and comparative example 1 are evaluated by the following method.

The charge current and the discharge current are applied for 10 sec in an alternating manner, a slope is calculated as using the ohm's law after considering the voltage drop/rise by each current, and it is defined as direct current internal resistance (DCIR) i.e., internal resistance.

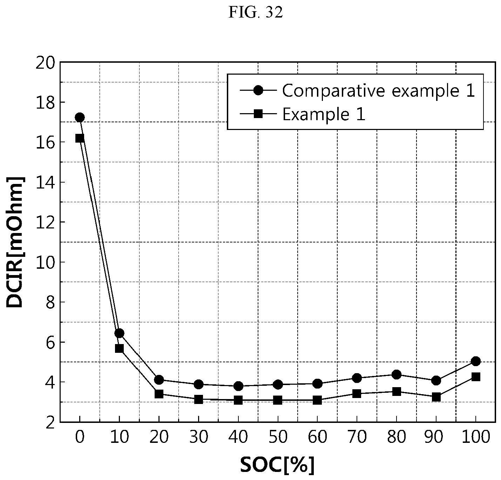

The resistance characteristics results of the cylindrical battery cells manufactured in example 1 and comparative example 1 are shown in FIG. 32.

Referring to FIG. 32, it can be seen that the cylindrical battery cell including the separator of example 1 having the insulating coating layer at two ends of the porous coating layer shows a lower resistance value than the cylindrical battery cell including the separator of comparative example 1 without the insulating coating layer. Presumably, this is due to smooth movement of lithium ions when the current is applied through the improved electrolyte solution infiltration.

### (3) Evaluation of electrolyte solution infiltration volume (wettability)

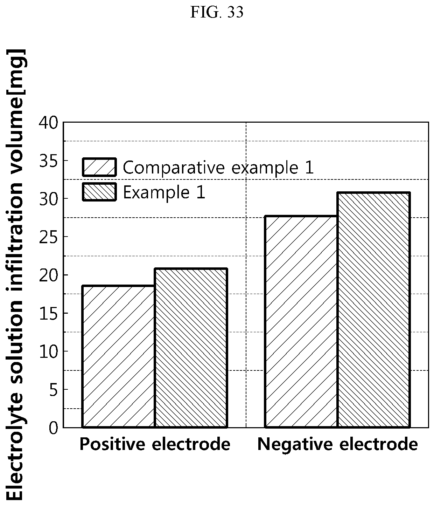

The electrolyte solution infiltration volume (wettability) of the cylindrical battery cells manufactured in example 1 and comparative example 1 is evaluated by the following method, and the results are shown in FIG. 33.

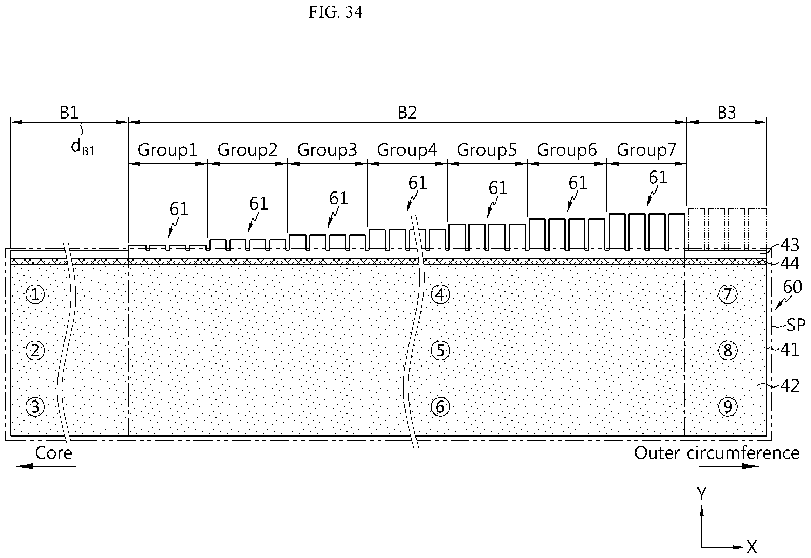

The cylindrical battery cells manufactured in example 1 and comparative example 1 are disassembled to obtain positive and negative electrodes of each cylindrical battery cell. Subsequently, the negative and positive electrodes are cut at a total of 9 points to obtain samples of 10 cm² size. When the electrodes are unfolded, the 9 samples include 3 (#1 to #3) samples taken from an area adjacent to the core of the electrode assembly, 3 (#7 to #9) samples taken from an area adjacent to the outer circumference of the electrode assembly, and 3 (#4 to #6) samples taken from the central area of the electrode on the basis of the winding direction. In taking 3 samples from each area where the samples are taken, each one sample is taken from the bottom, center and top of the active material layer along the winding axis direction. Meanwhile, #1, #4 and #7 indicate the samples near one end of the electrode in the widthwise direction, #3, #6 and #9 indicate the samples near the other end of the electrode in the widthwise direction, and #2, #5 and #8 indicate the intermediate samples. FIG. 34 shows the areas where the samples are taken. In this instance, FIG. 34 shows the areas where the samples are taken based on FIG. 10, and for the shape or numerical value other than the areas where the samples are taken, reference is made to the above table 1.

The electrolyte solution wettability is determined from a difference in weight between the control sample and the target sample. The control sample is manufactured in the same way as the electrodes used in example 1 and comparative example 1, and obtained from the same location in the positive electrode and the negative electrode not impregnated with the electrolyte solution.

The average electrolyte solution infiltration volume of sections #1 to #9 of the positive electrode in the electrode assembly of example 1 is 21.3 mg, and the average electrolyte solution infiltration volume of sections #1 to #9 of the positive electrode in the electrode assembly of comparative example 1 is 18.3 mg. Additionally, the average electrolyte solution infiltration volume of sections #1 to #9 of the negative electrode in the electrode assembly of example 1 is 31.3 mg, and the average electrolyte solution infiltration volume of sections #1 to #9 of the negative electrode in the electrode assembly of comparative example 1 is 27.7 mg. It is confirmed that the electrolyte solution infiltration volume of example 1 is higher than comparative example 1. Presumably, due to comprising the porous coating layer on two surfaces of the porous polymer substrate of the separator and further comprising the insulation coating layer, the area for absorption of the electrolyte solution increases, and when injecting the electrolyte solution into the cylindrical battery cell, the injection is performed downward, so absorption first occurs in the insulation coating layer, thereby improving the wettability and infiltration volume.

### (4) Evaluation of voltage and temperature characteristics of cylindrical battery cell

The voltage and temperature characteristics as a function of SOC in the cylindrical battery cells including the separators of example 1 and comparative example 1 are evaluated by the following method.

When discharging is performed at different current rates (C-rate), heat is generated from the cell, and the heat generation characteristics may be determined by comparing the temperature of the generated heat.

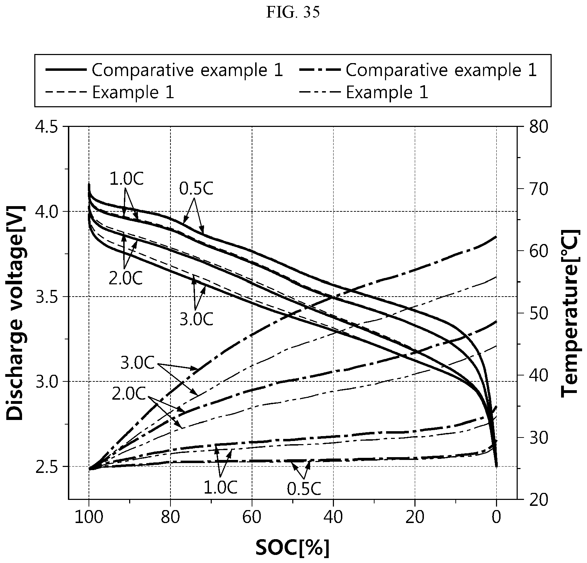

The evaluation results of voltage and temperature characteristics as a function of SOC in the cylindrical battery cells including the separators of example 1 and comparative example 1 are shown in FIG. 35.

Referring to FIG. 35, when the same current rate is applied, the separator of the present disclosure shows lower heat generation characteristics during discharging at each current rate of 0.5C, 1.0C, 2.0C, 3.0C, and it is thought to be due to the low internal resistance (DC-IR) and the improved wettability.

## Claims

1. A separator, comprising:
a porous polymer substrate; and
a porous coating layer on at least one surface of the porous polymer substrate, the porous coating layer comprising a binder polymer and inorganic particles,
wherein the separator comprises an insulation coating layer at each of two ends in a Transverse Direction (TD) on an outermost side, and
wherein the insulation coating layer comprises fillers for the insulation coating layer and a binder for the insulation coating layer to have a porous structure.

2. The separator according to claim 1, wherein a width of one insulation coating layer is 0.1 to 10% of a total length of the separator in a widthwise direction.

3. The separator according to claim 1, wherein an average particle size of the fillers for the insulation coating layer is 10 to 90% of an average particle size of the inorganic particles.

4. The separator according to claim 1, wherein a vertical cross-sectional shape of the insulation coating layer has a rectangular, trapezoidal, triangular, parallelogram, semi-circular or semi-oval structure.

5. A jelly-roll type electrode assembly having a structure in which a first electrode plate and a second electrode plate, each having a sheet shape, are wound in a direction with a separator interposed between the first electrode plate and the second electrode plate,
wherein the separator is defined in any one of claims 1 to 4.

6. A cylindrical battery cell, comprising:
a jelly-roll type electrode assembly having a structure in which a positive electrode plate and a negative electrode plate are wound in a direction with a separator interposed between the positive electrode plate and the negative electrode plate;
a battery can in which the electrode assembly is received; and
a sealing body configured to seal up an open end of the battery can,
wherein the separator is defined in any one of claims 1 to 4.

7. The cylindrical battery cell according to claim 6, wherein the cylindrical battery cell has a form factor ratio of 0.4 or more.

8. The cylindrical battery cell according to claim 7, wherein the cylindrical battery cell is a 46110 cell, a 48750 cell, a 48110 cell, a 48800 cell or a 46800 cell.

9. The cylindrical battery cell according to claim 6, wherein the cylindrical battery cell is a battery of tab-less structure without an electrode tab.

10. The cylindrical battery cell according to claim 6, wherein each of the positive electrode plate and the negative electrode plate includes an uncoated region without an active material layer,
wherein a positive electrode plate uncoated region and a negative electrode plate uncoated region are disposed at upper and lower ends of the electrode assembly, respectively,
wherein a current collector plate is coupled to the positive electrode plate uncoated region and the negative electrode plate uncoated region, and
wherein the current collector plate is connected to an electrode terminal.

11. A jelly-roll type electrode assembly having a structure in which a first electrode plate and a second electrode plate, each having a sheet shape, are wound in a direction with a separator interposed between the first electrode plate and the second electrode plate, wherein at least one of the first electrode plate or the second electrode plate includes an uncoated region in which an active material layer is not coated at a long side end,
wherein at least part of the uncoated region itself is used as an electrode tab,
wherein the uncoated region includes a core-side uncoated region adjacent to a core of the electrode assembly, an outer circumferential uncoated region adjacent to an outer circumference surface of the electrode assembly, and an intermediate uncoated region interposed between the core-side uncoated region and the outer circumferential uncoated region,
wherein at least one of the core-side uncoated region or the outer circumferential uncoated region has a smaller height in a winding axis direction than the intermediate uncoated region,
wherein at least part of the intermediate uncoated region is split into a plurality of segments, and
wherein the separator is defined in any one of claims 1 to 4.

12. The electrode assembly according to claim 11, wherein at least part of the intermediate uncoated region has a stepwise increase in height in the winding axis direction as it goes from the core to the outer circumference.

13. The electrode assembly according to claim 11, wherein each of the plurality of segments has a rectangular, trapezoidal, triangular, parallelogram, semi-circular or semi-oval structure.

14. The electrode assembly according to claim 11, wherein each of the plurality of segments is trapezoidal, and
wherein the plurality of segments has an increase in a lower inner angle of the trapezoid as it goes from the core to the outer circumference by individual or group.

15. The electrode assembly according to claim 11, wherein the plurality of segments has a stepwise increase in at least one of a height in the winding axis direction or a width in a winding direction by individual or group as it goes from the core to the outer circumference.

16. The electrode assembly according to claim 11, wherein each of the plurality of segments meets at least one of a width requirement of 1 to 6 mm in a winding direction; a height requirement of 2 to 10 mm in the winding axis direction; and a pitch requirement of 0.05 to 1 mm in the winding direction.

17. The electrode assembly according to claim 11, wherein a predetermined gap is present between a lower end of a cutting line of the segment and the active material layer.

18. The electrode assembly according to claim 17, wherein the gap is 0.2 mm to 4 mm.

19. The electrode assembly according to claim 11, wherein the plurality of segments forms a plurality of segment groups as it goes from the core to the outer circumference, and the segments in a same segment group are equal in at least one of a width in a winding direction, a height in the winding axis direction or a pitch in the winding direction.

20. The electrode assembly according to claim 11, wherein when a width in a winding direction for each of 3 segment groups successively adjacent to one another in a radial direction of the electrode assembly is W1, W2 and W3, the electrode assembly includes a combination of segment groups having a smaller W3/W2 than W2/W1.

21. The electrode assembly according to claim 19, wherein the segments in the same segment group have a stepwise increase in at least one of the width in the winding direction, the height in the winding axis direction or the pitch in the winding direction as it goes from the core to the outer circumference.

22. The electrode assembly according to claim 19, wherein at least some of the plurality of segment groups are arranged in a same winding turn of the electrode assembly.

23. The electrode assembly according to claim 11, wherein the core-side uncoated region has no segment structure of the uncoated region.

24. The electrode assembly according to claim 11, wherein the outer circumferential uncoated region has no segment structure of the uncoated region.

25. The electrode assembly according to claim 11, wherein as the plurality of segments bends toward the core, the segments overlap in multilayer.

26. The electrode assembly according to claim 25, wherein a cavity is present in the core of the electrode assembly, and
wherein the cavity is not blocked by the plurality of segments bent toward the core.

27. The electrode assembly according to claim 26, wherein a radial length (R) of the core-side uncoated region and a bend length (H) of an innermost segment of the intermediate uncoated region satisfy a relationship equation H≤R.

28. The electrode assembly according to claim 11, wherein the outer circumferential uncoated region has a stepwise or gradual decrease in height as it goes from the core to the outer circumference.

29. The electrode assembly according to claim 11, wherein the outer circumferential uncoated region is split into a plurality of segments, and
wherein the plurality of segments included in the outer circumferential uncoated region is larger than the plurality of segments included in the intermediate uncoated region in at least one of a width in a winding direction, a height in the winding axis direction or a pitch in the winding direction.

30. A cylindrical battery cell, comprising:
a jelly-roll type electrode assembly having a structure in which a first electrode plate and a second electrode plate, each having a sheet shape, are wound in a direction with a separator interposed between the first electrode plate and the second electrode plate;
a battery can in which the electrode assembly is received, wherein the battery can is electrically connected to any one of the first electrode plate and the second electrode plate and has a first polarity;
a sealing body configured to seal up an open end of the battery can; and
a terminal electrically connected to the other one of the first electrode plate and the second electrode plate, and having an exposed surface and a second polarity,
wherein at least one of the first electrode plate or the second electrode plate includes an uncoated region in which an active material layer is not coated at a long side end,
wherein at least part of the uncoated region itself is used as an electrode tab,
wherein the uncoated region includes a core-side uncoated region adjacent to a core of the electrode assembly, an outer circumferential uncoated region adjacent to an outer circumference surface of the electrode assembly, and an intermediate uncoated region interposed between the core-side uncoated region and the outer circumferential uncoated region,
wherein at least one of the core-side uncoated region or the outer circumferential uncoated region has a smaller height in a winding axis direction than the intermediate uncoated region,
wherein at least part of the intermediate uncoated region is split into a plurality of segments, and
wherein the separator is defined in any one of claims 1 to 4.

31. The cylindrical battery cell according to claim 30, wherein the outer circumferential uncoated region has a smaller height in the winding axis direction than the intermediate uncoated region,
wherein the battery can includes a beading portion bent inward at an end adjacent to the open end, and
wherein an inner circumferential surface of the beading portion and the outer circumferential uncoated region opposite a top edge of the electrode assembly are spaced a predetermined distance apart from each other.

32. The cylindrical battery cell according to claim 31, wherein a beading depth (D1) of the beading portion and a distance (D2) from an inner circumferential surface of the battery can to a boundary between the outer circumferential uncoated region and the intermediate uncoated region satisfy a relationship equation D1≤D2.

33. The cylindrical battery cell according to claim 31, further comprising:
a current collector plate electrically coupled to the intermediate uncoated region; and
an insulator configured to cover the current collector plate, and having an edge fixed between the inner circumferential surface of the beading portion and the current collector plate.

34. The cylindrical battery cell according to claim 33, wherein a diameter of the current collector plate and an outermost side diameter of the intermediate uncoated region are smaller than a minimum inner diameter of the inner circumferential surface of the beading portion, and the diameter of the current collector plate is equal to or larger than the outermost side diameter of the intermediate uncoated region.

35. The cylindrical battery cell according to claim 33, wherein the current collector plate is disposed higher than the beading portion.

36. The cylindrical battery cell according to claim 30, wherein at least part of the intermediate uncoated region is bent from the outer circumference toward the core,
wherein a cavity is present in the core of the electrode assembly, and
wherein the cavity is not blocked by a segment structure of the intermediate uncoated region.

37. The cylindrical battery cell according to claim 36, wherein the plurality of segments of the intermediate uncoated region are split along a winding direction of the electrode assembly,
wherein the plurality of segments is bent from the outer circumference toward the core, and
wherein a radial length (R) of the core-side uncoated region and a bend length (H) of an innermost segment of the intermediate uncoated region satisfy a relationship equation H≤R.

38. The cylindrical battery cell according to claim 37, wherein each of the plurality of segments has a rectangular, trapezoidal, triangular, parallelogram, semi-circular or semi-oval structure.

39. The cylindrical battery cell according to claim 37, wherein each of the plurality of segments meets at least one of a width requirement of 1 to 6 mm in the winding direction; a height requirement of 2 to 10 mm in the winding axis direction; or a pitch requirement of 0.05 to 1 mm in the winding direction.

40. The cylindrical battery cell according to claim 30, wherein a gap is present between a lower end of a cutting line of the segment and the active material layer.

41. The cylindrical battery cell according to claim 40, wherein the gap is 0.2 mm to 4 mm.

42. The cylindrical battery cell according to claim 37, wherein the plurality of segments forms a plurality of groups,
wherein the segments in each group are equal in at least one of a width in the winding direction, a height in the winding axis direction or a pitch in the winding direction, and
wherein at least one of the plurality of groups forms a same winding turn of the electrode assembly.

43. The cylindrical battery cell according to claim 37, wherein the plurality of segments forms a plurality of groups, and
wherein when a width in the winding direction for each of 3 segment groups consecutively adjacent to each other in a radial direction of the electrode assembly is W1, W2 and W3, the cylindrical battery cell includes a combination of segment groups having a smaller W3/W2 than W2/W1.

44. The cylindrical battery cell according to claim 30, wherein the sealing body includes a cap plate configured to seal up the open end of the battery can, and a gasket configured to cover an edge of the cap plate and clamped on top of the battery can, and
wherein the terminal having the second polarity is the cap plate.

45. The cylindrical battery cell according to claim 30, further comprising:
a current collector plate electrically connected to the uncoated region of the second electrode plate having the first polarity, wherein at least part of an edge of the current collector plate is coupled to a sidewall of the battery can,
wherein the sealing body includes a cap plate having no polarity, and a gasket surrounding an edge of the cap plate and clamped to top of the battery can, and
wherein the battery can includes a rivet terminal which is insulatably installed in a through-hole at a center of a closed surface, electrically connected to the first electrode plate and has the second polarity.

46. A battery pack comprising at least one battery cell according to any one of claims 30 to 45.

47. A vehicle comprising at least one battery pack according to claim 46.
